# EUROPEAN PATENT SPECIFICATION

(11) **EP 4 524 796 B1**
(45) Date of publication and mention of the grant of the patent: **02.12.2026**
(21) Application number: 23854272.4
(22) Date of filing: 07.08.2023
(51) Int. Cl.: G06F 21/60, G06F 3/14, G06F 3/16, G06F 3/0481, G06F 3/0482, G06F 3/0484, G06F 3/04817, G06F 3/04847, G06F 3/04883, G06F 3/04886, G06F 9/451, G06F 21/62, H04M 1/72454

(54) **SENSITIVE APPLICATION BEHAVIOR REMINDING METHOD, RELATED APPARATUS, AND COMMUNICATION SYSTEM**
VERFAHREN ZUR ERINNERUNG AN VERHALTENS EINER EMPFINDLICHEN ANWENDUNG, ZUGEHÖRIGE VORRICHTUNG UND KOMMUNIKATIONSSYSTEM
PROCÉDÉ DE RAPPEL DE COMPORTEMENT D'APPLICATION SENSIBLE, APPAREIL ASSOCIÉ ET SYSTÈME DE COMMUNICATION

(30) Priority: 15.08.2022 CN 202210976168
(43) Date of publication of application: 19.03.2025
(73) Proprietor: Huawei Technologies Co., Ltd., Shenzhen, Guangdong 518129 (CN)
(72) Inventor: SONG, Tao, Shenzhen, Guangdong 518129 (CN)
(74) Representative: Goddar, Heinz J.
(86) International application number: PCT/CN2023/111456
(87) International publication number: WO 2024/037369

(56) References cited:
- CN-A- 106 534 102
- CN-A- 106 534 102
- CN-A- 106 650 471
- CN-A- 107 784 221
- CN-A- 109 388 620
- CN-A- 111 726 328
- CN-A- 113 505 365
- CN-A- 113 987 505
- CN-A- 114 489 419
- CN-A- 114 489 419
- CN-A- 114 692 094
- US-A1- 2017 118 611

## Description

### RELATED APPARATUS, AND COMMUNICATION SYSTEM

This application claims priority to Chinese Patent Application No. 202210976168.0, filed with the China National Intellectual Property Administration on August 15, 2022 and entitled "APPLICATION SENSITIVE BEHAVIOR REMINDER METHOD, RELATED APPARATUS, AND COMMUNICATION SYSTEM".

### TECHNICAL FIELD

This application relates to the field of terminal technologies, and in particular, to an application sensitive behavior reminder method, a related apparatus, and a communication system.

### BACKGROUND

As electronic devices develop, more applications (applications, APPs) can be installed on the electronic devices. The App may access one or more pieces of device permission (such as camera permission, microphone permission, location permission, contact permission, and media and file permission) of the electronic device, to obtain corresponding information. The information (such as an image, audio, a location, and a contact) obtained by the application by accessing the device permission may be user's privacy information. Behavior of accessing the device permission is sensitive behavior.

Therefore, the electronic device needs to monitor the sensitive behavior, and provides a sensitive behavior reminder for a user, so that the user leans of specific accessed device permission of the electronic device and specific user information obtained by a specific application, and the user can manage, based on the sensitive behavior of the application, the device permission that can be accessed by the application. This prevents the application from abusing the device permission, and protects user's privacy information.

CN 106534102 A discloses: The disclosure discloses a device access method and device and an electronic device, wherein the method comprises the steps of receiving the request information of a first terminal device used for accessing a second terminal device, wherein the request information carries a first device identifier of the first terminal device; according to a first device identifier of the second terminal device, searching an authorized identifier list corresponding to the second terminal device, wherein the authorized identifier list contains one or more authorized identifiers, and the terminal device corresponding to the authorized identifier list is authorized the authority to access the storage space of the second terminal device; if the first device identifier is in the authorized identifier list, and the second terminal device is in a turn-on state, allowing the first terminal device to access the second terminal device, so that, during the above process, the first terminal device can access the storage space of the second terminal device without the helps of other storage devices, and the usage experiences of the users are improved.

CN 114489419 A discloses an authority control method and electronic equipment, and the method comprises the steps that the electronic equipment subscribes to an access behavior of a target equipment file so as to detect whether an application accessing the target equipment file is an application which is not operated in a foreground or not; and if it is detected that the non-foreground running application accesses the target equipment file, the electronic equipment can automatically display a prompt icon on a display screen to remind a user that the non-foreground running application currently accesses the target equipment file. And the user can perform corresponding operation on the permission control box corresponding to the prompt icon, so that the electronic equipment refuses the target application to access the target equipment file. And the target application cannot obtain the information from the target equipment file, so that the security of the user data is improved, and the user experience is improved.

US 2017/118611 A1 discloses: Systems, methods, and software can be used to monitor resource access. In some aspect, an electronic device determines that an application attempts to access a resource on the electronic device. The electronic device determines whether the application is operating in a foreground of an operating system (OS) on the electronic device or in a background of the OS on the electronic device. If the application is operating in the foreground, the application is permitted to access the resource. If the application is operating in the background, a notification is generated to indicate that a background application attempts to access a resource.

### SUMMARY

The scope of protection is defined by the appended claims. This application provides an application sensitive behavior reminder method, a related apparatus, and a communication system. According to the method, a sensitive behavior prompt indicating that device permission is accessed may be displayed in a status bar and/or a control center interface of an electronic device, to remind a user of sensitive behavior of an application on the device and cross-device sensitive behavior. In addition, the user may further manage the device permission based on the sensitive behavior prompt displayed in the control center interface. According to the foregoing method, it can be convenient for the user to know and control the sensitive behavior of the application on the device and the cross-device sensitive behavior.

According to a first aspect, this application provides an application sensitive behavior reminder method. A first electronic device may receive a first request from a second electronic device, where the first request is used to request to access first device permission of the first electronic device. In response to the first request, the first electronic device may allow the second electronic device to access the first device permission, and display a first icon in a status bar, where the first icon may indicate that the first device permission is accessed. The first electronic device receives a first operation. The first electronic device may display a first interface in response to the first operation, where the first interface includes a first prompt, and the first prompt includes the first icon. The first electronic device receives a fourth operation. The first electronic device displays a second control in response to the fourth operation, where the second control is used to manage access of the second electronic device to the device permission of the first electronic device. Alternatively, the first electronic device displays (a) a third control in response to the fourth operation, where the third control is used to manage access of different applications on the second electronic device to the device permission of the first electronic device, or (b) multiple third controls in response to the fourth operation, wherein the multiple third controls are used to manage access of different applications on the second electronic device to the device permission of the first electronic device.

The user may manage cross-device sensitive behavior in the first electronic device, and allow or forbid another electronic device (for example, the second electronic device) to access the device permission of the first electronic device. Alternatively, the user may separately perform permission management on each application on an electronic device connected to the first electronic device, so as to adjust that each application on the electronic device can access the device permission of the first electronic device. In other words, the user can authorize, based on a requirement and a privacy security consideration, different applications on an electronic device to access different device permission of the first electronic device. This can better meet a use requirement of the user, and improve security of user privacy information.

With reference to the first aspect, in some embodiments, when detecting that an application on the first electronic device accesses device permission of the first electronic device, the first electronic device may also display, in the status bar, an accessed device permission icon. In addition, in the first interface, in addition to the first icon, the first prompt may also include the accessed device permission icon.

It can be learned from the foregoing method that, when detecting that the device permission is accessed, the first electronic device may display the device permission icon in the status bar and/or a control center interface. A visitor of the device permission may include the application on the first electronic device and a device other than the first electronic device, for example, a second electronic device. According to the foregoing method, it can be convenient for a user to intuitively learn of sensitive behavior in the first electronic device based on the status bar or by invoking the first interface, and the user can know and control the sensitive behavior of the application on the device and cross-device sensitive behavior.

With reference to the first aspect, in some embodiments, the first electronic device receives a second operation on the first prompt. The first electronic device may display a first permission list in response to the second operation, where the first permission list includes first information, and the first information indicates that the first device permission is accessed by the second electronic device. The second operation may be, for example, a tap operation or a touch operation on the first prompt.

It can be learned from the foregoing embodiment that after displaying the first interface in response to the first operation, the first electronic device may display the first prompt in the first interface. The first prompt may include the accessed device permission icon, so as to inform the user that one or more pieces of device permission of the first electronic device are accessed. The first electronic device displays the first permission list in response to the operation on the first prompt. The first permission list may include detailed information about that the device permission of the first electronic device is accessed, for example, an identifier of the visitor who accesses the device permission.

With reference to the first aspect, in some embodiments, the first electronic device receives a third operation on the first information. The first electronic device may display a first control in response to the third operation, where the first control is used to manage access of the second electronic device to the first device permission. The first control may be used to adjust a condition for the second electronic device to access the first device permission. For example, the second electronic device can always access the first device permission, or the first electronic device needs to query the user each time the second electronic device accesses the first device permission. Optionally, the first control may be used to forbid the second electronic device to access the first device permission. The third operation may be, for example, a tap operation or a touch operation on the first information.

It can be learned from the foregoing embodiment that the user can quickly manage the visitor of the device permission based on a sensitive behavior prompt (for example, a first prompt) displayed in the first interface of the first electronic device. This reduces abuse of the device permission and improves security of user privacy information.

With reference to the first aspect, in some embodiments, after the first electronic device receives a first operation, the first electronic device may further query an access record of accessing device permission of the first electronic device in a first time period, to obtain a first access record, where the first time period is a time period that is before the first operation is received, and the first access record includes first access data that the second electronic device accesses the first device permission. The first electronic device may display the first interface based on the first access record, where the first interface includes the first prompt, and the first icon included in the first prompt is determined based on the first access data.

It can be learned from the foregoing embodiment that, after receiving the first operation of invoking the first interface, the first electronic device may obtain a sensitive behavior record in which the device permission of the first electronic device is accessed in a recent time period (namely, the first time period). Then, the first electronic device may display, in the first interface, the sensitive behavior prompt indicating the device permission accessed in the recent time period. In this way, in addition to the device permission that is currently being accessed, the user can further quickly learn of sensitive behavior that occurs in the first electronic device in the recent time period.

With reference to the first aspect, in some embodiments, the first access record further includes access data of accessing K pieces of device permission of the first electronic device, and K is a positive integer. The first prompt in the first interface further includes K icons, and the K icons respectively indicate that the K pieces of device permission are accessed.

With reference to the first aspect, in some embodiments, the first icon and the K icons included in the first prompt are displayed in a folded manner based on a first priority sequence. The first priority sequence indicates a priority sequence of the device permission of the first electronic device, a higher priority of device permission in the first priority sequence indicates that an icon that indicates that the device permission is accessed is displayed at a higher level in the first interface, and an icon displayed on an upper layer partially blocks an icon displayed on a lower layer. The first prompt further includes an identifier of a visitor of device permission corresponding to an icon displayed at a highest level in the first prompt.

With reference to the first aspect, in some embodiments, the device permission of the first electronic device includes camera permission, microphone permission, location permission, contact permission, and media and file permission.

The device permission of the first electronic device may be classified into first-type device permission and second-type device permission. The first-type device permission may refer to device permission for which access duration of one-time access may be a continuous time period. For example, first-type device permission may include camera permission, microphone permission, location permission, and the like. The second-type device permission may refer to device permission with which access behavior of one access may be instantaneously completed. For example, second-type device permission may include contact permission, media and file permission, and the like.

When detecting that the first-type device permission is accessed, the first electronic device may display, in the status bar, a first-type device permission icon. The first device permission may be one piece of the first-type device permission. When the first electronic device receives the first operation, the second electronic device is still accessing the first device permission.

When receiving the first operation for invoking the first interface, the first electronic device may query an access record in which the first-type device permission is currently being accessed and the second-type device permission is accessed in the recent time period (for example, the first time period). Then, the first electronic device may display the first prompt in the first interface based on a query result.

In other words, the K icons included in the first prompt may include a first-type device permission icon, and may also include a second-type device permission icon.

With reference to the first aspect, in some embodiments, the first electronic device detects that the second electronic device ends accessing the first device permission. The first electronic device cancels displaying of the first icon in the status bar.

With reference to the first aspect, in some embodiments, before the first electronic device cancels displaying of the first icon in the status bar, the first electronic device determines whether first access duration in which the second electronic device accesses the first device permission exceeds first duration. When determining that the first access duration in which the second electronic device accesses the first device permission exceeds the first duration, the first electronic device may directly cancel displaying of the first icon in the status bar when the second electronic device ends accessing the first device permission.

With reference to the first aspect, in some embodiments, the first electronic device detects that the second electronic device ends accessing the first device permission. The first electronic device determines whether first access duration in which the second electronic device accesses the first device permission exceeds first duration. When determining that the first access duration does not exceed the first duration, the first electronic device determines first extended duration based on a difference between the first access duration and the first duration. The first electronic device continues to display the first icon in the status bar in a second time period, where the second time period is a time period in the first extended duration starting from a moment at which the second electronic device ends accessing the first device permission.

With reference to the first aspect, in some embodiments, the first electronic device detects, in the second time period, re-access of the first device permission. The first electronic device continues to display the first icon in the status bar in a time period of re-access of the first device permission. The first electronic device determines whether second access duration of re-access of the first device permission exceeds the first duration. When determining that the second access duration exceeds the first duration, the first electronic device cancels displaying of the first icon in the status bar at a moment at which re-access of the first device permission ends. Alternatively, when determining that the second access duration does not exceed the first duration, the first electronic device determines second extended duration based on a difference between the second access duration and the first duration; and the first electronic device continues to display the first icon in the status bar in a third time period, where the third time period is a time period in the second extended duration starting from a moment at which re-access of the first device permission ends.

It can be learned from the foregoing embodiment that, when access duration of the accessed device permission is excessively short, the first electronic device may prolong, after the permission visitor ends the access, display duration of the device permission icon, and still continuously display the device permission icon in the status bar for a period of time, so that the display duration of the device permission reaches the preset duration. The foregoing method can be used to avoid, when the device permission is frequently accessed, frequent blinking of the device permission icon displayed in the status bar, prevent the first electronic device from frequently refreshing the device permission icon displayed in the status bar, improve user's experience of viewing the status bar, and reduce power consumption of the first electronic device for refreshing the device permission icon.

With reference to the first aspect, in some embodiments, after the first electronic device receives a first operation, the first electronic device may further query, in the first time period, an access record of accessing device permission of another electronic device by the first electronic device in the first time period, to obtain a second access record, where the first time period is the time period that is before the first operation is received, and the second access record includes access data of accessing second device permission of a third electronic device by the first electronic device. The first interface further includes a second prompt, the second prompt is determined based on the second access record, and the second prompt indicates that the first electronic device accesses the second device permission of the third electronic device.

In a possible implementation, the first electronic device may find which applications on the first electronic device access device permission of another electronic device. For example, the second record may include access data of accessing second device permission of a third electronic device by a first application on the first electronic device. The second prompt may indicate that the first application on the first electronic device accesses the second device permission of the third electronic device.

The first electronic device may receive an operation on the second prompt, and display the fourth control based on the operation. The fourth control may be used to manage the first application on the first electronic device accessing the second device permission of the third electronic device.

It can be learned from the foregoing embodiment that the user may further perform an operation on the first electronic device, to separately perform permission management on each application on the first electronic device. This adjusts that each application on the first electronic device accessing device permission of another electronic device (for example, the third electronic device). In other words, the user can authorize, based on a requirement and a privacy security consideration, different applications on the first electronic device to access different device permission of the another electronic device. This can better meet a use requirement of the user, and improve security of user privacy information.

With reference to the first aspect, in some embodiments, the first operation is an operation of sliding downward from a top right side of a screen of the first electronic device, and the first interface is a control center interface of the first electronic device.

The foregoing operation of invoking the first interface is simple, and it can be convenient for the user to quickly invoke the first interface (namely, the control center interface) to view the sensitive behavior in the first electronic device in the recent time period.

According to a second aspect, this application provides a communication system. The communication system may include a first electronic device and a second electronic device. The second electronic device may be configured to send a first request to the first electronic device, where the first request is used to request to access first device permission of the first electronic device. The first electronic device may be configured to: allow, based on the first request, the second electronic device to access the first device permission, and display a first icon in a status bar, where the first icon may indicate that the first device permission is accessed. The first electronic device may be configured to: receive a first operation, and display a first interface based on the first operation, where the first interface includes a first prompt, and the first prompt includes the first icon.

That the first electronic device allows the second electronic device to access the first device permission may include that the first electronic device provides the second electronic device with a service corresponding to the first device permission. For example, if the first device permission is camera permission, the first electronic device may provide the second electronic device with a camera service. The first electronic device may capture an image by using a camera, and send the captured image to the second electronic device. The second electronic device may display the image from the first electronic device.

With reference to the second aspect, in some embodiments, the first electronic device may be configured to monitor whether an application on the first electronic device accesses device permission of the first electronic device. When detecting that the application on the first electronic device accesses the device permission of the first electronic device, the first electronic device may be configured to display, in the status bar, an accessed device permission icon. In addition, in the first interface, in addition to the first icon, the first prompt may also include the accessed device permission icon.

It can be learned from the foregoing method that, when detecting that the device permission is accessed, the first electronic device may display the device permission icon in the status bar and/or a control center interface. A visitor of the device permission may include the application on the first electronic device and a device other than the first electronic device, for example, a second electronic device. According to the foregoing method, it can be convenient for a user to intuitively learn of sensitive behavior in the first electronic device based on the status bar or by invoking the first interface, and the user can know and control the sensitive behavior of the application on the device and cross-device sensitive behavior.

With reference to the second aspect, in some embodiments, the first electronic device may be configured to: receive a second operation on the first prompt, and display a first permission list based on the second operation, where the first permission list includes first information, and the first information indicates that the first device permission is accessed by the second electronic device.

It can be learned from the foregoing embodiment that after displaying the first interface in response to the first operation, the first electronic device may display the first prompt in the first interface. The first prompt may include the accessed device permission icon, so as to inform the user that one or more pieces of device permission of the first electronic device are accessed. The first electronic device displays the first permission list in response to the operation on the first prompt. The first permission list may include detailed information about that the device permission of the first electronic device is accessed, for example, an identifier of the visitor who accesses the device permission.

With reference to the second aspect, in some embodiments, the first electronic device may be configured to: receive a third operation on the first information, and display a first control based on the third operation, where the first control is used to manage access of the second electronic device to the first device permission. The first control may be used to adjust a condition for the second electronic device to access the first device permission. For example, the second electronic device can always access the first device permission, or the first electronic device needs to query the user each time the second electronic device accesses the first device permission. Optionally, the first control may be used to forbid the second electronic device to access the first device permission.

It can be learned from the foregoing embodiment that the user can quickly manage the visitor of the device permission based on a sensitive behavior prompt (for example, a first prompt) displayed in the first interface of the first electronic device. This reduces abuse of the device permission and improves security of user privacy information.

With reference to the second aspect, in some embodiments, the first electronic device may be configured to: after receiving the first operation, query an access record of accessing the device permission of the first electronic device in a first time period, to obtain a first access record, where the first time period is a time period that is before the first operation is received, and the first access record includes first access data of accessing the first device permission by the second electronic device. The first electronic device may be configured to display the first interface based on the first access record, where the first interface includes the first prompt, and the first icon included in the first prompt is determined based on the first access data.

It can be learned from the foregoing embodiment that, after receiving the first operation of invoking the first interface, the first electronic device may obtain a sensitive behavior record in which the device permission of the first electronic device is accessed in a recent time period (namely, the first time period). Then, the first electronic device may display, in the first interface, the sensitive behavior prompt indicating the device permission accessed in the recent time period. In this way, in addition to the device permission that is currently being accessed, the user can further quickly learn of sensitive behavior that occurs in the first electronic device in the recent time period.

With reference to the second aspect, in some embodiments, the first access record further includes access data of accessing K pieces of device permission of the first electronic device, and K is a positive integer. The first prompt in the first interface further includes K icons, and the K icons respectively indicate that the K pieces of device permission are accessed.

With reference to the second aspect, in some embodiments, the first icon and the K icons included in the first prompt are displayed in a folded manner based on a first priority sequence. The first priority sequence indicates a priority sequence of the device permission of the first electronic device, a higher priority of device permission in the first priority sequence indicates that an icon that indicates that the device permission is accessed is displayed at a higher level in the first interface, and an icon displayed on an upper layer partially blocks an icon displayed on a lower layer. The first prompt further includes an identifier of a visitor of device permission corresponding to an icon displayed at a highest level in the first prompt.

With reference to the second aspect, in some embodiments, the device permission of the first electronic device includes camera permission, microphone permission, location permission, contact permission, and media and file permission.

With reference to the second aspect, in some embodiments, the first electronic device may be configured to: when detecting that the second electronic device ends accessing the first device permission, cancel displaying of the first icon in the status bar.

With reference to the second aspect, in some embodiments, the first electronic device may be configured to: before canceling displaying of the first icon in the status bar, determine whether first access duration in which the second electronic device accesses the first device permission exceeds first duration. When determining that the first access duration in which the second electronic device accesses the first device permission exceeds the first duration, the first electronic device may be configured to directly cancel displaying of the first icon in the status bar when the second electronic device ends accessing the first device permission.

With reference to the second aspect, in some embodiments, the first electronic device may be configured to: when detecting that the second electronic device ends accessing the first device permission, determine whether first access duration in which the second electronic device accesses the first device permission exceeds first duration. When determining that the first access duration does not exceed the first duration, the first electronic device may be configured to determine first extended duration based on a difference between the first access duration and the first duration. The first electronic device continues to display the first icon in the status bar in a second time period, where the second time period is a time period in the first extended duration starting from a moment at which the second electronic device ends accessing the first device permission.

With reference to the second aspect, in some embodiments, the first electronic device may be configured to: when detecting re-access of the first device permission in the second time period, continue to display the first icon in the status bar in a time period of re-access of the first device permission. The first electronic device may be configured to determine whether second access duration of re-access of the first device permission exceeds the first duration. When determining that the second access duration exceeds the first duration, the first electronic device may be configured to cancel displaying of the first icon in the status bar at a moment at which re-access of the first device permission ends. Alternatively, when determining that the second access duration does not exceed the first duration, the first electronic device determines second extended duration based on a difference between the second access duration and the first duration; and the first electronic device may be configured to continue to display the first icon in the status bar in a third time period, where the third time period is a time period in the second extended duration starting from a moment at which re-access of the first device permission ends.

It can be learned from the foregoing embodiment that, when access duration of the accessed device permission is excessively short, the first electronic device may prolong, after the permission visitor ends the access, display duration of the device permission icon, and still continuously display the device permission icon in the status bar for a period of time, so that the display duration of the device permission reaches the preset duration. The foregoing method can be used to avoid, when the device permission is frequently accessed, frequent blinking of the device permission icon displayed in the status bar, prevent the first electronic device from frequently refreshing the device permission icon displayed in the status bar, improve user's experience of viewing the status bar, and reduce power consumption of the first electronic device for refreshing the device permission icon.

With reference to the second aspect, in some embodiments, the first electronic device may be configured to: receive a fourth operation, and display a second control based on the fourth operation, where the second control is used to manage access of the second electronic device to the device permission of the first electronic device. Alternatively, the first electronic device may display a third control based on the fourth operation, where the third control is used to manage access of different applications on the second electronic device to the device permission of the first electronic device.

With reference to the second aspect, in some embodiments, the second electronic device may be configured to display a second icon in the status bar in a process of accessing the first device permission of the first electronic device, where the second icon may indicate that the first device permission is accessed. The second electronic device may be configured to: receive a fifth operation, and display a fifth interface based on the fifth operation, where the fifth interface may include a third prompt. The third prompt may include the second icon. The fifth operation may be, for example, a tap operation or a touch operation on the third prompt.

It can be learned from the foregoing embodiment that, when the second electronic device accesses device permission of another electronic device, the second electronic device may also display a sensitive behavior prompt in the status bar or the fifth interface (for example, a control center interface), so as to inform the user of sensitive behavior that the second electronic device accesses the device permission of the another electronic device.

With reference to the second aspect, in some embodiments, the second electronic device may be configured to: receive a sixth operation on the third prompt, and display a second permission list based on the sixth operation, where the second permission list may include second information. The second information may indicate that the second electronic device accesses the first device permission in the first electronic device. The sixth operation may be, for example, a tap operation or a touch operation on the third prompt.

That the second electronic device accesses the first device permission in the first electronic device may be specifically that a second application on the second electronic device accesses the first device permission in the first electronic device. The second information may include an identifier of the second application, so as to inform the user that the second application on the second electronic device accesses the first device permission in the first electronic device.

With reference to the second aspect, in some embodiments, the second electronic device may be configured to: receive a seventh operation on the second information, and display a fifth control based on the seventh operation. The fifth control may be used to manage the permission for the second application on the second electronic device to access the first device.

It can be learned from the foregoing embodiment that the user may further perform an operation on the second electronic device, to separately perform permission management on each application on the second electronic device. This adjusts that each application on the second electronic device accessing device permission of another electronic device (for example, the first electronic device) In other words, the user can authorize, based on a requirement and a privacy security consideration, different applications on the second electronic device to access different device permission of the another electronic device. This can better meet a use requirement of the user, and improve security of user privacy information.

According to a third aspect, this application provides an electronic device. The electronic device may include a screen, a memory, and one or more processors. The memory may be configured to store a computer program. The one or more processors may be configured to invoke the computer program, so that the electronic device performs the method in any possible implementation in the first aspect.

According to a fourth aspect, this application provides a computer-readable storage medium, including instructions. When the instructions are run on an electronic device, the electronic device is enabled to perform the method in any possible implementation in the first aspect.

According to a fifth aspect, this application provides a computer program product. The computer program product may include computer instructions, and when the computer instructions are run on an electronic device, the electronic device is enabled to perform the method in any possible implementation in the first aspect.

According to a sixth aspect, this application provides a chip. The chip is used in an electronic device, the chip includes one or more processors, and the processor is configured to invoke computer instructions, so that the electronic device performs the method in any possible implementation in the first aspect.

It may be understood that the electronic device provided in the third aspect, the computer-readable storage medium provided in the fourth aspect, the computer program product provided in the fifth aspect, and the chip provided in the sixth aspect are all configured to perform the methods provided in embodiments of this application. Therefore, for beneficial effect that can be achieved by the electronic device, the computer-readable storage medium, the computer program product, and the chip, refer to the beneficial effect in the corresponding methods. Details are not described herein again.

### BRIEF DESCRIPTION OF DRAWINGS

FIG. 1 is a diagram of a structure of an electronic device 100 according to an embodiment of this application;
FIG. 2 is a block diagram of a software structure of an electronic device 100 according to an embodiment of this application;
FIG. 3 is a diagram of an architecture of a communication system according to an embodiment of this application;
FIG. 4 is a diagram of a structure of a communication system according to an embodiment of this application;
FIG. 5A and FIG. 5B are diagrams of some interfaces of an electronic device 100 according to an embodiment of this application;
FIG. 6A to FIG. 6D are some diagrams of a sensitive behavior reminder scenario according to an embodiment of this application;
FIG. 7A to FIG. 7C are some other diagrams of a sensitive behavior reminder scenario according to an embodiment of this application;
FIG. 8A to FIG. 8C are some other diagrams of a sensitive behavior reminder scenario according to an embodiment of this application;
FIG. 9A to FIG. 9C are some other diagrams of a sensitive behavior reminder scenario according to an embodiment of this application;
FIG. 10A to FIG. 10L are some other diagrams of a sensitive behavior reminder scenario according to an embodiment of this application;
FIG. 11A to FIG. 11C are some diagrams of a sensitive behavior management scenario according to an embodiment of this application;
FIG. 12A to FIG. 12C are some other diagrams of a sensitive behavior management scenario according to an embodiment of this application;
FIG. 13A to FIG. 13E are some other diagrams of a sensitive behavior management scenario according to an embodiment of this application;
FIG. 14A and FIG. 14B are some other diagrams of a sensitive behavior management scenario according to an embodiment of this application;
FIG. 15A to FIG. 15F are some other diagrams of a sensitive behavior reminder scenario according to an embodiment of this application;
FIG. 16A to FIG. 16C are some diagrams of a sensitive behavior reminder scenario according to an embodiment of this application; and
FIG. 17A to FIG. 17E are a flowchart of a sensitive behavior reminder method according to an embodiment of this application.

### DESCRIPTION OF EMBODIMENTS

The following describes technical solutions in embodiments of this application with reference to accompanying drawings in embodiments of this application. In the descriptions of embodiments of this application, terms used in the following embodiments are merely intended for a purpose of describing specific embodiments, but are not intended to limit this application. The terms "one", "the", "the foregoing", "this", and "the one" of singular forms used in this specification and the appended claims of this application are also intended to include expressions such as "one or more", unless otherwise specified in the context clearly. It should be further understood that, in the following embodiments of this application, "at least one" and "one or more" mean one or more (including two). The term "and/or" is used to describe an association relationship between associated objects and indicates that three relationships may exist. For example, A and/or B may indicate the following cases: Only A exists, both A and B exist, and only B exists, where A and B may be singular or plural. The character "/" generally indicates an "or" relationship between the associated objects.

Reference to "an embodiment", "some embodiments", or the like described in this specification indicates that one or more embodiments of this application include a specific feature, structure, or characteristic described with reference to the embodiment. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner. The term "connection" includes direct connection and indirect connection, unless otherwise specified. "First" and "second" are merely intended for a purpose of description, and shall not be understood as an indication or implication of relative importance or implicit indication of a quantity of indicated technical features.

In embodiments of this application, the term "example", "for example", or the like is used to give an example, an illustration, or a description. Any embodiment or design scheme described as an "example" or "for example" in embodiments of this application should not be construed as being more preferred or more advantageous than another embodiment or design scheme. Exactly, use of the term "example", "for example", or the like is intended to present a related concept in a specific manner.

A term "user interface (user interface, UI)" in the following embodiments of this application is a medium interface for interaction and information exchange between an application (application, APP) or an operating system (operating system, OS) and a user, and implements conversion between an internal form of information and a form acceptable to the user. The user interface is source code written in a specific computer language, for example, Java or an extensible markup language (extensible markup language, XML). Interface source code is parsed and rendered on an electronic device, and is finally presented as content that can be identified by the user. The user interface is usually represented in a form of a graphical user interface (graphical user interface, GUI), and is a user interface that is related to a computer operation and that is displayed in a graphic manner. The user interface may be a visual interface element, for example, a text, an icon, a button, a menu, a tab, a text box, a dialog box, a status bar, a navigation bar, or a Widget that is displayed on a display of an electronic device.

This application provides an application sensitive behavior reminder method. In the method, an electronic device may monitor access data of device permission. The access data of the device permission may include data of accessing the device permission by an application on the electronic device, and may further include data of accessing the device permission of the electronic device by another electronic device (namely, an application on the another electronic device). When detecting that the device permission is accessed, the electronic device may display a device permission icon in a status bar, to inform a user that the device permission corresponding to the device permission icon is accessed. When detecting that the device permission is accessed, the electronic device may further display a device permission icon in a control center interface, to inform a user that the device permission corresponding to the device permission icon is accessed. The control center interface may integrate controls with functions such as a media play control function and a shortcut switch (like a Bluetooth switch and a wireless local area network switch) function. The electronic device may provide, in response to an operation on the device permission icon in the control center interface, a control used to manage the device permission, so that the user manages device permission of the electronic device that can be accessed by an application on the electronic device and device permission of the electronic device that can be accessed by another electronic device (or an application on the another electronic device).

It can be learned from the foregoing method that, when detecting that the device permission is accessed, the electronic device may display the device permission icon in the status bar and/or the control center interface, so that the user knows and controls sensitive behavior of the application on the device and cross-device sensitive behavior.

In some embodiments, the device permission of the electronic device may include first-type device permission and second-type device permission.

The first-type device permission may refer to device permission for which access duration of one-time access may be a continuous time period. That is, when an application accesses the first-type device permission for a single time, duration from time when the application starts to access the first-type device permission to time when the application ends accessing the first-type device permission may be continuous duration. The first-type device permission may include camera permission, microphone permission, location permission, and the like. For example, when an application accesses camera permission for a single time, the application may start to access the camera permission at a moment t1, and end access to the camera permission at a moment t2, so as to obtain image data captured by a camera in a time period of access duration (t1-t2) of this access.

The second-type device permission may refer to device permission with which access behavior of one access may be instantaneously completed. That is, access behavior for an application to access the second-type device permission for a single time may be a separate action, without considering an access start moment and an access end moment (namely, without considering access duration). The second-type device permission may include contact permission, media and file permission, device information permission, call record permission, and the like. For example, when an application accesses contact permission for a single time, a request for obtaining contact data may be sent, so as to obtain the contact data in an electronic device. The sending the request for obtaining the contact data may be equivalent to access behavior of accessing the contact permission by the application.

When detecting that the first-type device permission is accessed, the electronic device may display a device permission icon in the status bar. For example, when detecting that the camera permission is accessed, the electronic device may display a camera icon in the status bar, to inform the user that all cameras are accessed. Further, in a process in which the first-type device permission is accessed, in response to an operation of opening the control center interface, the electronic device may display the control center interface, and display the icon (for example, the camera icon) corresponding to the device permission in the control center interface. In addition, the electronic device may further query access data of the second-type device permission that is in a preset time period before the operation of opening the control center interface is received. When finding that the second-type device permission is accessed in the preset time period, the electronic device may further display a device permission icon in the control center interface. For example, when finding that the contact permission is accessed in the preset time period, in addition to the camera icon, the electronic device may further display a contact icon in the control center interface, to inform the user that the contact permission is accessed.

It can be learned from the foregoing embodiment that, in addition to displaying the camera icon, a microphone icon, and a location icon in the control center interface, the electronic device may further display, in the control center interface, the device permission icon of the second-type device permission, like the contact icon, and a media and file icon. In this way, the user can learn of access data of each device permission more conveniently and intuitively.

It should be noted that one piece of device permission may correspond to at least one service. When an application is granted with one piece of device permission, the application can invoke, by accessing the piece of device permission, a service corresponding to the piece of device permission.

For example, camera permission may correspond to a camera service. The camera service may be a service of capturing image data by using a camera. When an application accesses the camera permission, the application can invoke the camera service to obtain the image data.

For another example, microphone permission may correspond to a microphone service. The microphone service may be a service of capturing audio data by using a microphone. When an application accesses the microphone permission, the application can invoke the microphone service to obtain the audio data.

For another example, location permission may correspond to a location service. The location service may be a service of obtaining location information by using a location information obtaining module (like a GPS). When an application accesses the location permission, the application can invoke the location service to obtain the location information.

For another example, contact permission may correspond to a contact service. The contact service may be a service of obtaining contact information in an electronic device. When an application accesses the contact permission, the application can invoke the contact service to obtain the contact information.

For another example, media and the file permission may correspond to a media and file service. The media and file service may be a service of obtaining media file data (such as a picture, a video, and audio) and other types of file data (such as a document on which text editing is performed) in an electronic device. When an application accesses the media and file permission, the application can invoke the media and file service to obtain the media file data and the other types of file data.

Sensitive behavior in this application may indicate behavior of accessing device permission of the electronic device, or may indicate behavior of invoking a service corresponding to the device permission of the electronic device. An access party for accessing the device permission of the electronic device may include an application on the electronic device and an electronic device other than the electronic device. For example, a communication connection is established between the electronic device and another electronic device. The another electronic device may access camera permission of the electronic device, so as to invoke a camera of the electronic device to obtain image data.

The following describes a structure of an electronic device 100 in this application.

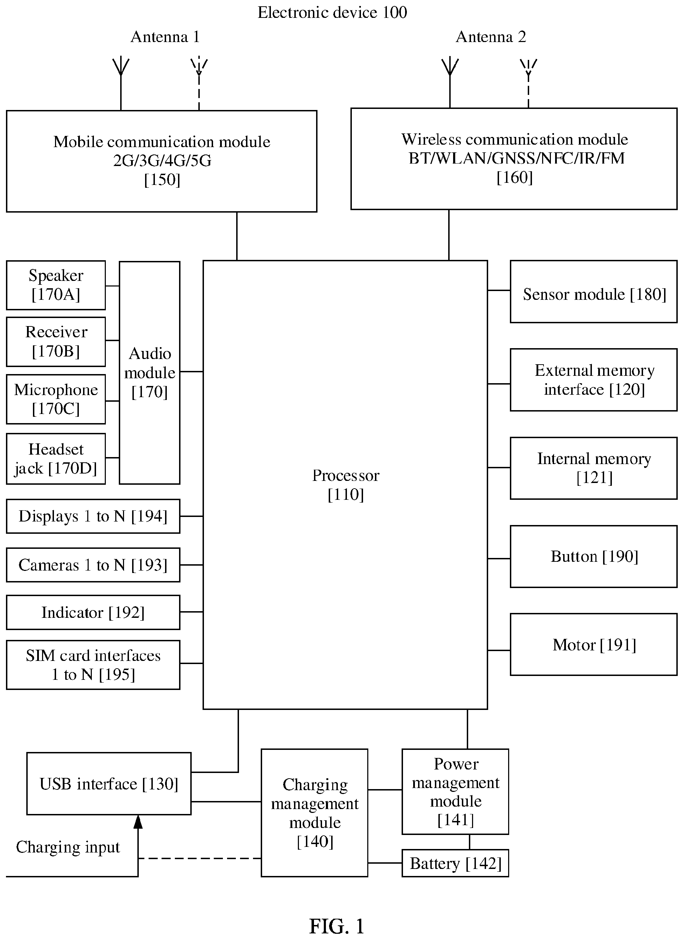

FIG. 1 is a diagram of an example of a structure of an electronic device 100 according to an embodiment of this application.

As shown in FIG. 1, the electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like.

It may be understood that the structure shown in this embodiment of this application does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may be a nerve center and a command center of the electronic device 100. The controller may generate an operation control signal based on an instruction operation code and a time sequence signal, to complete control of instruction fetching and instruction execution.

A memory may be disposed in the processor 110, and is configured to store instructions and data. In some embodiments, the memory in the processor 110 is a cache. The memory may store instructions or data that has been used or cyclically used by the processor 110. If the processor 110 needs to use the instructions or the data again, the processor may directly invoke the instructions or the data from the memory. This avoids repeated access, reduces waiting time of the processor 110, and improves system efficiency.

The USB interface 130 is an interface that conforms to a USB standard specification, and may be specifically a mini USB interface, a micro USB interface, a USB type-C interface, or the like. The USB interface 130 may be configured to connect to a charger to charge the electronic device 100, or may be configured to transmit data between the electronic device 100 and a peripheral device, or may be configured to connect to a headset for playing audio through the headset.

The charging management module 140 is configured to receive a charging input from a charger. The charger may be a wireless charger or a wired charger. The charging management module 140 supplies power to the electronic device through the power management module 141 while charging the battery 142.

The power management module 141 is configured to connect to the battery 142, the charging management module 140, and the processor 110. The power management module 141 receives inputs of the battery 142 and/or the charging management module 140, to supply power to the processor 110, the internal memory 121, an external memory, the display 194, the camera 193, the wireless communication module 160, and the like.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to receive and transmit an electromagnetic wave signal. Each antenna in the electronic device 100 may be configured to cover one or more communication frequency bands. Different antennas may be multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a wireless communication solution that is applied to the electronic device 100 and that includes a 2G/3G/4G/5G or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1.

The wireless communication module 160 may provide a wireless communication solution that is applied to the electronic device 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), near field communication (near field communication, NFC), an infrared (infrared, IR) technology, or the like. The wireless communication module 160 may be one or more components integrating at least one communication processor module. The wireless communication module 160 receives an electromagnetic wave by the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave through the antenna 2 for radiation.

The electronic device 100 may implement a display function through the GPU, the display 194, the application processor, and the like. The GPU is a microprocessor for image processing, and is connected to the display 194 and the application processor. The GPU is configured to: perform mathematical and geometric computation, and render an image.

The display 194 is configured to display an image, a video, and the like. In some embodiments, the electronic device 100 may include one or N displays 194, where N is a positive integer greater than 1.

The electronic device 100 may implement a photographing function through the ISP, the camera 193, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image.

The camera 193 is configured to capture a static image or a video. In some embodiments, the electronic device 100 may include one or N cameras 193, where N is a positive integer greater than 1.

The digital signal processor is configured to process a digital signal, and may process another digital signal in addition to the digital image signal. For example, when the electronic device 100 selects a frequency, the digital signal processor is configured to perform Fourier transformation on frequency energy.

The NPU is a neural-network (neural-network, NN) computing processor. The NPU quickly processes input information with reference to a structure of a biological neural network, for example, a transfer mode between human brain neurons, and may further continuously perform self-learning. Applications such as intelligent cognition of the electronic device 100 may be implemented through the NPU, for example, image recognition, facial recognition, speech recognition, and text understanding.

The external memory interface 120 may be used to connect to an external storage card, for example, a micro SD card, to extend a storage capability of the electronic device 100. The external memory card communicates with the processor 110 through the external memory interface 120, to implement a data storage function. For example, files such as music and videos are stored in the external storage card.

The internal memory 121 may be configured to store computer-executable program code. The executable program code includes instructions. The processor 110 runs the instructions stored in the internal memory 121, to perform various function applications of the electronic device 100 and data processing. The internal memory 121 may include a program storage area and a data storage area. The program storage area may store an operating system, an application required by at least one function (for example, a sound playing function or an image playing function), and the like. The data storage area may store data (for example, audio data or an address book) and the like created when the electronic device 100 is used. In addition, the internal memory 121 may include a high-speed random access memory, or may include a nonvolatile memory, for example, at least one magnetic disk storage device, a flash memory, or a universal flash storage (universal flash storage, UFS).

The electronic device 100 may implement an audio function, for example, music playing and recording, through the audio module 170, the speaker 170A, the receiver 170B, the microphone 170C, the headset jack 170D, the application processor, and the like.

The audio module 170 is configured to convert digital audio information into an analog audio signal for output, and is also configured to convert an analog audio input into a digital audio signal. The audio module 170 may be configured to encode and decode an audio signal. In some examples, the audio module 170 may be disposed in the processor 110, or some functional modules in the audio module 170 are disposed in the processor 110. The speaker 170A, also referred to as a "loudspeaker", is configured to convert an audio electrical signal into a sound signal. The receiver 170B, also referred to as an "earpiece", is configured to convert an electrical audio signal into a sound signal. The microphone 170C, also referred to as a "mike" or a "mic", is configured to convert a sound signal into an electrical signal. The headset jack 170D is configured to connect to a wired headset.

The sensor module 180 may include a pressure sensor, a gyroscope sensor, a barometric pressure sensor, a magnetic sensor, an acceleration sensor, a range sensor, an optical proximity sensor, a fingerprint sensor, a temperature sensor, a touch sensor, an ambient light sensor, a bone conduction sensor, and the like.

The button 190 includes a power button, a volume button, and the like. The motor 191 may generate a vibration prompt. The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195, to implement contact with or separation from the electronic device 100. The electronic device 100 may support one or N SIM card interfaces, where N is a positive integer greater than 1. The electronic device 100 interacts with a network through the SIM card, to implement functions such as conversation and data communication. In some examples, the electronic device 100 uses an eSIM, namely, an embedded SIM card. The eSIM card may be embedded into the electronic device 100, and cannot be separated from the electronic device 100.

The electronic device 100 may be an electronic device carrying iOS^{®}, Android^{®}, Windows^{®}, a Harmony^{®} OS (Harmony^{®} OS), or another operating system, for example, a mobile phone, a tablet computer, a notebook computer, a smart watch, or a smart band. A specific type of the electronic device 100 is not limited in this embodiment of this application.

A software system of the electronic device 100 may use a layered architecture, an event-driven architecture, a microkernel architecture, a micro service architecture, or a cloud architecture. In this embodiment of this application, an Android^{®} system with a layered architecture is used as an example to illustrate a software structure of the electronic device 100.

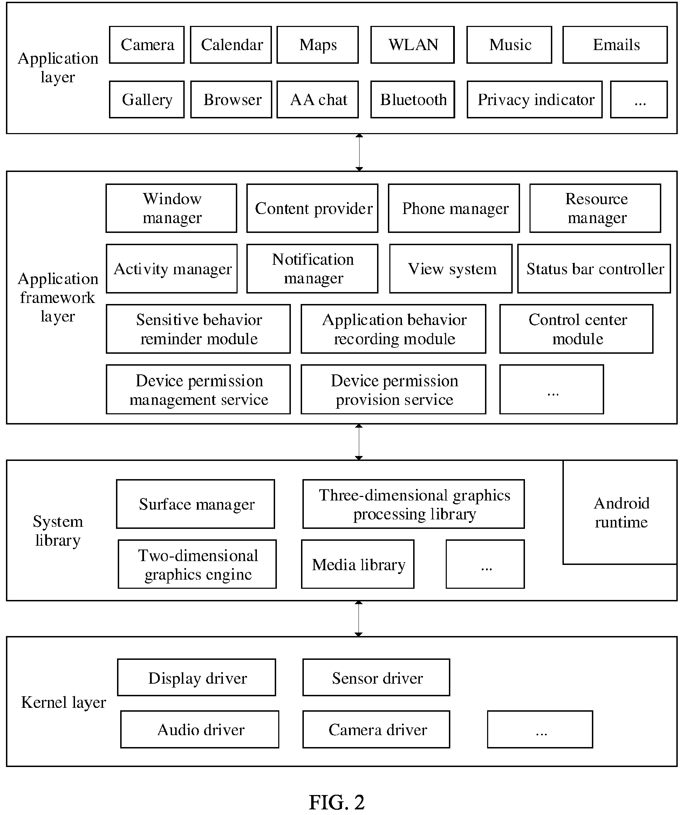

FIG. 2 is a block diagram of the software structure of the electronic device 100 according to this embodiment of this application.

In the layered architecture, software is divided into several layers, and each layer has a clear role and task. The layers communicate with each other through a software interface. In some embodiments, an Android^{®} system is divided into four layers: an application layer, an application framework layer, an Android runtime (Android runtime) and system library, and a kernel layer from top to bottom.

The application layer may include a series of application packages.

As shown in FIG. 2, the application packages may include applications such as Camera, Gallery, Calendar, Browser, Maps, AA chat, WLAN, Bluetooth, Emails, and Privacy indicator.

The privacy indicator may be used to obtain access data of device permission of the electronic device 100, and display, in a control center interface based on the access data of the device permission, a device permission icon of the accessed device permission.

The application framework layer provides an API and a programming framework for an application at the application layer. The application framework layer includes some predefined functions.

As shown in FIG. 2, the application framework layer may include a window manager, a content provider, a view system, a phone manager, a resource manager, a notification manager, an activity manager, and the like.

The window manager is configured to manage a window program. The window manager may obtain a size of a display, determine whether there is a status bar, perform screen locking, take a screenshot, and the like.

The content provider is configured to: store and obtain data, and enable the data to be accessed by an application. The data may include a video, an image, audio, calls that are made and answered, a browsing history and bookmarks, an address book, and the like.

The view system includes visual controls such as a control used to display a text and a control used to display an image. The view system may be configured to construct an application. A display interface may include one or more views. For example, a display interface including an SMS message notification icon may include a text display view and an image display view.

The phone manager is configured to provide a communication function for the electronic device 100, for example, management of a call status (including answering, declining, or the like).

The resource manager provides various resources such as a localized character string, an icon, an image, a layout file, and a video file for an application.

The notification manager enables an application to display notification information in a status bar or a drop-down notification bar and may be configured to convey a notification message. The notification information may automatically disappear after a short pause without user interaction. For example, the notification manager is used to notify download completion, give a message notification, and the like. The notification manager may alternatively be a notification that appears in a top status bar of a system in a form of a graph or a scroll bar text, for example, a notification of an application that is run on a background, or may be a notification that appears on a screen in a form of a dialog window. For example, text information is displayed in the status bar, an announcement is given, the electronic device vibrates, or the indicator light blinks.

The activity manager is responsible for managing an activity (activity), and is responsible for starting, switching, and scheduling each component in a system, and managing and scheduling an application. The activity manager can be invoked by an upper-layer application to start a corresponding activity.

In some embodiments, the application framework may further include a status bar controller, a sensitive behavior reminder module, an application behavior recording module, a control center module, a device permission management service, and a device permission provision service.

The device permission provision service may be used to provide a service corresponding to each device permission. For example, services that can be provided by the device permission provision service may include a camera service, a microphone service, a location service, a contact service, a media and file service, and the like. An application on the electronic device 100 or an electronic device other than the electronic device 100 may request from the device permission provision service to invoke a service corresponding to device permission. In a possible implementation, when receiving a request for invoking a service, the device permission provision service may determine whether a service invoker has permission to invoke the service (that is, whether a service invoker is authorized to access device permission corresponding to the service). When determining that the service invoker has the permission to invoke the service, the device permission provision service may provide the service for the service invoker. A method for determining whether the service invoker has the permission to invoke the service is not limited in this embodiment of this application.

The application behavior recording module may be configured to record access data (namely, sensitive behavior) of device permission of the electronic device 100. If a service provided by the device permission provision service is invoked, the device permission provision service may send a message to the application behavior recording module, to notify the application behavior recording module of data (namely, access data of the device permission) of the invoked service. In a possible implementation, the application behavior recording module may be implemented by an application operation service (application operation service, AppOpsService). AppOpsService provides a tracing and recording function. The electronic device 100 may record the access data of the device permission of the electronic device 100 by using AppOpsService. The device permission provision service may notify, by invoking a startOp function, AppOpsService of the invoked data.

The device permission management service may be used to listen to access data of device permission from the application behavior recording module. In a possible implementation, the device permission management service may listen to access data of first-type device permission (such as camera permission, microphone permission, and location permission) from the application behavior recording module. When any one piece of the first-type device permission is accessed, the application behavior recording module may send a message to the device permission management service, to notify the device permission management service of the access data of the first-type device permission.

The device permission management service may be used to send a message to the sensitive behavior reminder module when obtaining, through listening, that the first-type device permission is accessed, so as to notify the device permission management service of the access data of the first-type device permission.

The sensitive behavior reminder module may be configured to: when receiving the message including the access data of the first-type device permission, indicate the status bar controller to refresh a device permission icon displayed in a status bar.

The status bar controller may be configured to refresh, based on the indication of the sensitive behavior reminder module, the device permission icon displayed in the status bar.

For example, when receiving a message indicating that accessing camera permission starts, the sensitive behavior reminder module may indicate the status bar controller to display a camera icon in the status bar. When receiving a message indicating that accessing the camera permission ends, the sensitive behavior reminder module may indicate the status bar controller to cancel displaying of the camera icon in the status bar.

The control center module may be configured to manage a control center. The control center may integrate functions such as media play control function (for example, a function of controlling music playing) and a shortcut switch (for example, a Bluetooth switch, a wireless local area network switch, a camera switch, and a screen recording switch) function. When detecting an operation of opening a control center interface, the control center module may control the electronic device 100 to display the control center interface.

In this application, when detecting the operation of opening the control center interface, the control center module may send a message to the privacy indicator, to indicate the privacy indicator to display a device permission icon in the control center interface.

The Android runtime includes a kernel library and a virtual machine. The Android runtime is responsible for scheduling and management of the Android system.

The kernel library includes two parts: a function that needs to be called in Java language and a kernel library of Android.

The application layer and the application framework layer run on the virtual machine. The virtual machine executes Java files of the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (Media Library), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playback and recording in a plurality of commonly used audio and video formats, and static image files. The media library may support a plurality of audio and video encoding formats, for example, MPEG-4, H.264, MP3, AAC, AMR, JPG, and PNG.

The three-dimensional graphics processing library is configured to implement three-dimensional graphics drawing, image rendering, composition, image layer processing, and the like.

The 2D graphics engine is a drawing engine for 2D drawing.

The kernel layer is a layer between hardware and software. The kernel layer includes at least a display driver, a camera driver, an audio driver, and a sensor driver.

It may be understood that the software modules shown in FIG. 2 are merely examples for description of this application, and shall not constitute a limitation on this application. In some embodiments, the electronic device 100 may include more or fewer modules, or combine some modules, or split some modules.

It can be learned from the foregoing embodiment that the application sensitive behavior reminder method provided in this application is applicable to a communication system including a plurality of electronic devices. The sensitive behavior detected by the electronic device 100 may be executed by the application on the electronic device 100, or may be executed by the application on the electronic device other than the electronic device 100.

The following describes diagrams of architectures of a communication system 30 according to embodiments of this application.

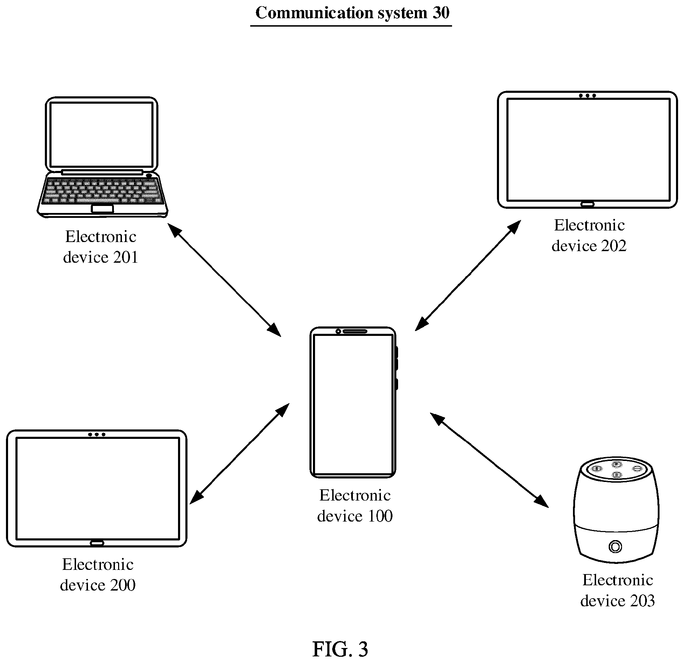

FIG. 3 is a diagram of an architecture of a communication system 30 according to an embodiment of this application.

As shown in FIG. 3, the communication system 30 may include a plurality of electronic devices: an electronic device 100, an electronic device 200, an electronic device 201, an electronic device 202, and an electronic device 203. For structures of the electronic device 200 to the electronic device 203, refer to the description of the structure of the electronic device 100 in the foregoing embodiment. Details are not described herein again. Not limited to the electronic device shown in FIG. 3, the communication system 30 may further include another type of electronic device, for example, a personal computer (personal computer, PC), a desktop computer, a laptop computer, a handheld computer, an augmented reality (augmented reality, AR) device, a virtual reality (virtual reality, VR) device, an artificial intelligence (artificial intelligence, AI) device, a head unit, a game console, a treadmill, a cloud host/cloud server, or another intelligent wearable device, and may further include an internet of things (Internet of Things, IoT) device or a smart home device like a smart water heater, a smart lamp, a smart air conditioner, a smart weight scale, and the like. A type of the electronic device is not limited in this application.

In some embodiments, the communication system 30 may also be referred to as a "super terminal". The "super terminal" may mean that capabilities of a plurality of electronic devices are integrated by using a distributed technology, stored in a virtual hardware resource pool, and managed, scheduled, and integrated in a unified manner based on a service requirement, to provide a service externally, so that different electronic devices implement quick connection, capability mutual assistance, and resource sharing.

A communication connection may be established between all electronic devices included in the communication system 30. For example, one electronic device and another electronic device in the communication system 30 may be electronic devices located in a same communication network (for example, located in a same Wi-Fi network). Alternatively, one electronic device may be an electronic device whose login account and a login account of another electronic device are a same account (for example, a Huawei account), or an electronic device whose login account and a login account of another electronic device belong to a same group (for example, a same family account). Alternatively, one electronic device may be an electronic device that establishes a trust relationship with another electronic device in another manner, for example, an electronic device that has been paired with Bluetooth or an electronic device that has been connected to a hotspot shared by another electronic device. Alternatively, one electronic device may be an electronic device that has established a Wi-Fi P2P connection to another electronic device. A manner of establishing the communication connection by the electronic devices included in the communication system 30 is not limited in this embodiment of this application.

One electronic device in the communication system 30 may access device permission of another electronic device in the communication system 30.

For example, the electronic device 100 may access camera permission of the electronic device 200, to invoke a camera service of the electronic device 200. In this way, the electronic device 100 may capture image data by using a camera of the electronic device 200.

The electronic device 100 may access media and file permission of the electronic device 201, to invoke a media and file service of the electronic device 201. In this way, the electronic device 100 may obtain data such as a media file and another type of file that are stored in the electronic device 201.

The electronic device 100 may access microphone permission of the electronic device 203, to invoke a microphone service of the electronic device 203. In this way, the electronic device 100 may capture audio data by using a microphone of the electronic device 203.

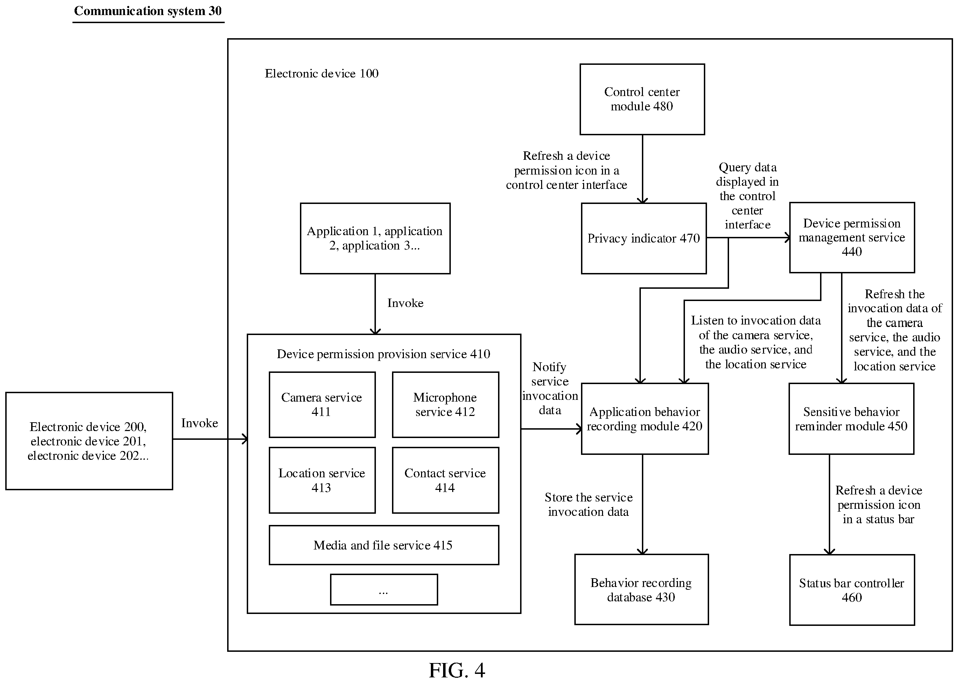

FIG. 4 is a diagram of another structure of an example of a communication system 30 according to an embodiment of this application.

As shown in FIG. 4, the communication system 30 may include an electronic device 100, an electronic device 200, an electronic device 201, an electronic device 202, and the like. For a manner of establishing a communication connection between electronic devices included in the communication system 30, refer to the foregoing description shown in FIG. 3. Details are not described herein again.

In some embodiments, the electronic device 100 may include Apps such as an application 1, an application 2, and an application 3. The Apps included in the electronic device 100 may be, for example, a camera application, a recorder application, and a browser application. The application on the electronic device 100 is not limited in this embodiment of this application. The electronic device 100 may further include a device permission provision service 410, an application behavior recording module 420, a behavior recording database 430, a device permission management service 440, a sensitive behavior reminder module 450, a status bar controller 460, a privacy indicator 470, and a control center module 480. The device permission provision service 410 may include a service corresponding to device permission of the electronic device 100, for example, a camera service 411, a microphone service 412, a location service 413, a contact service 414, or a media and file service 415. The device permission provision service 410 may further include more services. This is not limited in this application. Each application (like the application 1, the application 2, and the application 3) in the electronic device 100 and other electronic devices (such as the electronic device 200, the electronic device 201, and the electronic device 202) may access the device permission of the electronic device 100, to invoke the service in the device permission provision service 410.

When receiving a request for invoking a service, the device permission provision service 410 may provide, to a service invoker, the service invoked by the device permission provision service 410, and send a message to the application behavior recording module 420, to notify service invocation data. In a possible implementation, the application 1 requests to invoke the camera service, and the camera service 411 may provide the camera service for the application 1, and send a message to the application behavior recording module 420, to notify the invocation data of the camera service. For example, the invocation data of the camera service may include an identifier of a camera service invoker (namely, an identifier of the application 1), time at which the camera service starts to be invoked, time at which the camera service ends to be invoked, and the like.

The application behavior recording module 420 may store the received service invocation data. The application behavior recording module 420 may store, in the behavior recording database 430, the service invocation data.

The device permission management service 440 may listen to, from the application behavior recording module 420, service invocation data corresponding to the first-type device permission. For example, the device permission management service 440 may listen to, from the application behavior recording module 420, invocation data of the camera service, the microphone service, and the location service.

When receiving service invocation data of the device service, the microphone service, and the location service that is sent by the device permission provision service 410, the application behavior recording module 420 may send the service invocation data to the device permission management service 440.

When receiving the service invocation data, the device permission management service 440 may send the service invocation data to the sensitive behavior reminder module 450, so that the sensitive behavior reminder module 450 refreshes the invocation data of the camera service, the microphone service, and the location service.

The sensitive behavior reminder module 450 may indicate, based on refreshed invocation data of the camera service, the microphone service, and the location service, the status bar controller 460 to refresh the device permission icon in the status bar.

Herein, an example in which the application 1 invokes the camera service in the electronic device 100 is used for description.

For example, the application 1 requests to invoke the camera service. The camera service 411 may provide the camera service for the application 1, so that the application 1 can capture image data by using a camera of the electronic device 100. The camera service 411 may further send invocation data of the camera service to the application behavior recording module 420. The invocation data of the camera service may include an identifier of the application 1 and a moment at which the application 1 starts to invoke the camera service. The application behavior recording module 420 may send the invocation data of the camera service to the device permission management service 440. The device permission management service 440 may send the invocation data of the camera service to the sensitive behavior reminder module 450. The sensitive behavior reminder module 450 may store the invocation data of the camera service, and indicate the status bar controller 460 to display an icon of the camera in the status bar. In this way, a user may be informed that camera permission is accessed and the camera of the electronic device 100 is invoked.

Further, the application 1 ends invoking of the camera service. The camera service 411 may send, to the application behavior recording module 420, invocation ending data of the camera service. The invocation ending data of the camera service may include the identifier of the application 1 and a moment at which the application 1 ends invoking of the camera service. The application behavior recording module 420 may send, to the device permission management service 440, the invocation ending data of the camera service. The device permission management service 440 may send, to the sensitive behavior reminder module 450, the invocation ending data of the camera service. The sensitive behavior reminder module 450 may store the invocation ending data of the camera service, and indicate the status bar controller 460 to cancel displaying of the icon of the camera in the status bar.

The control center module 480 may be configured to manage a control center. When detecting an operation of opening a control center interface, the control center module 480 may send a message to the privacy indicator 470, to indicate the privacy indicator 470 to refresh a device permission icon in the control center interface.

When receiving the message, from the control center module 480, indicating to refresh the device permission icon in the control center interface, the privacy indicator 470 may query the application behavior recording module 420 and the device permission management service 440 for data displayed in the control center interface. The data displayed in the control center interface may include service invocation data corresponding to device permission of the electronic device 100.

The privacy indicator 470 may obtain, from the application behavior recording module 420, service invocation data corresponding to the second-type device permission of the electronic device 100, and obtain, from the device permission management service 440, the service invocation data corresponding to the first-type device permission of the electronic device 100. The privacy indicator 470 may display, in the control center interface based on the service invocation data corresponding to the second-type device permission, a device permission icon of the accessed second-type device permission. The privacy indicator 470 may display, in the control center interface based on the service invocation data corresponding to the first-type device permission, the device permission icon of the accessed first-type device permission. In this way, the electronic device 100 may inform, in the control center interface, the user of accessed device permission in the first-type device permission and in the second-type device permission, and a visitor who accesses the device permission.

It can be learned from the communication system 30 shown in FIG. 4 that, when detecting that the device permission is accessed, the electronic device 100 may display the device permission icon in the status bar and/or the control center interface, so that the user knows and controls sensitive behavior of the application on the device and cross-device sensitive behavior.

Based on the foregoing electronic device 100 and the foregoing communication system 30, the following describes some sensitive behavior reminder scenarios provided in embodiments of this application.

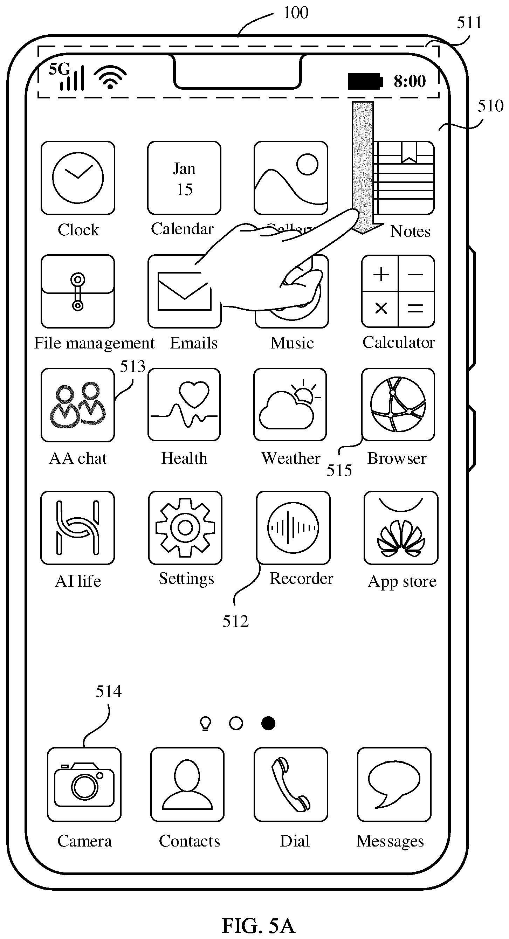

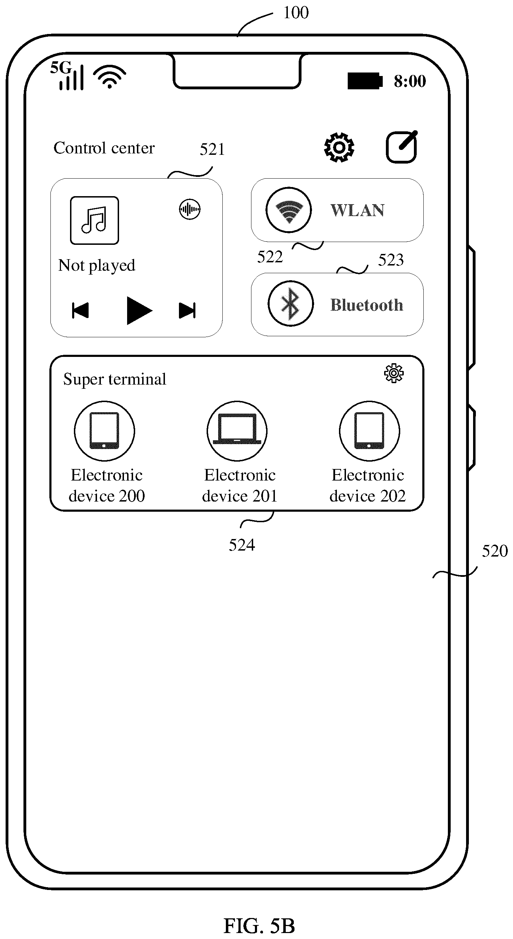

FIG. 5A and FIG. 5B are diagrams of examples of interfaces of the electronic device 100 when no sensitive behavior currently occurs.

As shown in FIG. 5A, the electronic device 100 may display a user interface 510. The user interface 510 may be a home screen of the electronic device 100. The user interface 510 may include a status bar 511 and an application icon of an application. For example, the application icon may include a recorder application icon 512, an AA chat application icon 513, a camera application icon 514, a browser application icon 515, and the like. The application icon may be used to trigger the electronic device 100 to start the application corresponding to the application icon.

The status bar 511 may include a signal strength indicator of a mobile communication signal, a signal strength indicator of a Wi-Fi signal, a battery status indicator, and a time indicator.

In some embodiments, when sensitive behavior is detected (that is, when device permission is accessed), the electronic device 100 may display, in the status bar 511, a device permission icon of the accessed device permission in the sensitive behavior, to notify a user of the sensitive behavior that occurs in the electronic device 100.

In a possible implementation, the electronic device 100 may display, in the status bar 511 only when detecting that first-type device permission is accessed, a device permission icon of the first-type device permission, and the electronic device 100 may not display, in the status bar 511 when detecting that second-type device permission is accessed, a device permission icon of the second-type device permission.

It may be understood that a permission visitor usually continuously accesses the first-type device permission for a period of time when accessing the first-type device permission. That is, an access start moment and an access end moment exist. The electronic device 100 may start to display the device permission icon in the status bar 511 at the moment at which access of the first-type device permission starts, and cancel displaying of the device permission icon in the status bar 511 at the moment at which access of the first-type device permission ends. It can be learned that the electronic device 100 may display the device permission icon in the status bar 511 in real time in a process in which the first-type device permission is being accessed, to notify the user that the first-type device permission is being accessed.

However, when the second-type device permission is accessed, access behavior of the permission visitor is usually a separate and one-time action. If the electronic device 100 displays the device permission icon in the status bar 511 when detecting that the second-type device permission is accessed, the electronic device 100 may quickly cancel displaying of the device permission icon after displaying the device permission icon of the second-type device in the status bar 511. If the user does not view the electronic device 100 in time, the user may not see a sensitive behavior reminder about access of the second-type device. In addition, if the permission visitor frequently accesses the second-type device permission, the icon, corresponding to the device permission, that is in the second-type device permission and that is displayed by the electronic device 100 in the status bar 511 may frequently blink. It can be learned that displaying, by the electronic device 100 in the status bar 511, the device permission icon of the second-type device permission has poor sensitive behavior reminder effect, has high power consumption, and affects user's screen viewing experience. Therefore, the electronic device 100 can display, in the status bar 511 only when the first-type device permission is accessed, the device permission icon of the first-type device permission.

In response to an operation of opening a control center interface, the electronic device 100 may display the control center interface 520 shown in FIG. 5B. The operation of opening the control center interface may be, for example, an operation of sliding downward from a top right side of a screen of the electronic device 100 shown in FIG. 5A. The foregoing operation of opening the control center interface is not limited in embodiments of this application.

As shown in FIG. 5B, the control center interface 520 may include a music card 521, a WLAN card 522, a Bluetooth card 523, and a super terminal card 524. The music card 521 may include one or more controls (such as a play control, a pause control, a previous control, and a next control) used to control music playing. The WLAN card 522 may include a switch used to enable/disable a WLAN function. The Bluetooth card 523 may include a switch used to enable/disable Bluetooth. The super terminal card 524 may include device icons of one or more electronic devices. The one or more electronic devices may include an electronic device that has established a cooperative connection to the electronic device 100, or may include an electronic device that is detected by the electronic device 100 and that has not established a cooperative connection. This is not limited in embodiments of this application. The device icon in the super terminal card 524 may be used to trigger the electronic device 100 to establish a cooperative connection, or disconnect a cooperative connection to the electronic device corresponding to the device icon. Establishing a cooperative connection between two electronic devices may indicate that one of the two electronic devices virtualizes the other electronic device, and uses a capability of the other electronic device to work cooperatively, thereby providing a service for a user.

In some embodiments, in response to the operation of opening the control center interface, the electronic device 100 may query sensitive behavior in a preset time period before receiving the operation of opening the control center interface. The electronic device 100 may display, in the control center interface 520 based on the sensitive behavior in the preset time period, a device permission icon of accessed device permission in the sensitive behavior, so as to inform the user of the sensitive behavior that occurs in the electronic device 100.

In a possible implementation, the electronic device 100 may display, in the control center interface 520 based on sensitive behavior of accessing the first-type device permission, the device permission icon of the accessed first-type device permission, and may display, in the control center interface 520 based on sensitive behavior of accessing the second-type device permission, the device permission icon of the accessed second-type device permission.

It can be seen that, in addition to displaying a camera icon, a microphone icon, and a location icon in the control center interface 520, the electronic device 100 may further display, in the control center interface 520, the device permission icon of the second-type device permission, like a contact icon, and a media and file icon. In this way, the user can more conveniently and intuitively learn of the sensitive behavior that occurs in the electronic device 100 in a recent time period.

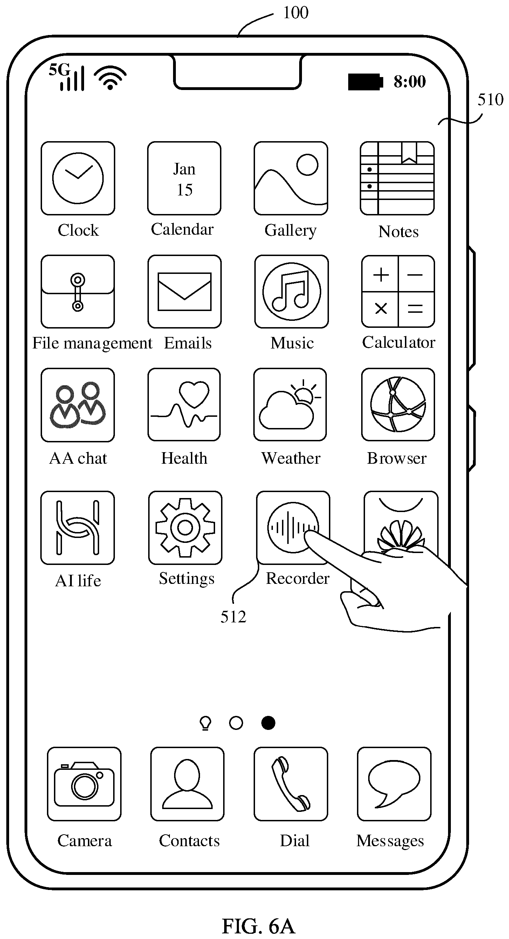

FIG. 6A to FIG. 6D are some diagrams of an example of a sensitive behavior reminder scenario.

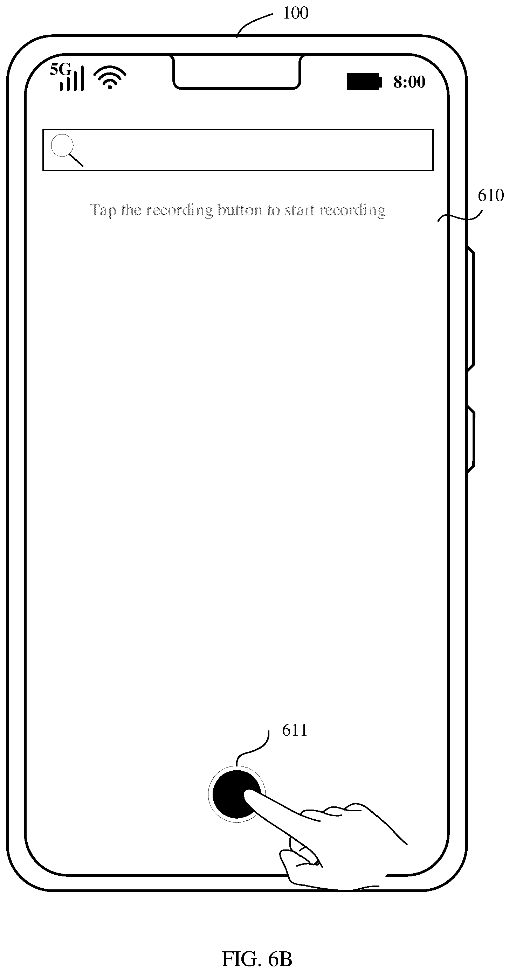

As shown in FIG. 6A, the electronic device 100 may display the user interface 510. The user interface 510 may include the recorder application icon 512. In response to an operation on the recorder application icon 512, for example, a touch operation, the electronic device 100 may display a user interface 610 shown in FIG. 6B. The user interface 610 may be a user interface of the recorder application.

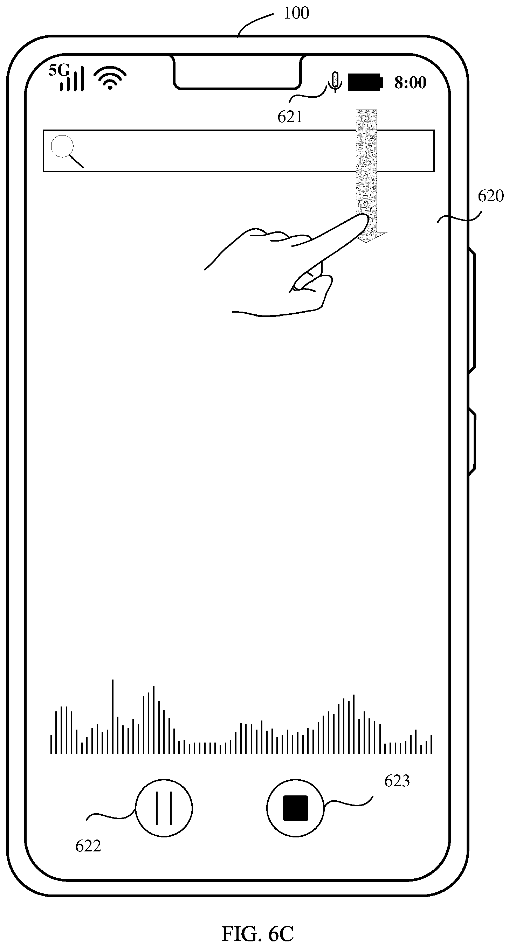

As shown in FIG. 6B, the user interface 610 may include a recording start control 611. In response to an operation on the recording start control 611, the electronic device 100 may start up a microphone to capture audio data, and display a user interface 620 shown in FIG. 6C.

As shown in FIG. 6C, the user interface 620 may include a recording pause control 622 and a recording end control 623. The recording pause control 622 may be used to pause recording. The recording end control 623 may be used to end recording.

The user interface 620 may further include a microphone icon 621 displayed in the status bar. When the operation on the recording start control 611 is detected, the recorder application may request access the microphone permission. When determining that the recorder application has the microphone permission, the electronic device 100 may provide a microphone service for the recorder application. In this way, the recorder application may invoke the microphone service, and capture the audio data by using the microphone of the electronic device 100. The electronic device 100 may detect that the recorder application accesses the microphone permission, and display the microphone icon 621 shown in FIG. 6C in the status bar. Specifically, the electronic device 100 may display the microphone icon 621 in the status bar starting from a moment at which the recorder application starts to invoke the microphone service (namely, a moment at which the microphone starts to work and captures the audio data). The microphone icon 621 may remind the user of sensitive behavior that the microphone is invoked.

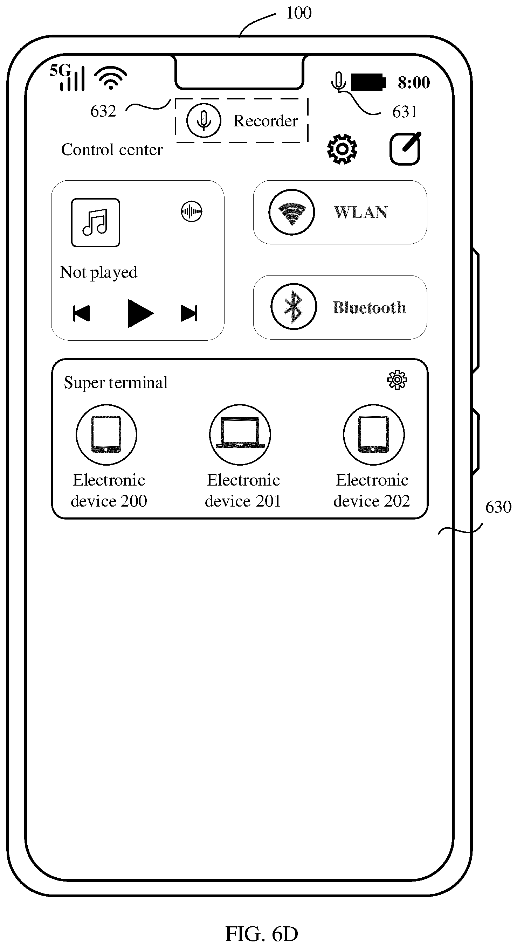

In response to an operation of opening a control center interface shown in FIG. 6C, the electronic device 100 may display the control center interface 630 shown in FIG. 6D. The control center interface 630 may include a sensitive behavior prompt 632 and a microphone icon 631 displayed in the status bar. For the microphone icon 631, refer to the description of the microphone icon 621 shown in FIG. 6C. The sensitive behavior prompt 632 may include a microphone icon, and a name "recorder" of the recorder application.

In response to the operation of opening the control center interface, the electronic device 100 may query sensitive behavior in a preset time period before the operation of opening the control center interface, and display a sensitive behavior prompt in the control center interface based on found sensitive behavior. The preset time period may be, for example, 5 seconds, 10 seconds, or 1 minute. For example, the electronic device 100 receives, at a moment t1, the operation of opening the control center interface. The electronic device 100 may query access data of device permission in 10 seconds before the moment t1.

The electronic device 100 may find that the recorder application accesses the microphone permission in the preset time period before the operation of opening the control center interface. In this case, the electronic device 100 may display, in the control center interface 630, the sensitive behavior prompt 632 shown in FIG. 6D. The sensitive behavior prompt 632 may include the microphone icon, and the name of the recorder application. In this way, the user can know, based on the sensitive behavior prompt 632, that the microphone permission of the electronic device 100 is accessed, and a visitor is the recorder application.

In some embodiments, when an operation on the recording pause control 622 or the recording end control 623 shown in FIG. 6C is detected, the recorder application may end the permission to access the microphone. The electronic device 100 may turn off the microphone, to stop capturing the audio data. When detecting that the recorder application ends the permission to access the microphone, the electronic device 100 may cancel displaying, in the status bar, of the microphone icon 621 shown in FIG. 6C.

It should be noted that, when the control center interface 630 is displayed, both a sensitive behavior prompt (for example, the sensitive behavior prompt 632) and a device permission icon (for example, the microphone icon 631) displayed in the status bar may be in a frozen state. That is, the sensitive behavior prompt 632 and the microphone icon 631 may remain unchanged. For example, when the control center interface 520 is displayed, the electronic device 100 may keep, when detecting that the recorder application ends the permission to access the microphone, the microphone icon 631 and the sensitive behavior prompt 632 continuously displayed. Further, when detecting an operation of closing the control center interface 630, the electronic device 100 may cancel displaying of the microphone icon 621 shown in FIG. 6C in the status bar included in a user interface displayed after the control center interface 630 is closed. For another example, when the control center interface 630 is displayed, the electronic device 100 may keep, when detecting that camera permission is accessed, the microphone icon 631 and the sensitive behavior prompt 632 continuously displayed, does not add a camera icon to the status bar, and does not add, to the control center interface 630, a sensitive behavior prompt indicating that the camera permission is accessed. Further, when detecting an operation of closing the control center interface 630, the electronic device 100 may display the camera icon in the status bar included in a user interface displayed after the control center interface 630 is closed, to remind the user that the camera permission is accessed.

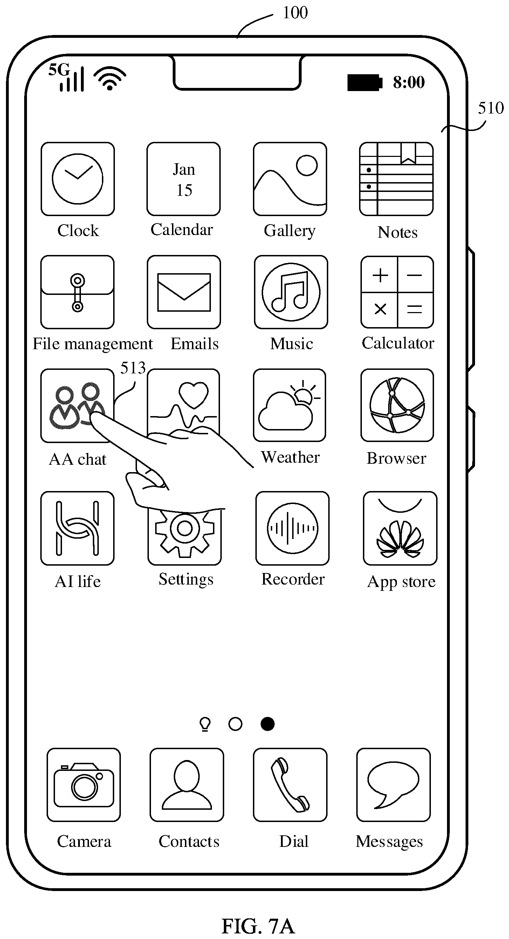

FIG. 7A to FIG. 7C are some other diagrams of an example of a sensitive behavior reminder scenario.

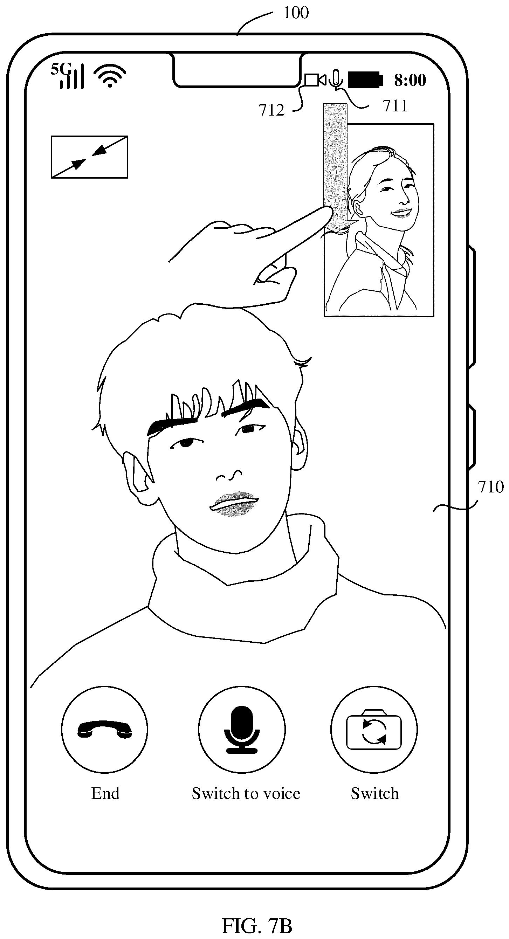

As shown in FIG. 7A, the electronic device 100 may display the user interface 510. The user interface 510 may include the AA chat application icon 513. In response to an operation on the AA chat application icon 513, the electronic device 100 may start an AA chat application. The AA chat application can provide a video call function. In response to an operation of starting the video call function, the electronic device 100 may display a user interface 710 shown in FIG. 7B.

As shown in FIG. 7B, the user interface 710 may include a microphone icon 711 and a camera icon 712 that are displayed in the status bar. When it is detected that the video call function is started, the AA chat application may request permission to access a camera and a microphone. When determining that the AA chat application has camera permission and microphone permission, the electronic device 100 may provide a camera service and a microphone service for the AA chat application. In this way, the AA chat application can invoke the camera permission and the microphone permission, capture an image by using a camera of the electronic device 100, and capture audio data by using a microphone of the electronic device 100. The electronic device 100 may detect that the AA chat application accesses the camera permission and the microphone permission, and display the microphone icon 711 and the camera icon 712 shown in FIG. 7B. The microphone icon 711 may remind the user of sensitive behavior that the microphone is invoked. The camera icon 712 may remind the user of sensitive behavior that the camera is invoked.

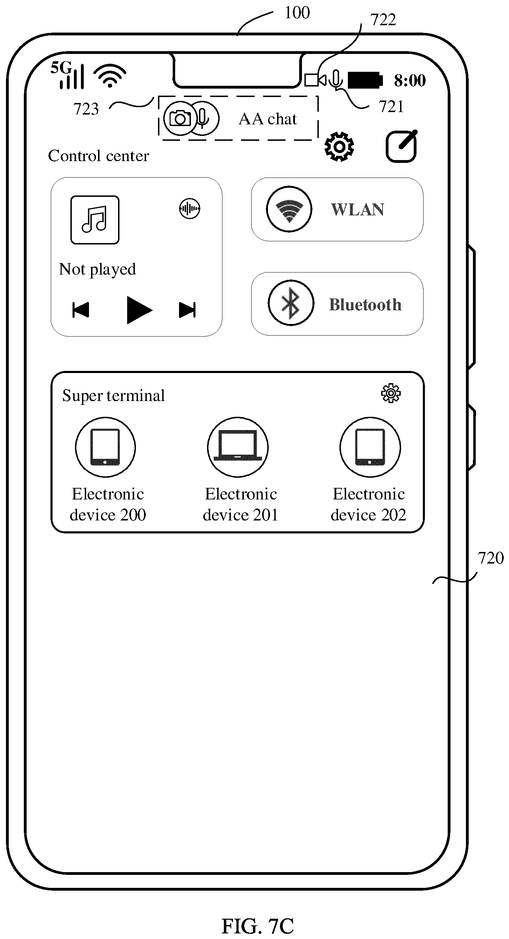

In response to an operation of opening a control center interface shown in FIG. 7B, the electronic device 100 may display the control center interface 720 shown in FIG. 7C.

As shown in FIG. 7C, the control center interface 720 may include a sensitive behavior prompt 723, and a microphone icon 721 and a camera icon 722 that are displayed in the status bar. For the microphone icon 721 and the camera icon 722, respectively refer to the descriptions of the microphone icon 711 and the camera icon 712 shown in FIG. 7B. The sensitive behavior prompt 723 may include a camera icon, a microphone icon, and a name "AA chat" of the AA chat application. In the sensitive behavior prompt 723, the camera icon and the microphone icon may be displayed in a folded manner. For example, the camera icon may be displayed above the microphone icon, and partially block the microphone icon. The application name displayed in the sensitive behavior prompt 723 may be the name of the application that accesses device permission corresponding to the camera icon and the microphone icon included in the sensitive behavior prompt 723.

It can be learned from the foregoing embodiment that, in response to the operation of opening the control center interface, the electronic device 100 may query sensitive behavior in a preset time period before the operation of opening the control center interface, and display a sensitive behavior prompt in the control center interface based on found sensitive behavior. It can be learned from FIG. 7B that the electronic device 100 receives the operation of opening the control center interface in a process in which the AA chat application accesses the camera permission and the microphone permission. In this case, the electronic device 100 may find that the AA chat application accesses the camera permission and the microphone permission in a preset time period before the operation of opening the control center interface. The electronic device 100 may display, in the control center interface 720, the sensitive behavior prompt 723 shown in FIG. 7C. In this way, the user can know, based on the sensitive behavior prompt 723, that the microphone permission and the camera permission of the electronic device 100 are accessed, and a visitor is the AA chat application.

In some embodiments, when an operation of ending a video call is detected, the AA chat application may end access to the microphone permission and the camera permission. The electronic device 100 may turn off the camera and the microphone, to stop capturing the image and audio data. When detecting that the AA chat application ends the permission to access the microphone and the camera, the electronic device 100 may cancel displaying, in the status bar, of the microphone icon 711 and the camera icon 712 shown in FIG. 7B.

In some embodiments, when querying the sensitive behavior in the preset time period before the operation of opening the control center interface, the electronic device 100 finds that a plurality of pieces of device permission are accessed. The electronic device 100 may display, in the control center interface, a sensitive behavior prompt including icons corresponding to the device permission in the plurality of pieces of device permission. Therefore, the user can conveniently learn of which device permission of the electronic device 100 is accessed in a recent period of time.

In a possible implementation, when displaying, in the control center interface, the sensitive behavior prompt including the icons corresponding to the plurality of pieces of device permission, the electronic device 100 may display the icons corresponding to the plurality of pieces of device permission in a folded manner. For example, the electronic device 100 may display the icons corresponding to the device permission in the folded manner according to preset permission priorities. The electronic device 100 may display, at a top level, a device permission icon of device permission with a highest permission priority, and display, at a bottom level, a device permission icon of device permission with a lowest permission priority. An icon, corresponding to device permission, displayed at an upper layer may partially block an icon, corresponding to device permission, displayed at a lower layer. For example, permission priorities sorted in descending order may be camera permission>microphone permission>location permission>media and file permission>contact permission. When finding sensitive behavior of accessing the camera permission, the microphone permission, the media and file permission, and the contact permission in the preset time period before the operation of opening the control center interface, the electronic device 100 may display a sensitive behavior prompt in a control center interface. The sensitive behavior prompt may include a camera icon, a microphone icon, a media and file icon, and a contact icon that are displayed in a folded manner. According to the foregoing preset permission priority sequence, the electronic device 100 sequentially displays the camera icon, the microphone icon, the media and file icon, and the contact icon based on display levels from top to bottom. The camera icon is above the microphone icon and partially blocks the microphone icon. The microphone icon may be above the media and file icon and partially block the media and file icon. The media and file icon may be above the contact icon and partially block the contact icon.

The foregoing permission priority is merely an example for description in embodiments of this application, and shall not constitute a limitation on this application. When finding that the plurality of pieces of device permission are accessed, the electronic device 100 may further present, in another display manner, the icons corresponding to the device permission in the plurality of pieces of accessed device permission, to inform the user of the sensitive behavior that occurs in the electronic device 100.

In some embodiments, the electronic device 100 may further provide a name of a permission visitor when displaying the sensitive behavior prompt in the control center interface. That is, the sensitive behavior prompt may further include a name of permission visitor. If the permission visitor is an application on the electronic device 100, the electronic device 100 may display a name of the application. If the permission visitor is an electronic device other than the electronic device 100, the electronic device 100 may display a name of the electronic device that accesses the device permission.

In a possible implementation, the electronic device 100 finds that a plurality of pieces of device permission are accessed in a preset time period before the operation of opening the control center interface. If permission visitors of the plurality of pieces of device permission are the same, for example, all are an application 1 in the electronic device 100, the electronic device 100 may display a sensitive behavior prompt in the control center interface. The sensitive behavior prompt may include icons corresponding to the device permission in the plurality of pieces of device permission and a name of the application 1. Alternatively, if permission visitors of the plurality of pieces of device permission are different, for example, the permission visitors of the plurality of pieces of device permission include an application 1, an application 2, and an electronic device 200, the electronic device 100 may display a sensitive behavior prompt in the control center interface. The sensitive behavior prompt may include icons that correspond to the device permission in the plurality of pieces of device permission and that are displayed in a folded manner, and a name of a permission visitor accessing device permission with a highest permission priority in the plurality of pieces of device permission. For example, the electronic device 100 finds sensitive behavior of accessing a camera permission, a microphone permission, a media and file permission, and a contact permission in the preset time period before the operation of opening the control center interface. A visitor of the camera permission is the electronic device 200. The electronic device 100 may display a sensitive behavior prompt in the control center interface. The sensitive behavior prompt may include a camera icon, a microphone icon, a media and file icon, and a contact icon, and may further include a name of the visitor with the camera permission (namely, a name of the electronic device 200). The camera icon, the microphone icon, the media and file icon, and the contact icon may be displayed in a folded manner, and the camera icon is displayed at a top level.

It can be learned from the scenario shown in FIG. 7A to FIG. 7C that, when finding that the plurality of pieces of device permission are accessed, the electronic device 100 may display, in the control center interface, the sensitive behavior prompt used to inform that the plurality of pieces of device permission are accessed. The sensitive behavior prompt may further include the name of the permission visitor. In this way, the user can quickly learn of the sensitive behavior in the electronic device 100.

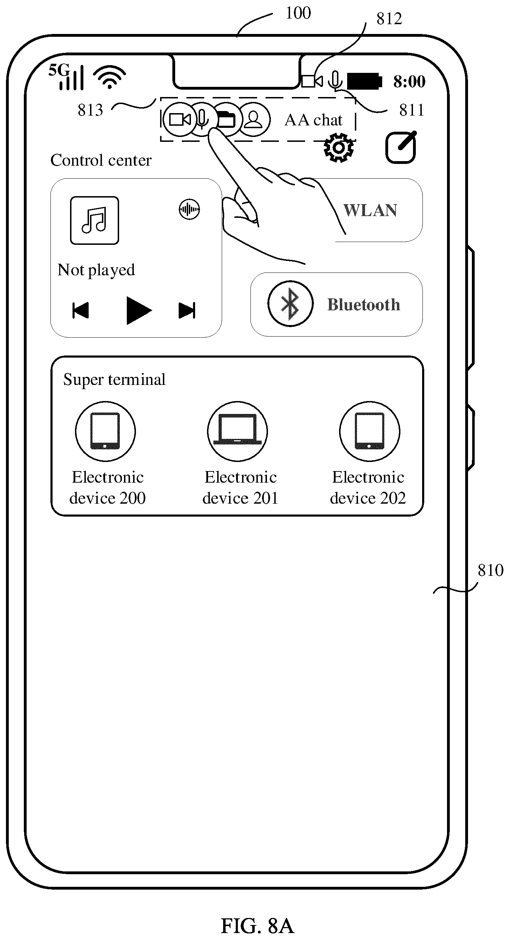

FIG. 8A to FIG. 8C are some other diagrams of an example of a sensitive behavior reminder scenario.

Herein, an example in which the electronic device 100 receives an operation of opening a control center interface in a process in which an AA chat application accesses camera permission and microphone permission of the electronic device 100 is still used for description.

As shown in FIG. 8A, in response to the operation of opening the control center interface, the electronic device 100 may display the control center interface 810. The control center interface 810 may include a sensitive behavior prompt 813, and a microphone icon 811 and a camera icon 812 that are displayed in the status bar. The microphone icon 811 and the camera icon 812 may respectively indicate that the microphone permission and the camera permission are accessed when the electronic device 100 receives the operation of opening the control center interface. The sensitive behavior prompt 813 may include a camera icon, a microphone icon, a media and file icon, and a contact icon that are displayed in a folded manner, and a name of a visitor of the camera permission (for example, a name of the AA chat application "AA chat"). For the sensitive behavior prompt 813, refer to the description of the sensitive behavior prompt 723 shown in FIG. 7C.

In some embodiments, in response to the operation of opening the control center interface, the electronic device 100 may query whether first-type device permission is accessed in a preset time period in which the control center interface is opened. When finding that the first-type device permission is accessed, the electronic device 100 may query whether second-type device permission is accessed in the preset time period. In other words, on the basis that the sensitive behavior prompt displayed in the control center interface includes a device permission icon of the first-type device permission, the electronic device 100 may present, in the sensitive behavior prompt, a device permission icon of the accessed second-type device permission. When finding that no first-type device permission is accessed in the preset time period, the electronic device 100 may not display the sensitive behavior prompt in the control center interface.

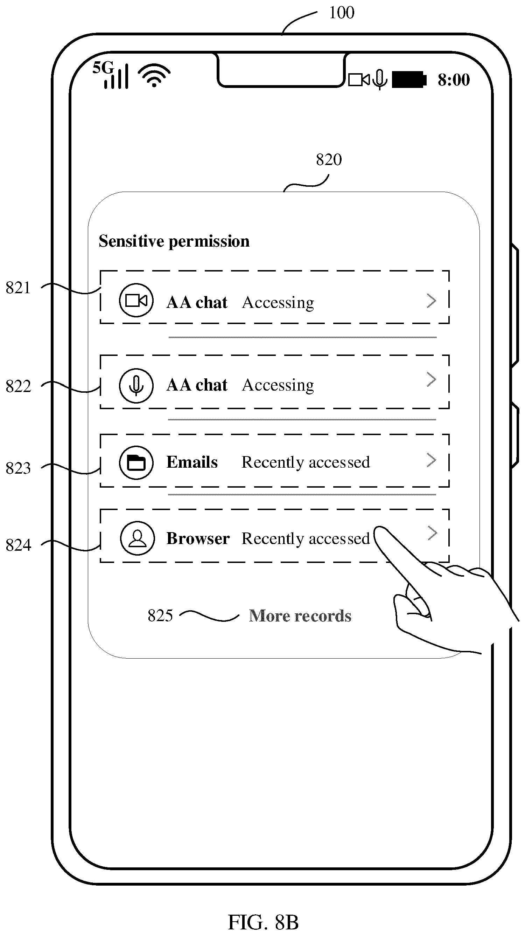

In response to an operation on the sensitive behavior prompt 813, for example, a tap operation, the electronic device 100 may display a permission prompt box 820 shown in FIG. 8B. The permission prompt box 820 may display a specific case in which device permission indicated by the sensitive behavior prompt 813 is accessed.

For example, the sensitive behavior prompt 813 may indicate that the camera permission, the microphone permission, media and file permission, and contact permission are accessed. The permission prompt box 820 may display the specific case in which the camera permission, the microphone permission, the media and file permission, and the contact permission are accessed. The permission prompt box 820 may include permission prompt information 821, permission prompt information 822, permission prompt information 823, and permission prompt information 824. The permission prompt information 821 may indicate that the AA chat application is accessing the camera permission. The permission prompt information 822 may indicate that the AA chat application is accessing the microphone permission. The permission prompt information 823 may indicate that an emails application has recently accessed the media and file permission. The permission prompt information 824 may indicate that a browser application has recently accessed the contact permission.

The permission prompt box 820 may further include a More control 825. The More control 825 may be used to view records of more sensitive behavior in the electronic device 100.

In some embodiments, in response to an operation on the sensitive behavior prompt 813, for example, a tap operation, the electronic device 100 may further query again whether the permission visitor has ended access of permission of one or more devices in the first-type device permission. When finding that the permission visitor still continues to access the first-type device permission, the electronic device 100 may display a text identifier "Accessing" in the permission prompt box 820 shown in FIG. 8B, to indicate that the accessed first-type device permission is in an accessing state. Alternatively, when finding that the permission visitor ends accessing the first-type device permission, the electronic device 100 may display a text identifier "Recently accessed" in the permission prompt box 820 shown in FIG. 8B, to indicate that the accessed first-type device permission has been accessed recently, but the access has ended currently.

It may be understood that, when the operation of opening the control center interface is received, the permission visitor may be accessing the first-type device permission (such as the camera permission and the microphone permission). However, in a process of displaying the control center interface, the permission visitor may end access to the first-type device permission. When the operation on the sensitive behavior prompt 813 is received, the permission visitor may still access the first-type device permission, or may end access to the first-type device permission. The electronic device 100 may determine, based on access data, of the first-type device permission, found when the operation on the sensitive behavior prompt 813 is received, whether to display "Accessing" or "Recently accessed" in the permission prompt box 820 shown in FIG. 8B.

For example, when receiving the operation on the sensitive behavior prompt 813, the electronic device 100 may query whether the AA chat application is still accessing the camera permission and the microphone permission. When finding that the AA chat application is still accessing the camera permission and the microphone permission, the electronic device 100 may display, in the permission prompt information 821 and the permission prompt information 822, the text identifier "Accessing" shown in FIG. 8B. Alternatively, when finding that the AA chat application has ended access of the camera permission and the microphone permission, the electronic device 100 may display "Accessing" in the permission prompt information 821 and the permission prompt information 822 shown in FIG. 8B as the text identifier "Recently accessed".

In some embodiments, the permission prompt information in the permission prompt box 820 may be used to trigger the electronic device 100 to display a device permission management interface, so that a user manages the device permission.

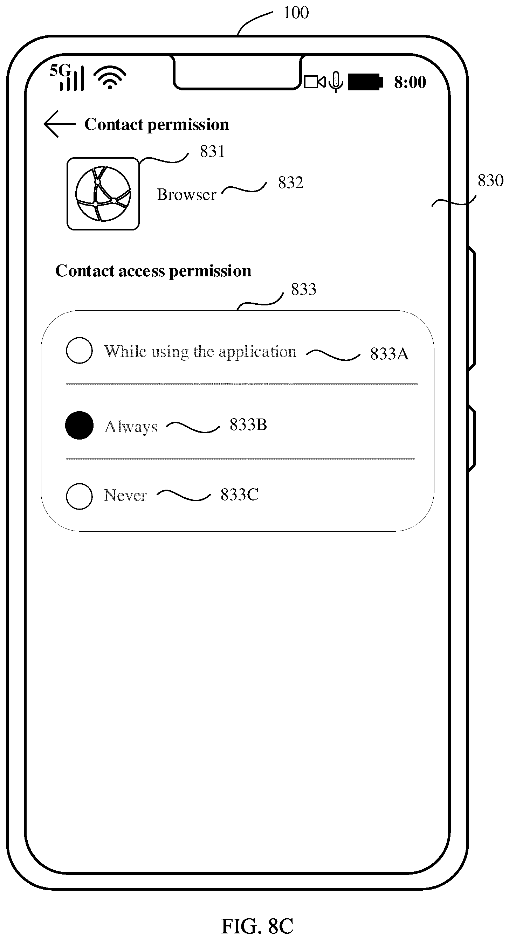

As shown in FIG. 8B, in response to an operation on the permission prompt information 824, the electronic device 100 may display a user interface 830 shown in FIG. 8C.

As shown in FIG. 8C, the user interface 830 may include a browser application icon 831, a browser application name 832, and a permission management box 833. The permission management box 833 may include a While using the application control 833A, an Always control 833B, and a Never control 833C. The While using the application control 833A may be used to adjust a condition for the browser application to access the contact permission. For example, when the While using the application control 833A is in a selected state, the electronic device 100 may allow the browser application to access the contact permission and obtain the contact information only during foreground running. The Always control 833B may be used to adjust a condition for the browser application to access the contact permission, so that the browser application can access the contact permission under any condition. The Never control 833C may be used to prohibit the browser application from accessing the contact permission.

It can be learned from the foregoing scenario shown in FIG. 8A to FIG. 8C that the user can quickly learn of, by opening the control center interface, which device permission of the electronic device 100 is accessed. The accessed device permission may include the first-type device permission such as the camera permission, the microphone permission, and the location permission, and may further include the second-type device permission such as the contact permission, and the media permission and file permission. In addition, the user can further quickly view, based on the sensitive behavior prompt in the control center interface, the specific case in which each device permission is accessed (for example, the permission visitor, and whether the permission is recently accessed or accessing). In addition, the user can quickly manage the permission visitor based on the sensitive behavior prompt in the control center interface, and adjust the condition for the device permission visitor to access the device permission. This can help the user manage the device permission conveniently and quickly, reduce abuse of the device permission, and improve security of user privacy information.

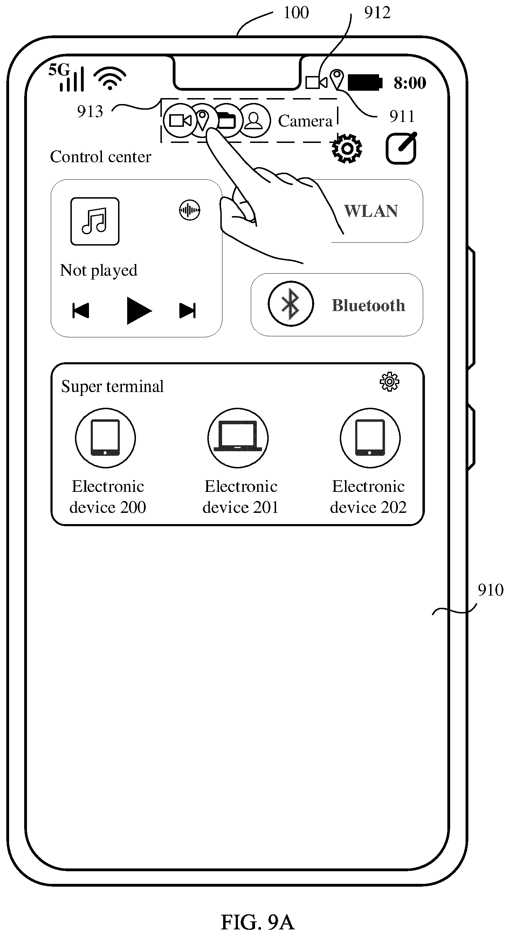

FIG. 9A to FIG. 9C are some other diagrams of an example of a sensitive behavior reminder scenario.

Herein, an example in which the electronic device 100 receives an operation of opening a control center interface in a process in which a camera application accesses camera permission of the electronic device 100 and a browser application and a maps application are accessing location permission of the electronic device 100 is used for description.

As shown in FIG. 9A, in response to the operation of opening the control center interface, the electronic device 100 may display the control center interface 910. The control center interface 910 may include a sensitive behavior prompt 913, and a location icon 911 and a camera icon 912 that are displayed in the status bar. The location icon 911 and the camera icon 912 may respectively indicate that the location permission and the camera permission are accessed when the electronic device 100 receives the operation of opening the control center interface. The sensitive behavior prompt 913 may include a camera icon, a location icon, a media and file icon, a contact icon that are displayed in a folded manner, and a name of a visitor of the camera permission (for example, a name "Camera" of the camera application). For the sensitive behavior prompt 913, refer to the description of the sensitive behavior prompt 723 shown in FIG. 7C.

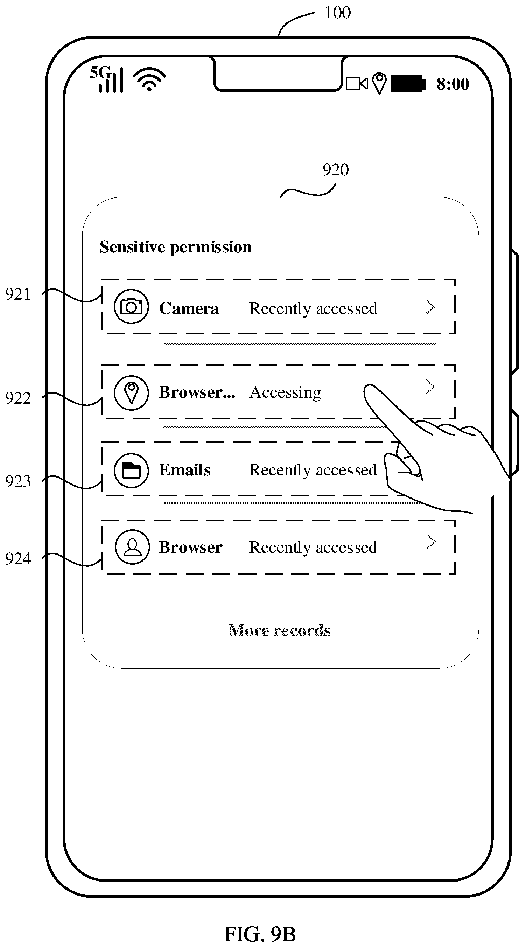

In response to an operation on the sensitive behavior prompt 913, for example, a tap operation, the electronic device 100 may display a permission prompt box 920 shown in FIG. 9B.

As shown in FIG. 9B, the permission prompt box 920 may include permission prompt information 921, permission prompt information 922, permission prompt information 923, and permission prompt information 924. The permission prompt information 921 may indicate that the camera application has recently accessed the camera permission. The permission prompt information 922 may indicate that a plurality of permission visitors such as the browser application are accessing the location permission. The permission prompt information 923 may indicate that an emails application has recently accessed media and file permission. The permission prompt information 924 may indicate that the browser application has recently accessed the contact permission.

It can be learned from the foregoing embodiment that, when receiving an operation on the sensitive behavior prompt 913, the electronic device 100 may further query whether the permission visitor has ended access of first-type device permission. For example, the electronic device 100 finds that when receiving the operation of opening the control center interface, device permission that is being accessed includes the camera permission and the location permission. In this case, when receiving the operation on the sensitive behavior prompt 913, the electronic device 100 may query whether the permission visitor has ended access of the camera permission and the location permission. When finding that the permission visitor has ended access of the camera permission, the electronic device 100 may display the permission prompt information 921 shown in FIG. 9B. The permission prompt information 921 may include a text identifier "Recently accessed", to indicate that the camera application has recently accessed the camera permission, but the access has ended currently. When finding that the permission visitor has not ended access of the location permission, the electronic device 100 may display the permission prompt information 922 shown in FIG. 9B. The permission prompt information 922 may include a text identifier "Accessing", to indicate that a plurality of permission visitors such as the browser application are accessing the location permission.

It can be seen that when one piece of device permission is accessed by a plurality of permission visitors, the electronic device 100 may display, in the permission prompt box 920 shown in FIG. 9B, a name of a permission visitor whose access time is closest to current time, and append a text identifier "..." to the name, to indicate that the plurality of permission visitors access the device permission. For example, when finding that both the browser application and the maps application access the location permission, the electronic device 100 may display the permission prompt information 922 shown in FIG. 9B. The permission prompt information 922 may include a text identifier "Browser...", to indicate a plurality of permission visitors including the browser application access the location permission.

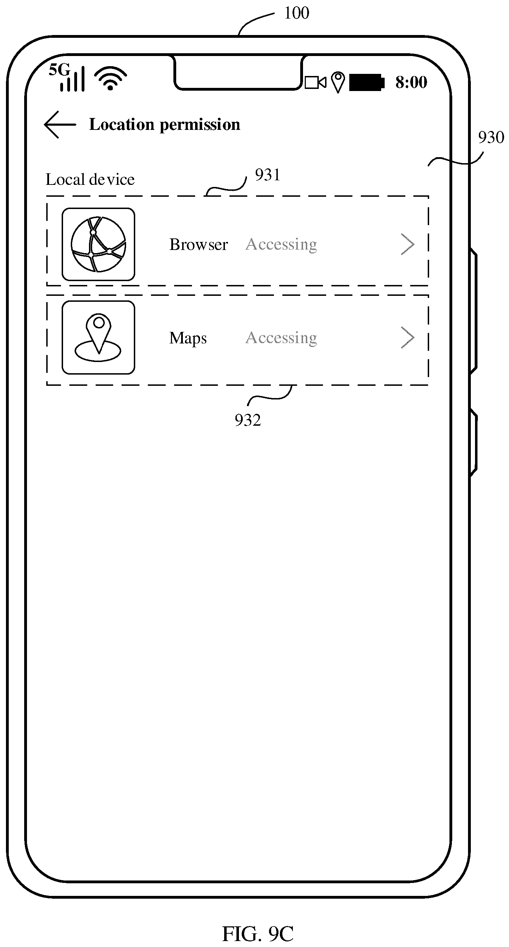

In response to an operation on the permission prompt information 922, for example, a tap operation, the electronic device 100 may display a user interface 930 shown in FIG. 9C.

As shown in FIG. 9C, the user interface 930 may include a browser option 931 and a maps option 932. The browser option 931 may be used to trigger the electronic device 100 to open a user interface for managing the browser application to access the location permission. The maps option 932 may be used to trigger the electronic device 100 to open a user interface for managing the maps application to access the location permission. For the user interface for managing the browser application or the maps application to access the location permission, refer to the user interface 830 shown in FIG. 8C for managing the browser application to access the contact permission.

It may be understood that both the browser application and the maps application that access the location permission are applications on the electronic device 100. If the permission visitors that access the location permission further include an electronic device other than the electronic device 100, for example, an electronic device 200, the electronic device 100 may further display, in the user interface 930 shown in FIG. 9C, an option corresponding to the electronic device 200, so that the user opens a user interface for managing the electronic device 200 to access the location permission of the electronic device 100.

It can be learned from the scenario shown in FIG. 9A to FIG. 9C that, when one piece of device permission is accessed by the plurality of permission visitors, the electronic device 100 may provide a sensitive behavior reminder to inform the user of names of the plurality of permission visitors and that the device permission is accessed by the plurality of permission visitors. Therefore, the user can conveniently better learn of an access status of the device permission of the electronic device 100, so that the user can know and control sensitive behavior in the electronic device 100.

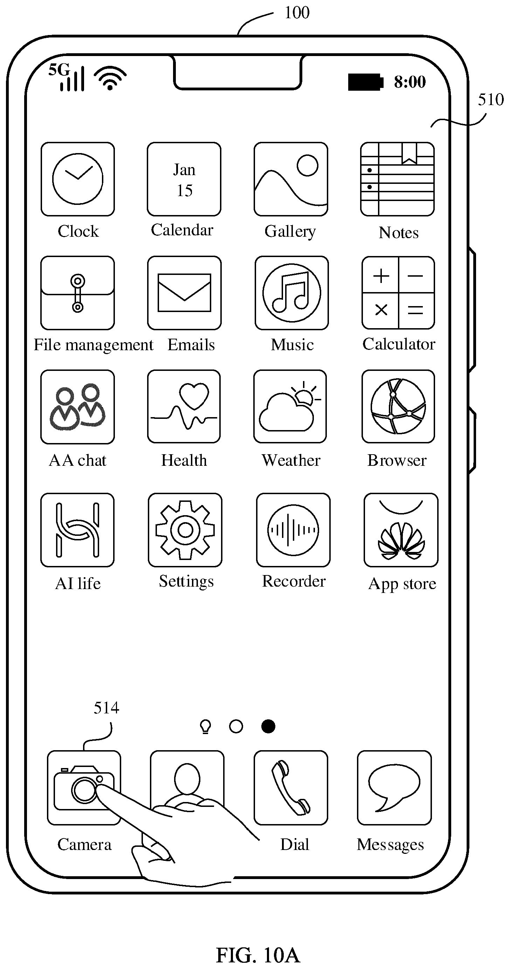

FIG. 10A to FIG. 10L are diagrams of an example of a cross-device sensitive behavior reminder scenario.

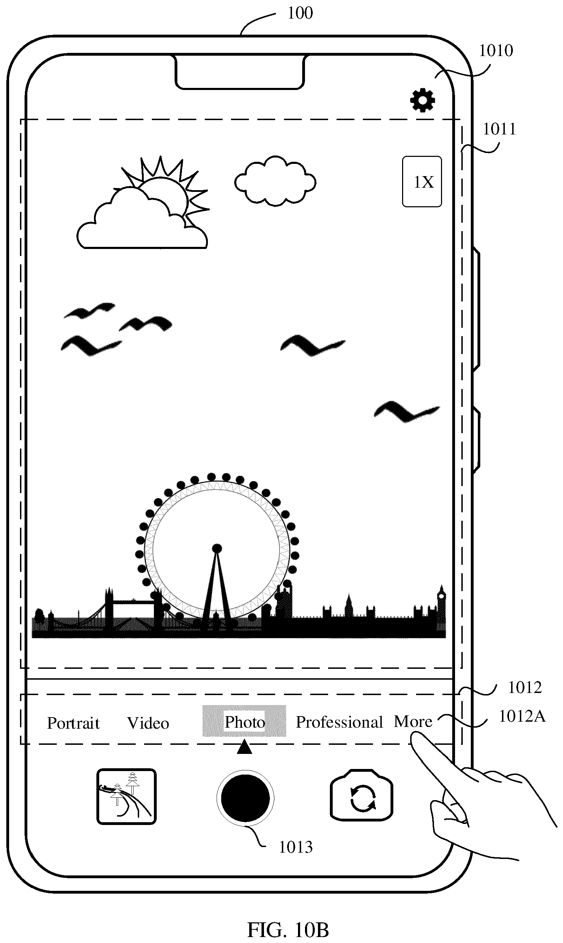

As shown in FIG. 10A, the electronic device 100 may display the user interface 510. The user interface 510 may include the camera application icon 514. In response to an operation on the camera application icon 514, for example, a tap operation, the electronic device 100 may start a camera application, and display a user interface 1010 shown in FIG. 10B. The user interface 1010 may be a shooting interface of the camera application.

As shown in FIG. 10B, the user interface 1010 may include a preview area 1011, a mode selection area 1012, and a shutter control 1013. The preview area 1011 may be used to display an image captured by using a camera. The mode selection area 1012 may include a plurality of shooting mode options, for example, a Video option, a Photo option, a Professional option, and a More option 1012A. The shutter control 1012 may be used to perform shooting. For example, when the Photo option is in a selected state, the electronic device 100 may save, to a gallery in response to an operation on the shutter control 1012, an image displayed in the preview area 1011.

It should be noted that, when the camera application is started, the camera application may access camera permission of the electronic device 100, to capture an image by using the camera of the electronic device 100.

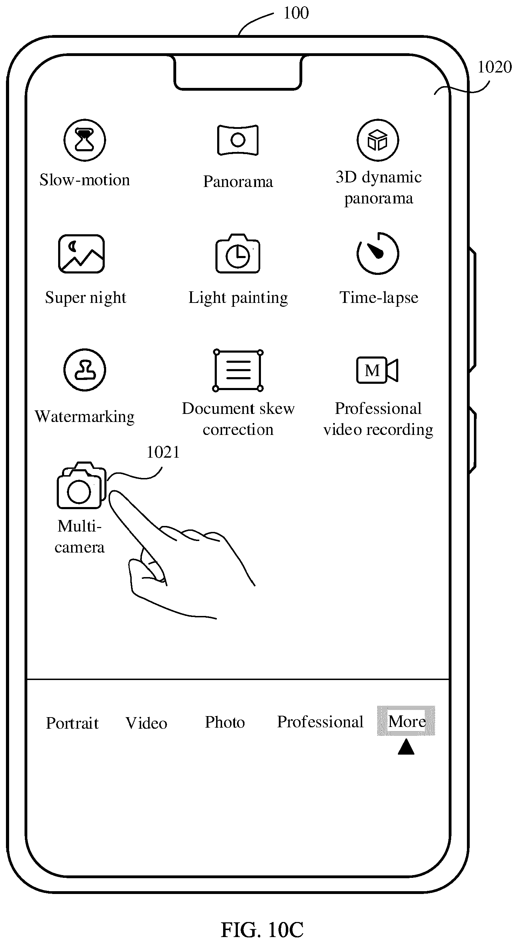

The More option 1012A may be used by a user to select more other shooting mode options. In response to an operation on the More option shown in FIG. 10B, the electronic device 100 may display a user interface 1020 shown in FIG. 10C.

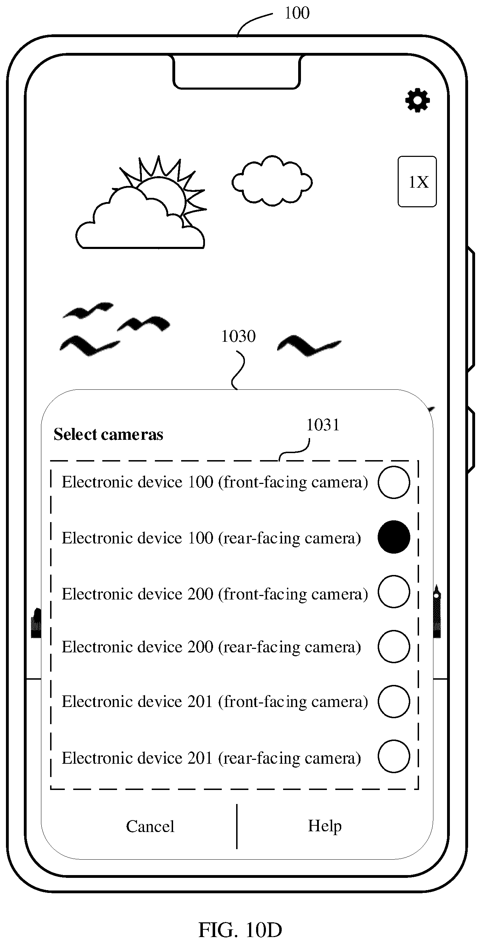

As shown in FIG. 10C, the user interface 1020 may include a plurality of shooting mode options, for example, a multi-camera option 1021. The multi-camera option 1021 may be used to trigger the electronic device 100 to invoke a camera of another electronic device to capture an image. In response to an operation on the multi-camera option 1021, for example, a tap operation, the electronic device 100 may display a camera selection box 1030 shown in FIG. 10D.

As shown in FIG. 10D, the camera selection box 1030 may include a camera selection area 1031. A plurality of camera options may be displayed in the camera selection area 1031, for example, an electronic device 100 (front-facing camera) option, an electronic device 100 (rear-facing camera) option, an electronic device 200 (front-facing camera) option, and an electronic device 200 (rear-facing camera) option. The electronic device 100 (front-facing camera) option may have a text identifier "Electronic device 100 (front-facing camera)". The electronic device 100 (rear-facing camera) option may have a text identifier "Electronic device 100 (rear-facing camera)". The electronic device 200 (front-facing camera) option may have a text identifier "Electronic device 200 (front-facing camera)". A text identifier of the camera option is not specifically limited in embodiments of this application.

When a camera option is in a selected state, the electronic device 100 may display, in the preview area 1011 shown in FIG. 10B, an image captured by using a camera corresponding to the camera option. As shown in FIG. 10D, when the electronic device 100 (rear-facing camera) is in a selected state, it may indicate that the electronic device 100 currently captures an image by using a rear-facing camera of the electronic device 100. The electronic device 100 may display, in the preview area 1011, the image captured by using the rear-facing camera of the electronic device 100. In other words, the user may select one or more camera options in the camera selection box 1030 to perform shooting.

In a possible implementation, when receiving an operation on the multi-camera option 1021, the electronic device 100 may search for an electronic device configured with a camera. The electronic device 100 may display, in the camera selection box 1030 shown in FIG. 10D based on a search result, a camera option corresponding to a found electronic device.

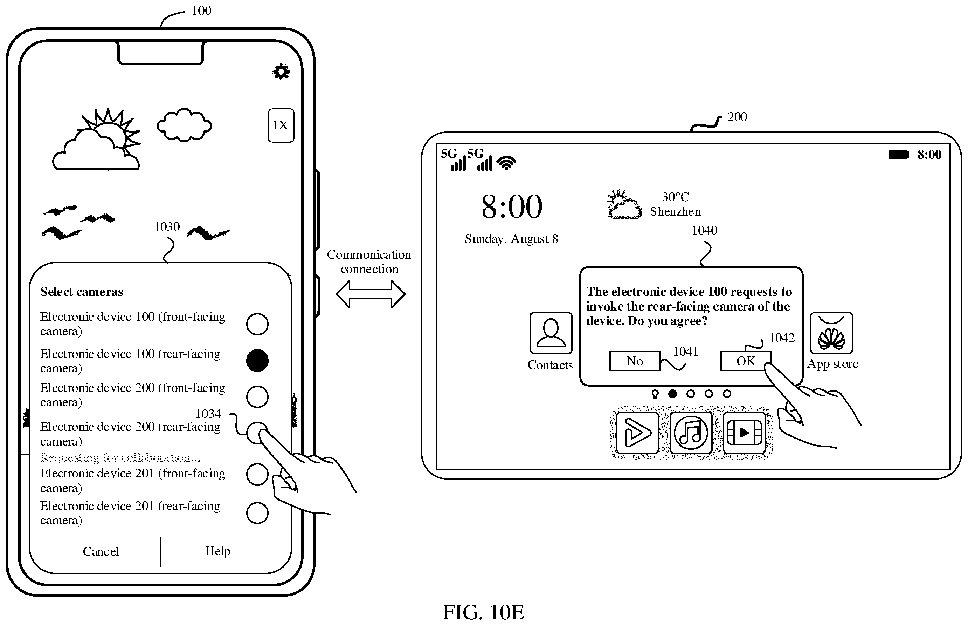

As shown in FIG. 10E, in response to an operation on a camera option 1034, for example, a tap operation, the electronic device 100 may request to access camera permission of an electronic device 200, and invoke a rear-facing camera of the electronic device 200 to capture an image. The camera option 1034 may be the electronic device 200 (rear-facing camera) option.

When receiving, from the electronic device 100, the request for access of the camera permission, the electronic device 200 may display a request prompt box 1040 shown in FIG. 10E. The request prompt box 1040 may be used to inform a user that the electronic device 100 requests to access the camera permission of the electronic device 200, invokes the rear-facing camera of the electronic device 200, and query whether the user agrees. The request prompt box 1040 may include a No control 1041 and an OK control 1042. The No control 1041 may be used to reject the electronic device 100 to access the camera permission of the electronic device 200. The OK control 1042 may be used to allow the electronic device 100 to access the camera permission of the electronic device 200.

In a process in which the electronic device 100 requests to access the camera permission of the electronic device 200, the electronic device 100 may further display a text identifier "Requesting for collaboration..." at a location corresponding to the camera option 1034 in the camera selection box 1030 shown in FIG. 10E. The text identifier may remind the user to wait for the electronic device 100 to invoke the camera of the electronic device 200. Specific content of the text identifier is not limited in embodiments of this application.

In response to an operation on the OK control 1042 shown in FIG. 10E, the electronic device 200 may start the rear-facing camera to capture an image, and send the captured image to the electronic device 100.

In some embodiments, the electronic device 200 may not display the request prompt box 1040 shown in FIG. 10E. Specifically, when receiving, from the electronic device 100, the request for access of the camera permission, the electronic device 200 may directly start the rear-facing camera to capture an image, and send the captured image to the electronic device 100.

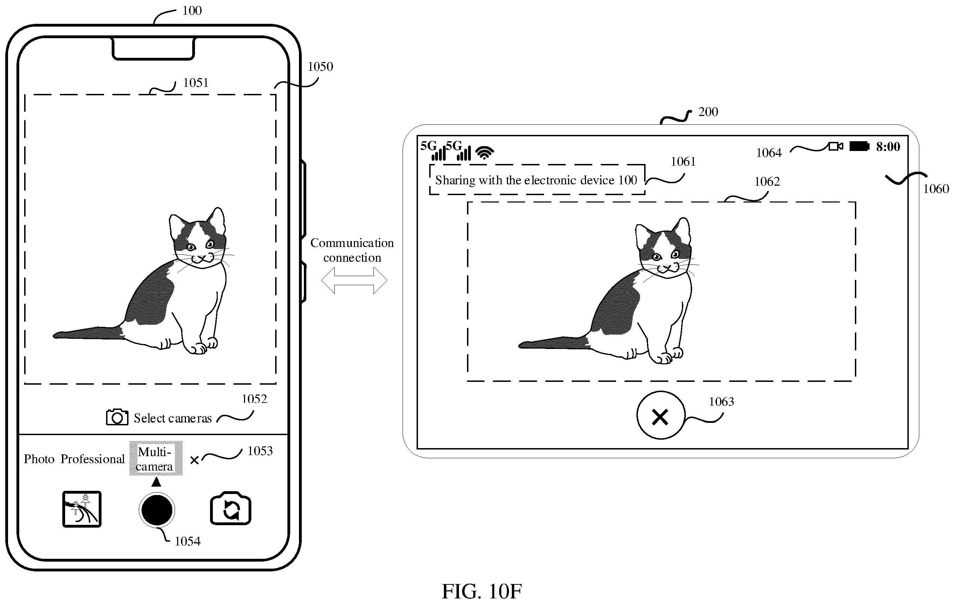

As shown in FIG. 10F, the electronic device 200 may display a user interface 1060. The user interface 1060 may include a text prompt 1061, a preview area 1062, and a close control 1063. Content of the text prompt 1061 may be "Sharing with the electronic device 100", and may indicate that the electronic device 200 is sharing, with the electronic device 100, the image captured by using the camera. The preview area 1062 may display the image captured by using the camera of the electronic device 200. The close control 1063 may be used to stop sharing, with the electronic device 100, the image captured by using the camera of the electronic device 200. The user interface 1060 may further include a status bar. A camera icon 1064 may be displayed in the status bar. The camera icon 1064 may indicate that the camera permission of the electronic device 200 is being accessed.

When receiving the image shared by the electronic device 200, the electronic device 100 may display a user interface 1050 shown in FIG. 10F. The user interface 1050 may include a preview area 1051, a camera selection control 1052, and a multi-camera function close control 1053. The preview area 1051 may display the image shared by the electronic device 200 with the electronic device 100.

The camera selection control 1052 may be used to select a camera capturing an image. In response to an operation on the camera selection control 1052, the electronic device 100 may search for an electronic device configured with a camera, and display, based on a search result, the camera selection box 1030 shown in FIG. 10E. In this way, the user can select different electronic devices to capture images, and experience a multi-camera shooting function.

The multi-camera function close control 1053 may be used to close a multi-camera function. In response to an operation on the multi-camera function close control 1053, the electronic device 100 may end access to the camera permission of the another electronic device (for example, the electronic device 200), and display, in the preview area 1051, an image captured by using a camera of the electronic device 100.

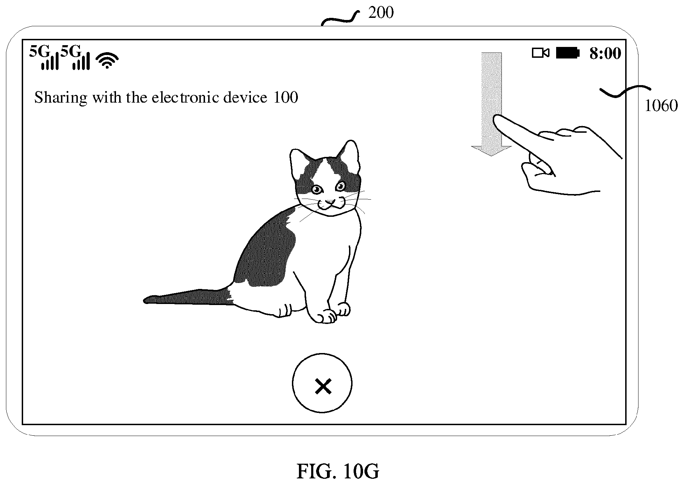

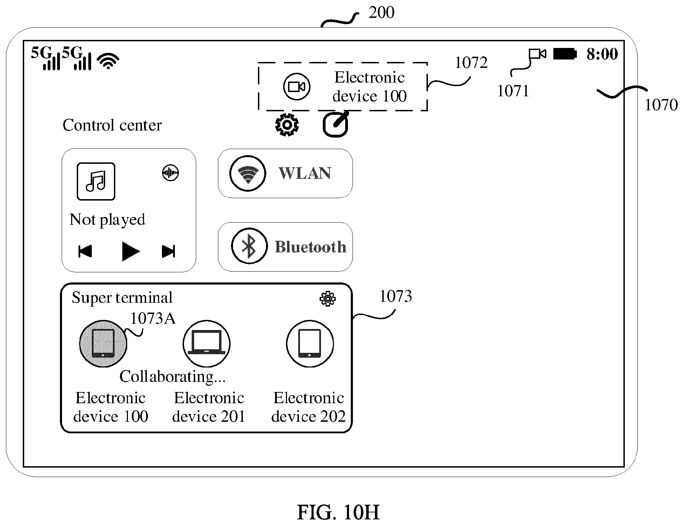

As shown in FIG. 10G, in response to an operation of opening a control center interface, the electronic device 100 may display a control center interface 1070 shown in FIG. 10H. The operation of opening the control center interface may be, for example, an operation of sliding downward from a top right side of a screen of the electronic device 200. The foregoing operation of opening the control center interface is not limited in embodiments of this application.

As shown in FIG. 10H, the control center interface 1070 may include a sensitive behavior prompt 1072 and a camera icon 1071 displayed in the status bar. For displaying, by the electronic device 200, the sensitive behavior prompt 1072, refer to the description of displaying, by the electronic device 100, the sensitive behavior prompt in the control center interface in the foregoing embodiment. Details are not described herein again.

In some embodiments, the control center interface 1070 may further include a super terminal card 1073. The super terminal card 1073 may include device icons of one or more electronic devices, for example, an icon 1073A of the electronic device 100, an icon of an electronic device 201, and an icon of an electronic device 202. In the super terminal card 1073, a display style of a device icon of an electronic device that establishes a cooperative connection to the electronic device 200 may be different from a display style of a device icon of an electronic device that does not establish a cooperative connection to the electronic device 200. For example, the device icon of the electronic device that establishes the cooperative connection to the electronic device 200 may have a dark-color display style, and the device icon of the electronic device that does not establish the cooperative connection to the electronic device 200 may have a light-color display style. A display style of the device icon in the super terminal card 1073 is not limited in embodiments of this application.

It can be learned from the foregoing embodiment shown in FIG. 10E to FIG. 10G that the electronic device 100 invokes the camera of the electronic device 200 to capture the image. To be specific, a cooperative connection is established between the electronic device 100 and the electronic device 200. The icon 1073A of the electronic device 100 may be displayed in a dark-color display style. In addition, a text identifier "collaborating" may be displayed at a location corresponding to the icon 1073A of the electronic device 100, to inform the user that the electronic device 200 is working cooperatively with the electronic device 100.

In some embodiments, when the cooperative connection is established between the electronic device 100 and the electronic device 200, in response to an operation on the icon 1073A of the electronic device 100, for example, a tap operation, the electronic device 200 may stop cooperating with the electronic device 100. For example, the electronic device 200 shares, with the electronic device 100, the image captured by using the camera. When receiving the operation on the icon 1073A of the electronic device 100, the electronic device 200 may stop sharing, with the electronic device 100, the image captured by using the camera.

In some embodiments, the electronic device 100 accesses device permission (such as the camera permission) of the electronic device 200, and the electronic device 100 may also provide a sensitive behavior reminder to remind the user that the electronic device 100 is accessing device permission of another electronic device.

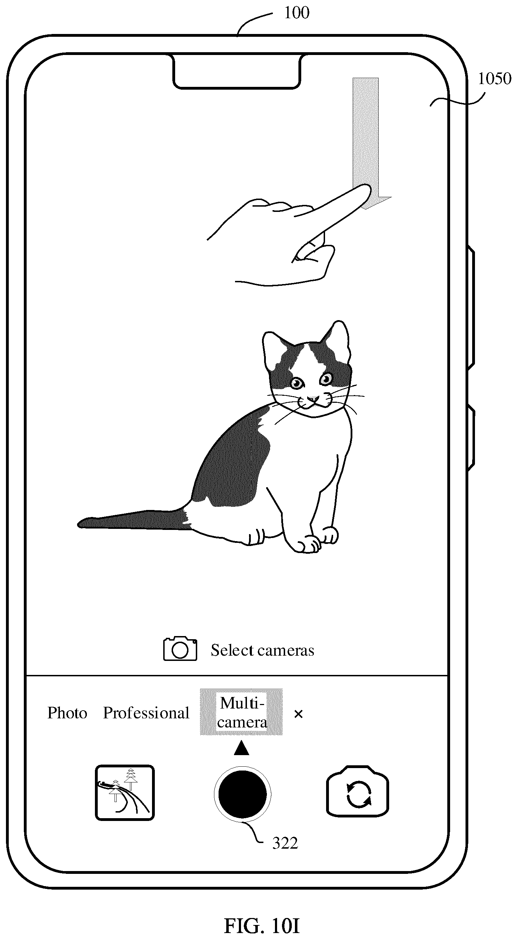

FIG. 10I to FIG. 10L are a diagram of a scenario in which the electronic device 100 accesses the camera permission of an electronic device 200 and provides the sensitive behavior reminder.

As shown in FIG. 10I, when accessing the camera permission of the electronic device 200, the electronic device 100 may display a user interface 1050. The user interface 1050 may display the image captured by using the camera of the electronic device 200. For a method for accessing the camera permission of the electronic device 200 by the electronic device 100, refer to the description of the foregoing embodiment.

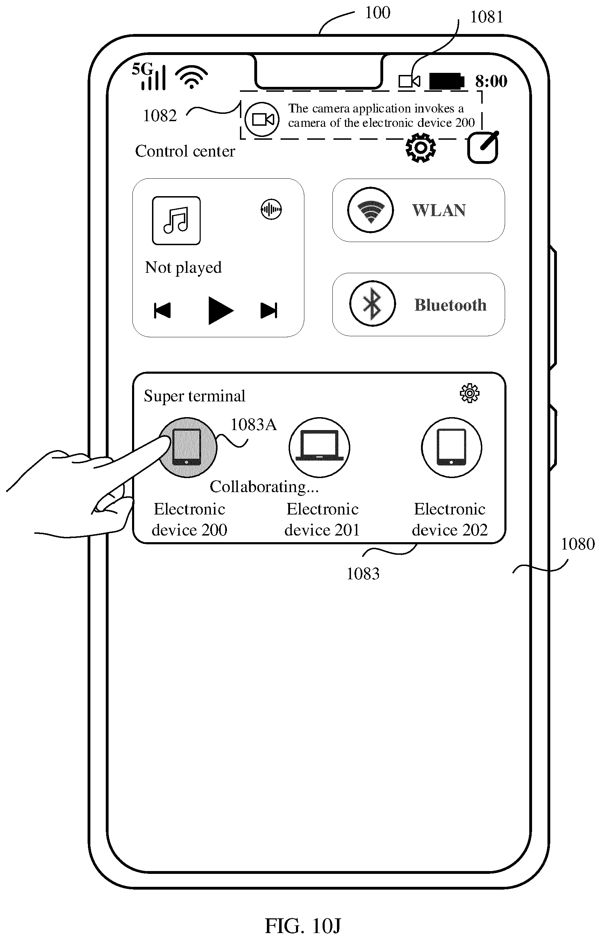

**In** response to an operation of opening a control center interface shown in FIG. 10I, the electronic device 100 may display the control center interface 1080 shown in FIG. 10J. The control center interface 1080 may include a sensitive behavior prompt 1082 and a camera icon 1081 displayed in the status bar. The camera icon 1081 may indicate that the camera permission is accessed. The sensitive behavior prompt 1082 may include a camera icon of the accessed camera permission, and a text identifier "The camera application invokes the camera of the electronic device 200". The sensitive behavior prompt 1082 may inform the user that the camera application on the electronic device 100 invokes the camera of the electronic device 200 when accessing the camera permission of the electronic device 200.

**In** some embodiments, in response to the operation of opening the control center interface, the electronic device 100 may query which device permission of the electronic device 100 is accessed in a preset time period before the operation of opening the control center interface, and query whether the electronic device 100 accesses device permission of another electronic device in the preset time period. For example, in addition to finding that the electronic device 100 accesses the camera permission of the electronic device 200 in the preset time period, the electronic device 100 further finds that a plurality of pieces of device permission of the electronic device 100 are accessed in the preset time period. In this case, in addition to the camera icon shown in FIG. 10J, the sensitive behavior prompt 1082 displayed by the electronic device 100 in the control center interface 1080 shown in FIG. 10J may further include icons corresponding to device permission in the plurality of pieces of accessed device permission of the electronic device 100. This can help the user quickly know and control sensitive behavior of an application on the device and cross-device sensitive behavior.

As shown in FIG. 10J, the control center interface 1080 may further include a super terminal card 1083. The super terminal card 1083 may include an icon of an electronic device, for example, an icon 1083A of the electronic device 200. For a display style of the icon of the electronic device in the super terminal card 1083, refer to the description of the super terminal card 1073 shown in FIG. 10H.

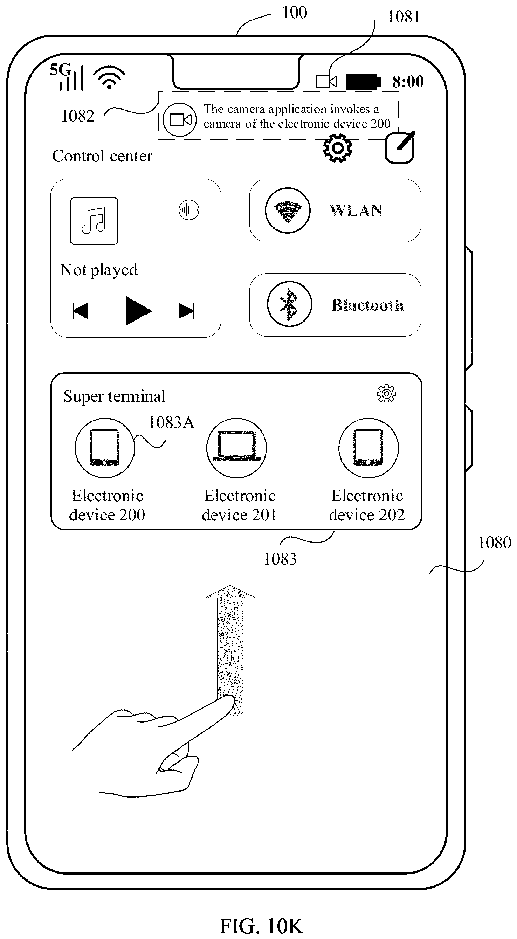

The electronic device 100 is currently invoking the camera of the electronic device 200. That is, the electronic device 100 and the electronic device 200 are currently collaborating. The icon 1083A of the electronic device 200 in the super terminal card 1083 may be displayed in a dark-color display style shown in FIG. 10J. In response to an operation on the icon 1083A of the electronic device 200 shown in FIG. 10J, the electronic device 100 may stop collaboration with the electronic device 200, and display the icon 1083A of the electronic device 200 in a light-color display style shown in FIG. 10K. In other words, the electronic device 100 may end access to the camera permission of the electronic device 200.

It should be noted that, in some embodiments, when the control center interface 1080 is displayed, both the sensitive behavior prompt 1082 and the camera icon 1081 displayed in the status bar may be in a frozen state. Therefore, when the electronic device 100 ends accessing the camera permission of the electronic device 200 based on the operation on the icon 1083A of the electronic device 100 shown in FIG. 10J, the electronic device 100 may still keep the sensitive behavior prompt 1082 and the camera icon 1081 displayed in the control center interface 1080.

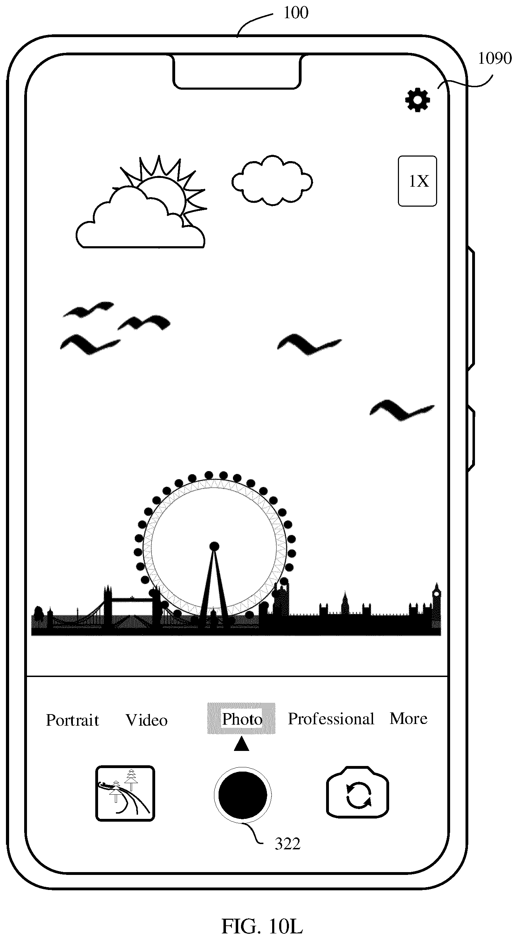

As shown in FIG. 10K, in response to an operation of collapsing the control center interface, the electronic device 100 may display a user interface 1090 shown in FIG. 10L. The operation of collapsing the control center interface may be, for example, an operation of sliding upward from the bottom of the screen of the electronic device 100. The foregoing operation of collapsing the control center interface is not limited in embodiments of this application.

As shown in FIG. 10K, the user interface 1090 may be a shooting interface of the camera application. Because the electronic device 100 has ended accessing the camera of the electronic device 200, the electronic device 100 may display, in the user interface 1090, the image captured by using the camera (for example, the rear-facing camera) of the electronic device 100. For the user interface 1090, refer to the description of the embodiment shown in FIG. 10B. Details are not described herein again.

It can be learned from the scenario shown in FIG. 10A to FIG. 10L that the electronic device 100 may access the device permission of the another electronic device, for example, the electronic device 200, across devices. When the electronic device 100 accesses the device permission of the electronic device 200, both the electronic device 100 and the electronic device 200 may provide the sensitive behavior reminder. In this way, the user can quickly view, on the electronic device 100, cross-device sensitive behavior of the electronic device 100. The user can also learn of, on the electronic device 200, which device permission of the electronic device 200 is accessed. In addition, the user can further end the cross-device sensitive behavior on either of the electronic device 100 and the electronic device 200.

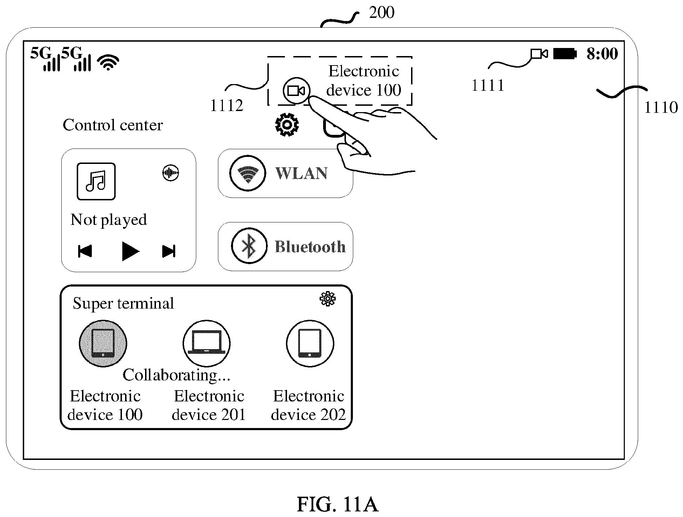

FIG. 11A to FIG. 11C are some diagrams of an example of a sensitive behavior management scenario.

As shown in FIG. 11A, the electronic device 200 may display a control center interface 1110. The control center interface 1110 may include a sensitive behavior prompt 1112 and a camera icon 1111 displayed in the status bar. For the control center interface 1110, refer to the description of the control center interface 1070 shown in FIG. 10H. Details are not described herein again.

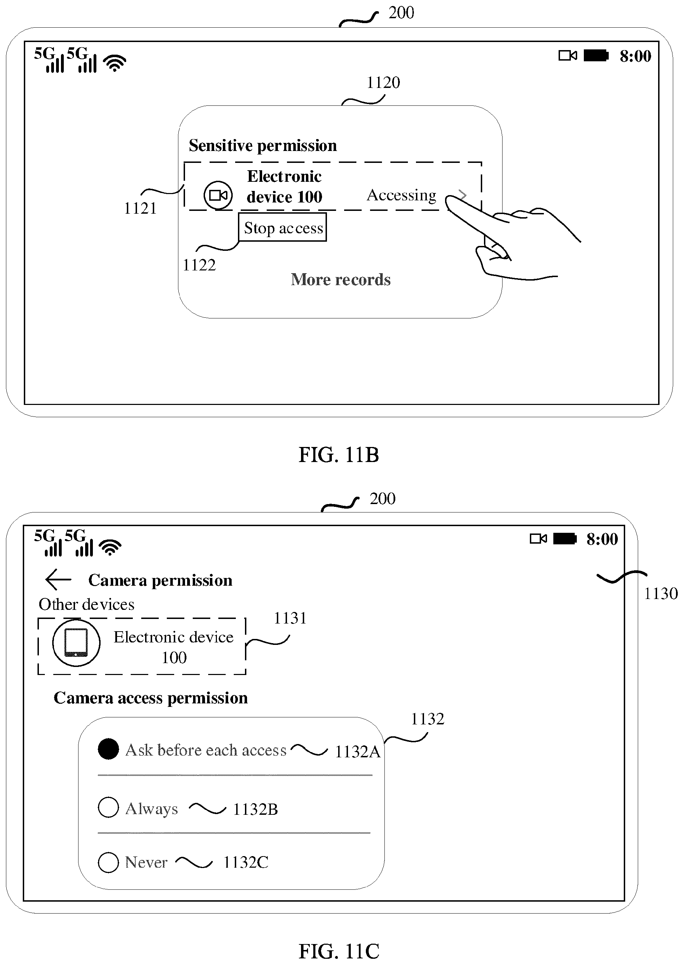

In response to an operation on the sensitive behavior prompt 1112, for example, a tap operation, the electronic device 200 may display a permission prompt box 1120 shown in FIG. 11B.

As shown in FIG. 11B, the permission prompt box 1120 may include permission prompt information 1121 and a stop control 1122. The permission prompt information 1121 may indicate that the electronic device 100 is accessing the camera permission of the electronic device 200. The stop control 1122 may be used to end access to the camera permission of the electronic device 200 by the electronic device 100. In response to an operation on the stop control 1122, the electronic device 200 may stop sharing, with the electronic device 100, the image captured by using the camera.

In a possible implementation, when receiving an operation on the sensitive behavior prompt 1112, the electronic device 200 may query whether first-type device permission of the electronic device 200 is still being accessed. For example, when finding that the electronic device 100 is still accessing the camera permission, the electronic device 200 may display, in the permission prompt box 1120, a text identifier "Accessing" shown in FIG. 11B, to indicate that the electronic device 100 is accessing the camera permission of the electronic device 200. Alternatively, when finding that the electronic device 100 ends accessing the camera permission, the electronic device 200 may adjust, in the permission prompt box 1120, "Accessing" shown in FIG. 11B to a text identifier "Recently accessed", to indicate that the electronic device 100 has recently accessed the camera permission of the electronic device 200, but has ended access of the camera permission of the electronic device 200.

In response to an operation on the permission prompt information 1121 shown in FIG. 11B, for example, a tap operation, the electronic device 200 may display a user interface 1130 shown in FIG. 11C.

As shown in FIG. 11C, the user interface 1130 may include an identifier 1131 of the electronic device 100 and a permission management box 1132. The identifier 1131 of the electronic device 100 may include identifier information such as a device icon and a device name of the electronic device 100. The permission management box 1132 may include an Ask before each access control 1132A, an Always control 1132B, and a Never control 1132C. The Ask before each access control 1132A may be used to adjust a condition for the electronic device 100 to access the camera permission of the electronic device 200, so that the electronic device 200 displays a prompt message each time the electronic device 100 accesses the camera permission. This obtains consent of the user of the electronic device 200. For displaying the prompt message by the electronic device 200, refer to the request prompt box 1040 shown in FIG. 10E. The Always control 1132B may be used to invoke a condition for the electronic device 100 to access the camera permission of the electronic device 200, so that the electronic device 200 can directly agree to a request for the camera permission of the electronic device 100 without displaying a prompt message. The Never control 1132C may be used to reject the electronic device 100 to access the camera permission of the electronic device 200. When the Never control 1132C is in a selected state, the electronic device 200 may directly reject a request each time receiving, from the electronic device 100, the request for accessing the camera permission.

It can be learned from the foregoing scenario shown in FIG. 11A to FIG. 11C that a user can quickly learn of, by opening the control center interface, which device permission of the electronic device 200 is accessed. The accessed device permission may include first-type device permission such as the camera permission, a microphone permission, and a location permission, and may further include second-type device permission such as a contact permission, and a media permission and file permission. In addition, the user can further quickly view, based on the sensitive behavior prompt in the control center interface, a specific case in which each device permission is accessed (for example, a permission visitor, and whether the permission is recently accessed or accessing). In addition, the user can quickly manage the permission visitor based on the sensitive behavior prompt in the control center interface, and adjust the condition for the device permission visitor to access the device permission. The permission visitor may be an application on the electronic device 200, or may be an electronic device other than the electronic device 200. This can help the user manage the device permission conveniently and quickly, reduce abuse of the device permission, and improve security of user privacy information.

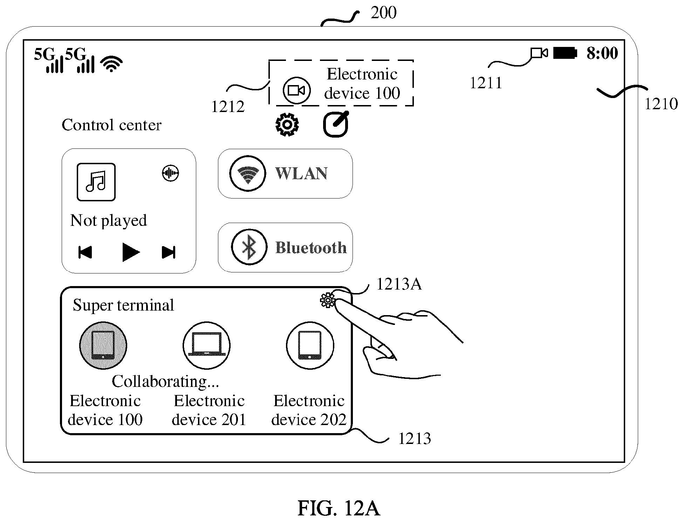

FIG. 12A to FIG. 12C are some other diagrams of an example of a sensitive behavior management scenario.

Herein, an example in which the electronic device 100 accesses camera permission of the electronic device 200 is still used for description.

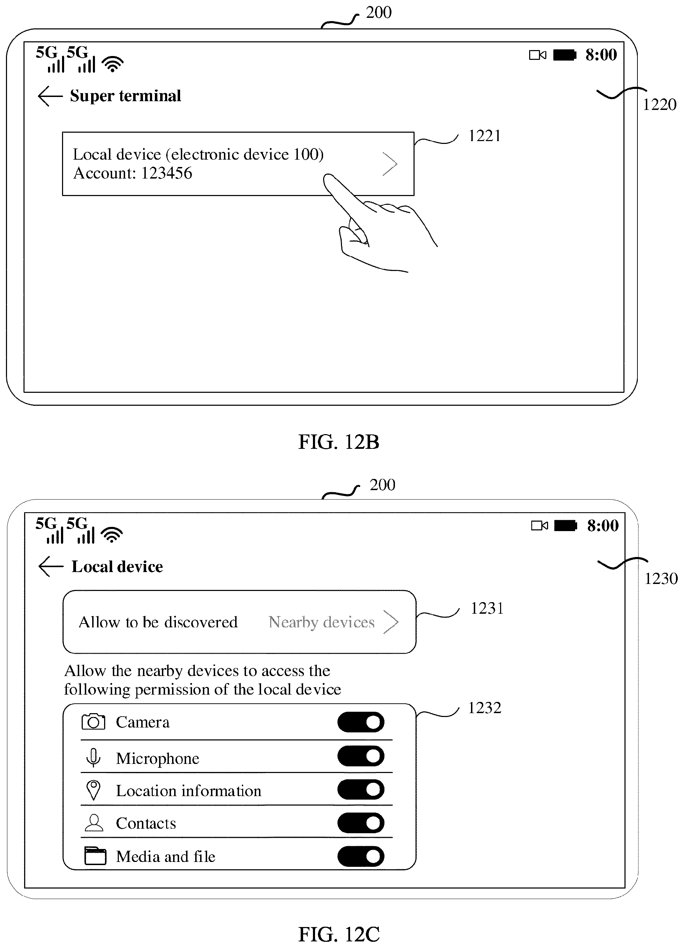

As shown in FIG. 12A, the electronic device 200 may display a control center interface 1210. The control center interface 1210 may include a sensitive behavior prompt 1212 and a camera icon 1211 displayed in the status bar. The sensitive behavior prompt 1212 may be used to inform that the electronic device 100 accesses the camera permission of the electronic device 200. The control center interface 1210 may further include a super terminal card 1213. The super terminal card 1213 may include a Settings control 1213A. In response to an operation on the Settings control 1213A, the electronic device 100 may display a user interface 1220 shown in FIG. 12B. The user interface 1220 may be a settings interface of a super terminal.

As shown in FIG. 12B, the user interface 1220 may include a device information box 1221. The device information box 1221 may display information such as a name of the electronic device 200 and a logged-in account on the electronic device 200. For example, the name of the electronic device 200 is "Electronic device 200", and the logged-in account on the electronic device 200 is "123456". The information about the electronic device 200 is not limited in embodiments of this application. In response to an operation on the device information box 1221, for example, a tap operation, the electronic device 200 may display a user interface 1230 shown in FIG. 12C.

As shown in FIG. 12C, the user interface 1230 may include a device discovery control 1231 and a permission management box 1232.

The device discovery control 1231 may be used to manage a type of a device that can discover the electronic device 200. For example, the type of the device that can discover the electronic device 200 may include a nearby device and my nearby device. When the type of the device is the nearby device, the electronic device 200 can be discovered by all nearby electronic devices. When the type of the device is my nearby device, the electronic device 200 can be discovered by a nearby electronic device whose login account is the same as the login account of the electronic device 200. For example, when the electronic device 200 is discovered by the electronic device 100, the electronic device 100 may display a device icon of the electronic device 200 in the super card in the control center interface (refer to the super terminal card 1083 shown in FIG. 10J).

The permission management box 1232 may be used to manage device permission, of the electronic device 200, that can be accessed by an electronic device that can discover the electronic device 200. For example, the permission management box 1232 may include a switch corresponding to the device permission. If the switch is in an on state, the electronic device that can discover the electronic device 200 can access the device permission, of the electronic device 200, corresponding to the switch. For example, if a switch corresponding to camera permission in the permission management box 1232 is in an on state, all electronic devices that can discover the electronic device 200 can access the camera permission of the electronic device 200; or if a switch corresponding to camera permission in the permission management box 1232 is in an off state, all electronic devices that can discover the electronic device 200 cannot access the camera permission of the electronic device 200.

It can be learned from the scenario shown in FIG. 12A to FIG. 12C that a user can manage cross-device sensitive behavior in the electronic device 200, and allow or forbid another electronic device to access the device permission of the electronic device 200.

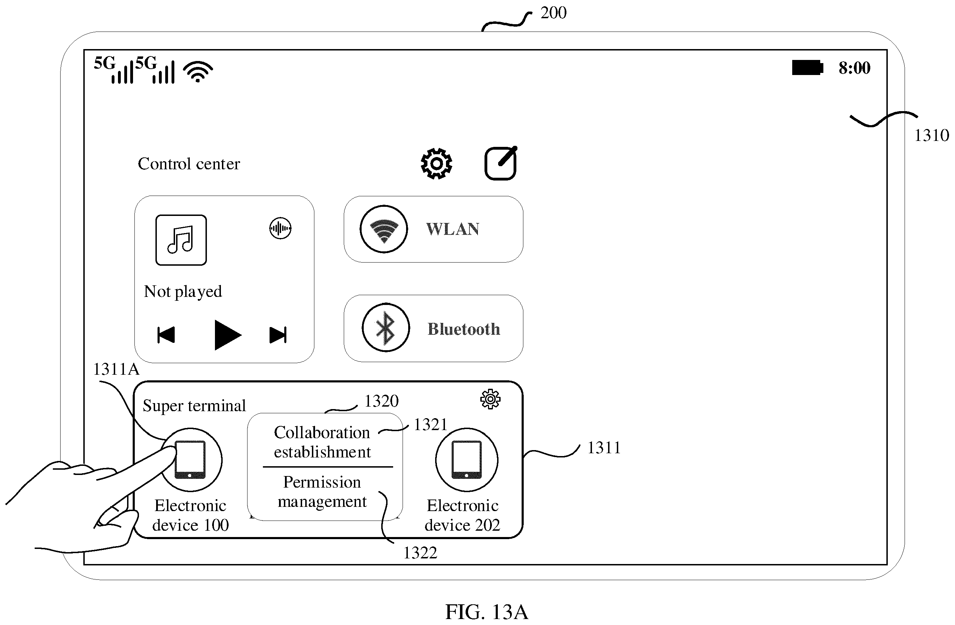

FIG. 13A to FIG. 13E are some other diagrams of an example of a sensitive behavior management scenario.

As shown in FIG. 13A, the electronic device 200 may display a control center interface 1310. The control center interface 1310 may include a super terminal card 1311. The super terminal card 1311 may display device icons of one or more electronic devices, for example, an icon 1311A of the electronic device 100. In response to an operation on the icon 1311A of the electronic device 100, for example, a long press operation, the electronic device 100 may display a settings option box 1320 shown in FIG. 13A. The settings option box 1320 may include a collaboration establishment control 1321 and a permission management control 1322. The collaboration establishment control 1321 may be used to trigger the electronic device 200 to establish a cooperative connection to the electronic device 100. The permission management control 1322 may be used to manage device permission, of the electronic device 200, that can be accessed by the electronic device 100.

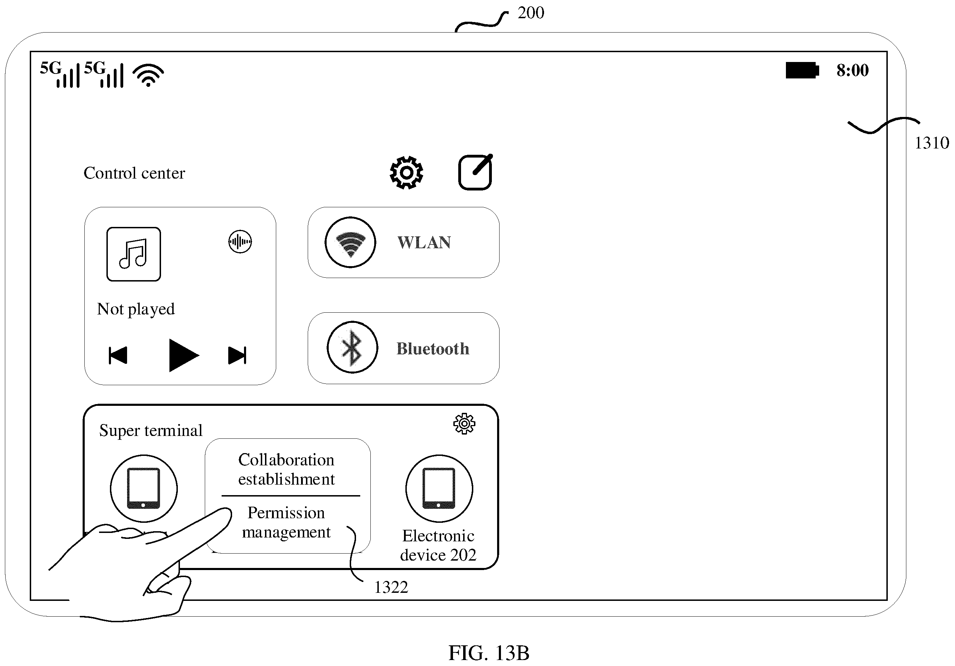

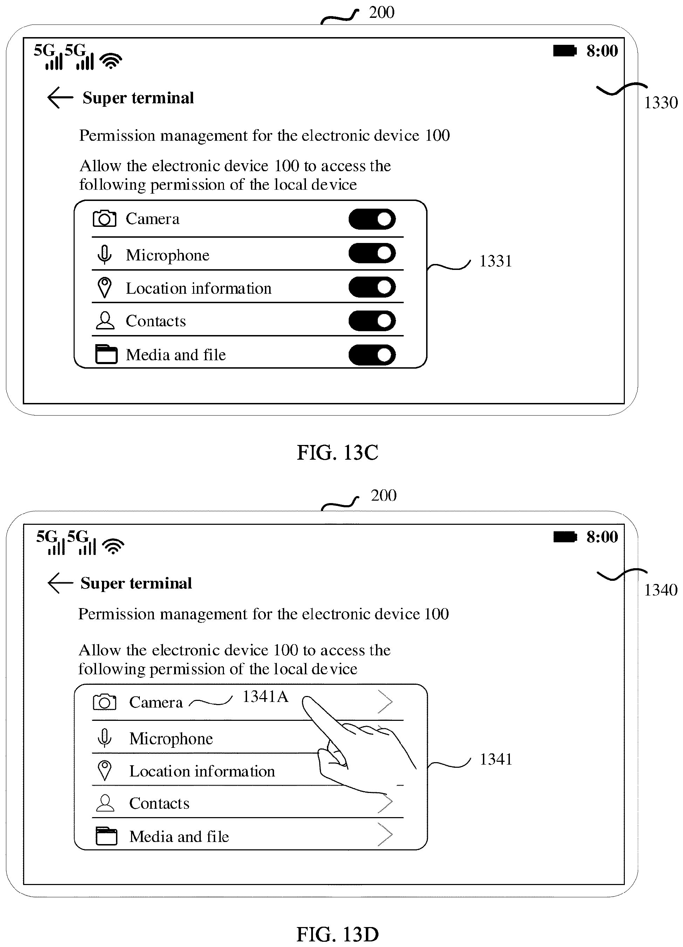

As shown in FIG. 13B, in response to an operation on the permission management control 1322, for example, a tap operation, the electronic device 200 may display a user interface 1330 shown in FIG. 13C.

As shown in FIG. 13C, the user interface 1330 may include a permission management box 1331. The permission management box 1331 may be used to manage the device permission, of the electronic device 200, that can be accessed by the electronic device 100. For example, the permission management box 1331 may include a switch corresponding to the device permission. If the switch is in an on state, the electronic device 100 can access the device permission, of the electronic device 200, corresponding to the switch. For example, if a switch corresponding to camera permission in the permission management box 1331 is in an on state, the electronic device 100 can access the camera permission of the electronic device 200; or if a switch corresponding to camera permission in the permission management box 1331 is in an off state, the electronic device 100 cannot access the camera permission of the electronic device 200.

It can be seen from FIG. 13C that a user can separately perform permission management on an electronic device connected to the electronic device 200, so as to adjust the device permission, of the electronic device 200, that can be accessed by the electronic device. In other words, the user can authorize, based on a requirement and a privacy security consideration, different electronic devices to access different device permission of the electronic device 200. This can better meet a use requirement of the user, and improve security of user privacy information.

In some embodiments, in cross-device sensitive behavior, that the electronic device 100 accesses the device permission of the electronic device 200 may be specifically that an application on the electronic device 100 accesses the device permission of the electronic device 200. The user can separately manage device permission, of the electronic device 200, that can be accessed by each application on the electronic device 100.

In response to an operation on the permission management control 1322 shown in FIG. 13B, the electronic device 200 may display a user interface 1340 shown in FIG. 13D.

As shown in FIG. 13D, the user interface 1340 may include a permission management box 1341. The permission management box 1341 may include device permission options, for example, a camera permission option 1341A, a microphone permission option, a location permission option, a contact permission option, and a media and file permission option. One device permission option may be used to open a user interface for managing access, by each application on the electronic device 100, to device permission corresponding to the device permission option on the electronic device 200.

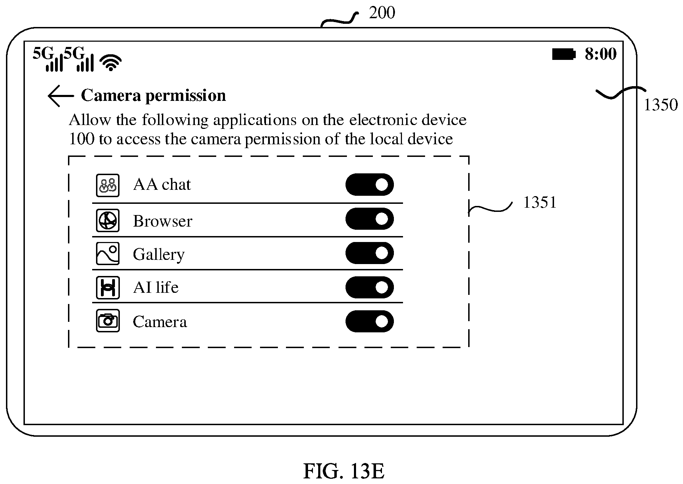

For example, in response to an operation on the camera permission option 1341A, for example, a tap operation, the electronic device 200 may display a user interface 1350 shown in FIG. 13E.

As shown in FIG. 13E, the user interface 1350 may include a permission switch display area 1351. The permission switch display area 1351 may include switches corresponding to applications. These applications may be applications on the electronic device 100. The switch in the permission switch display area 1351 may be used to allow or forbid the application, corresponding to the switch, in the electronic device 100 to access the camera permission of the electronic device 200. For example, the permission switch display area 1351 includes a switch corresponding to an AA chat application. If the switch corresponding to the AA chat application is in an on state, the AA chat application on the electronic device 100 may access the camera permission of the electronic device 200; or if the switch corresponding to the AA chat application is in an off state, the AA chat application on the electronic device 100 cannot access the camera permission of the electronic device 200.

In a possible implementation, after the electronic device 100 establishes a communication connection to the electronic device 200, the electronic device 100 may send information (such as a name of an application and an icon of the application) about the application on the electronic device 100 to the electronic device 200. The electronic device 200 may display, based on the information about the application on the electronic device 100, the user interface 1350 shown in FIG. 13E. When the electronic device 100 requests to access the device permission of the electronic device 200, the electronic device 100 may send, to the electronic device 200, the identifier of the application that is in the electronic device 100 and that requests to access the device permission. The electronic device 200 may determine, based on the identifier of the application, whether the application on the electronic device 100 can access the device permission requested for access, so as to determine whether to provide a service corresponding to the device permission.

It can be learned from the scenario shown in FIG. 13D and FIG. 13E that, a user can separately perform permission management on each application on the electronic device connected to the electronic device 200, so as to adjust the device permission, of the electronic device 200, that can be accessed by each application on the electronic device. In other words, the user can authorize, based on a requirement and a privacy security consideration, different applications on an electronic device to access different device permission of the electronic device 200. This can better meet a use requirement of the user, and improve security of user privacy information.

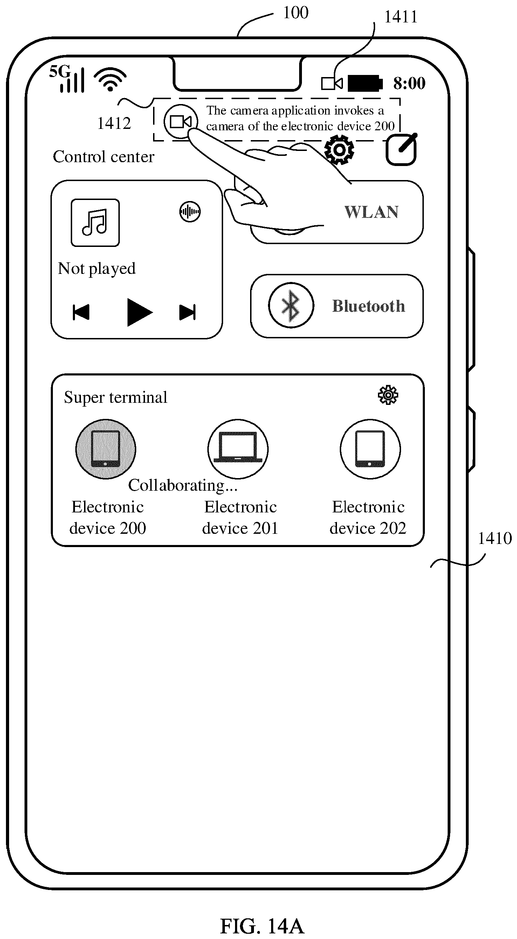

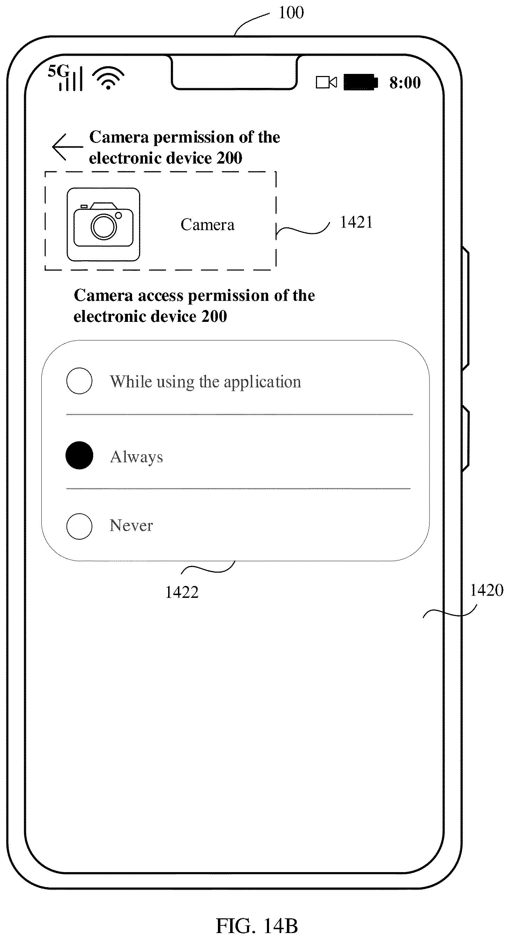

FIG. 14A and FIG. 14B are some other diagrams of an example of a sensitive behavior management scenario.

Herein, an example in which the electronic device 100 accesses camera permission of the electronic device 200 is still used for description.

As shown in FIG. 14A, the electronic device 100 may display a control center interface 1410. The control center interface 1410 may include a sensitive behavior prompt 1412 and a camera bar 1411 displayed in the status bar. The sensitive behavior prompt 1412 may be used to inform a user that a camera application on the electronic device 100 accesses the camera permission of the electronic device 200. For the control center interface 1410, refer to the control center interface 1080 shown in FIG. 10J. Details are not described herein again.

In response to an operation on the sensitive behavior prompt 1412, for example, a tap operation, the electronic device 100 may display a user interface 1420 shown in FIG. 14B.

As shown in FIG. 14B, the user interface 1420 may include a camera application identifier 1421 and a permission management box 1422. The camera application identifier 1421 may include identifier information such as an icon and a name of the camera application. The permission management box 1422 may include controls used to manage the camera application to access the camera permission of the electronic device 200, for example, a While using the application control, an Always control, and a Never control.

For example, when the While using the application control is in a selected state, the electronic device 100 may allow only the camera application to access the camera permission of the electronic device 200 during foreground running. In other words, when the While using the application control is in a selected state, and the electronic device 100 detects a request for accessing the camera permission of the electronic device 200 when the camera application runs in the foreground, the electronic device 100 may send the request to the electronic device 200, to request to invoke a camera service of the electronic device 200. When the While using the application control is in the selected state, and the electronic device 100 detects a request for accessing the camera permission of the electronic device 200 when the camera application does not run in the foreground, the electronic device 100 may reject to send the request to the electronic device 200. When the Always control is in a selected state, the electronic device 100 may allow the camera application to access the camera permission of the electronic device 200 in any case. When the Never control is in a selected state, the electronic device 100 may forbid the camera application to access the camera permission of the electronic device 200.

It can be learned from the scenario shown in FIG. 14A and FIG. 14B that a user can further perform an operation on the electronic device 100, to separately perform permission management on each application on the electronic device 100, so as to adjust the device permission, of the electronic device 200, that can be accessed by each application on the electronic device 100. In other words, the user can authorize, based on a requirement and a privacy security consideration, different applications on an electronic device to access different device permission of the electronic device 200. This can better meet a use requirement of the user, and improve security of user privacy information.

In some embodiments, when one piece of device permission of the electronic device 100 is frequently accessed, the electronic device 100 may prolong, after a permission visitor ends one access to the device permission, time for displaying a device permission icon of the device permission in the status bar. In this case, in time prolonged for displaying the device permission icon, if the permission visitor re-accesses the device permission, the electronic device 100 may continue to display the device permission icon in the status bar. It can be learned that, when the permission visitor accesses the same device permission twice consecutively relatively short time, the electronic device 100 may keep, in a time interval between the two accesses, the device permission icon continuously displayed in the status bar. The sensitive behavior prompt method provided in the foregoing embodiment can be used to avoid, when the device permission is frequently accessed, frequent blinking of the device permission icon displayed in the status bar of the electronic device 100, and improve user experience of viewing the status bar.

The following describes another sensitive behavior prompt scenario provided in embodiments of this application.

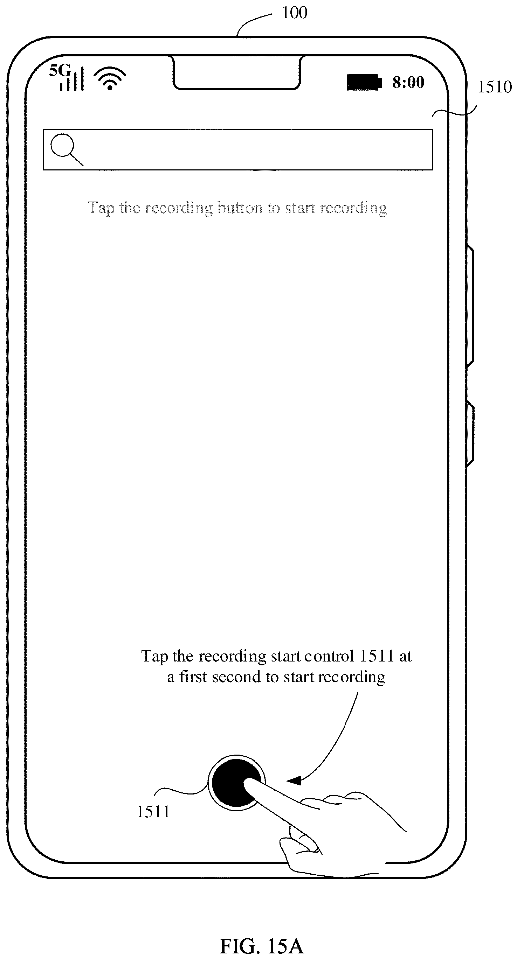

FIG. 15A to FIG. 15F are some other diagrams of an example of a sensitive behavior prompt scenario.

Herein, an example in which a recorder application on the electronic device 100 accesses microphone permission of the electronic device 100 is used for description.

As shown in FIG. 15A, the electronic device 100 may display a user interface 1510. The user interface 1510 may be a user interface of the recorder application. For the user interface 1510, refer to the user interface 610 shown in FIG. 6B.

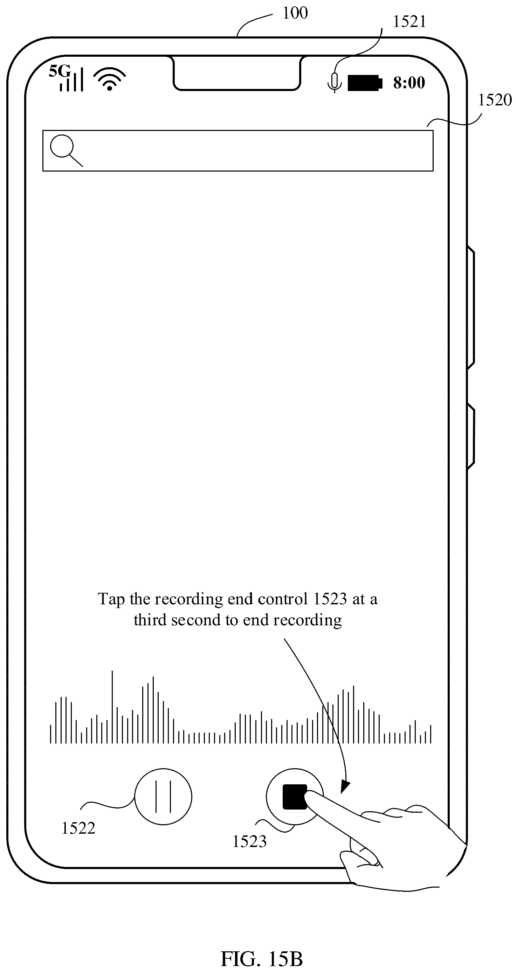

The user interface 1510 may include a recording start control 1511. A user may tap the recording start control 1511 at a first second to start recording. In response to an operation on the recording start control 1511, the electronic device 100 may start up a microphone to capture audio data, and display a user interface 1520 shown in FIG. 15B. For the user interface 1520, refer to the user interface 610 shown in FIG. 6C. The user interface 1520 may include a recording pause control 1522 and a recording end control 1523. Because the recorder application is accessing the microphone permission of the electronic device 100, the electronic device 100 may display a microphone icon 1521 shown in FIG. 15B in the status bar of the user interface 1520.

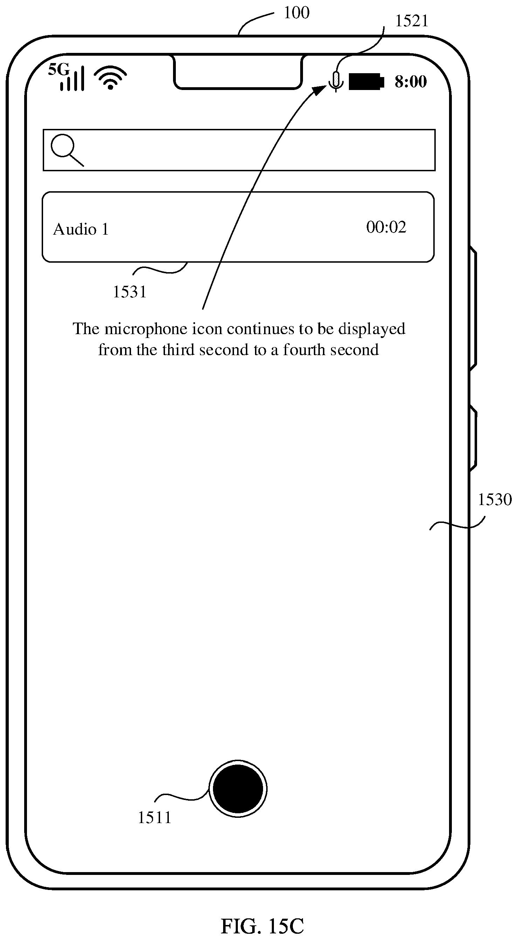

As shown in FIG. 15B, a user may tap the recording end control 1523 at a third second to end recording. In response to an operation on the recording end control 1523, the electronic device 100 may close the microphone, and display a user interface 1530 shown in FIG. 15C.

In a possible implementation, the electronic device 100 may determine whether duration in which a permission visitor accesses the microphone permission exceeds preset duration. The preset duration may be, for example, five seconds or eight seconds. A value of the preset duration is not limited in embodiments of this application. When determining that the duration in which the permission visitor accesses the microphone permission does not exceed the preset duration, the electronic device 100 may continue to display the microphone icon in the status bar after the permission visitor ends invoking the microphone permission. The electronic device 100 may supplement display duration of the microphone icon in the status bar, so that the display duration of the microphone icon in the status bar reaches the preset duration.

As shown in FIG. 15C, the user interface 1530 may include an audio 1 option 1531 and the recording start control 1511. Audio 1 corresponding to the audio 1 option 1531 may be audio recorded by the electronic device 100 in response to the operation on the recording start control 1511 shown in FIG. 15A and the operation on the recording end control 1523 shown in FIG. 15B. It can be seen that a recording time segment of the audio 1 is from the first second to the third second, and recording duration is two seconds.

The microphone icon 1521 may still be displayed in the status bar of the user interface 1530. It may be understood that the electronic device 100 receives, at the first second, the operation of tapping the recording start control 1511, and receives, at the third second, the operation of tapping the recording end control 1523. The electronic device 100 may determine that the recorder application starts to access the microphone permission at the first second, and ends the microphone access permission at the third second. That is, the recorder application accesses the microphone permission from the first second to the third second, and access duration is only two seconds. If the preset duration is five seconds, the electronic device 100 may determine that the access duration in which the recorder application accesses the microphone permission does not exceed the preset duration. In this case, after the recorder application ends accessing the microphone permission, the electronic device 100 may continue to display the microphone icon 1521 in the status bar shown in FIG. 15C. In addition, the electronic device 100 may supplement the display duration of the microphone icon 1521 to five seconds. Because the electronic device 100 has displayed the microphone icon 1521 in the status bar from the first second to the third second (that is, the microphone icon 1521 has been displayed for two seconds), the electronic device 100 may continue to display the microphone icon in the status bar for three seconds. In other words, the electronic device 100 may continue to display the microphone icon 1521 in the status bar from the third second to a sixth second. If the microphone permission is not detected to be accessed from the third second to the sixth second, the electronic device 100 may cancel displaying of the microphone icon 1521 in the status bar at the sixth second. If re-access of the microphone permission is detected from the third second to the sixth second, the electronic device 100 may determine display duration of the microphone icon in the status bar based on access duration of re-access of the microphone permission.

For example, the electronic device 100 continues to display the microphone icon 1521 in the status bar from the third second to the fourth second.

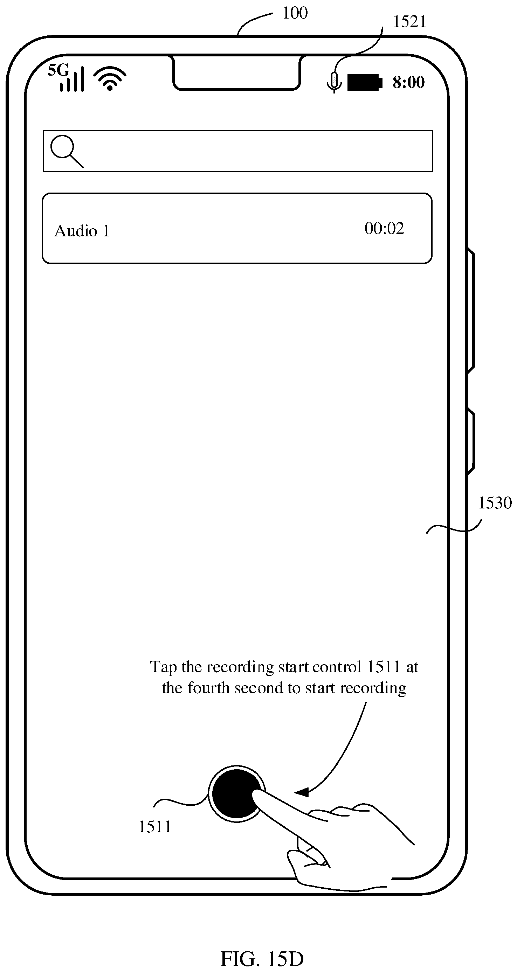

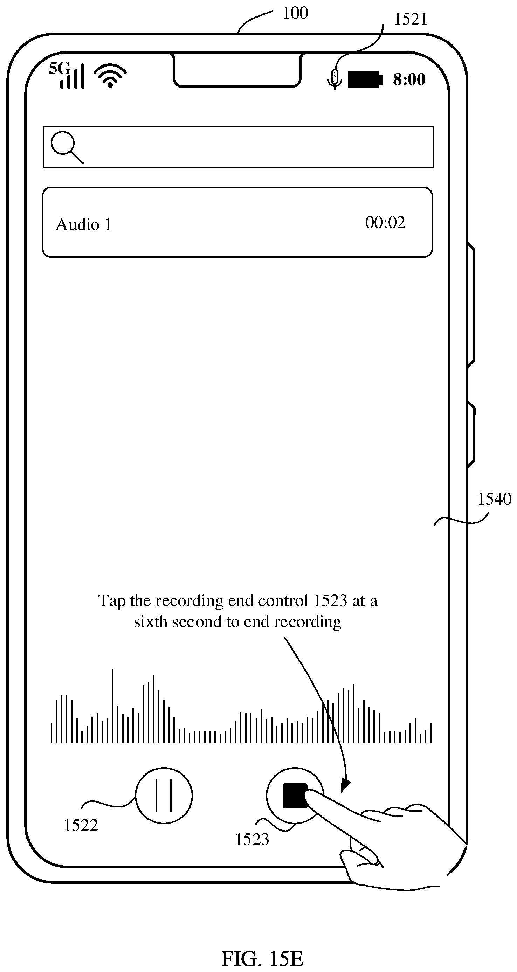

As shown in FIG. 15D, the user may tap the recording start control 1511 at a fourth second to start recording. In response to an operation on the recording start control 1511, the electronic device 100 may start up the microphone to capture audio data, and display a user interface 1540 shown in FIG. 15E. For the user interface 1540, refer to the user interface 610 shown in FIG. 6C. The user interface 1540 may include the recording pause control 1522 and the recording end control 1523. Because the recorder application is accessing the microphone permission of the electronic device 100, the electronic device 100 may display the microphone icon 1521 shown in FIG. 15E in the status bar of the user interface 1540.

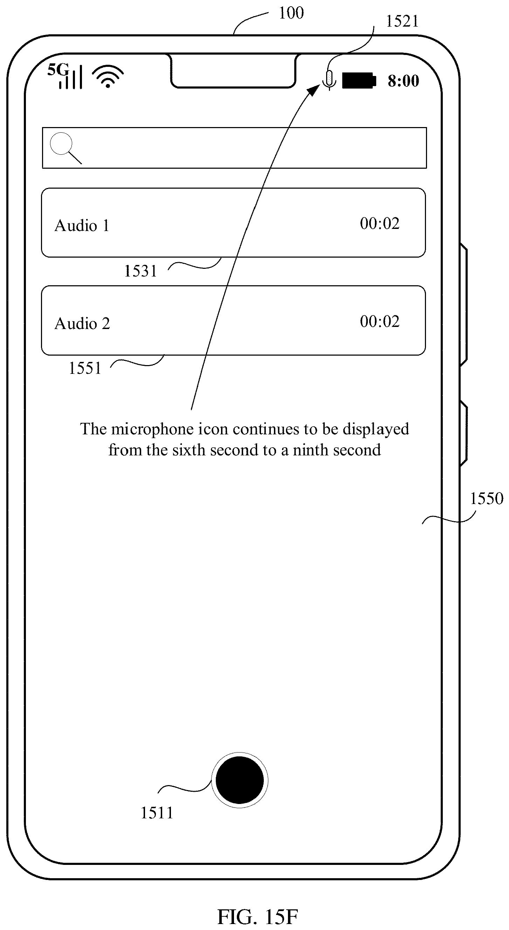

As shown in FIG. 15E, the user may tap the recording end control 1523 at a sixth second to end recording. In response to an operation on the recording end control 1523, the electronic device 100 may close the microphone, and display a user interface 1550 shown in FIG. 15F.

As shown in FIG. 15F, the user interface 1550 may include the audio 1 option 1531, an audio 2 option 1551, and the recording start control 1511. For the audio 1 option 1531, refer to the description in the foregoing embodiment. Audio 2 corresponding to the audio 2 option 1551 may be audio recorded by the electronic device 100 in response to the operation on the recording start control 1511 shown in FIG. 15D and the operation on the recording end control 1523 shown in FIG. 15E. It can be seen that a recording time segment of the audio 1 is from the fourth second to the sixth second, and recording duration is two seconds.

The microphone icon 1521 may still be displayed in the status bar of the user interface 1550. It may be understood that the electronic device 100 receives, at the fourth second, the operation of tapping the recording start control 1511, and receives, at the sixth second, the operation of tapping the recording end control 1523. The electronic device 100 may determine that access duration in which the recorder application accesses the microphone permission is two seconds, and does not exceed the preset duration (namely, five seconds). In this case, after the recorder application ends accessing the microphone permission, the electronic device 100 may continue to display the microphone icon 1521 in the status bar shown in FIG. 15F. The electronic device 100 may supplement display duration of the microphone icon 1521 to five seconds by using, as a start time point, a display moment at which the microphone icon 1521 starts to be displayed in the status bar when the microphone permission is accessed last time. In other words, the electronic device 100 may display the microphone icon 1521 in the status bar in at least five seconds starting from the fourth second by using the moment "the fourth second" at which the operation on the recording start control 1511 is received as a time start point shown in FIG. 15D. Because the recorder application ends accessing the microphone permission at the sixth second, the electronic device 100 may continue to display the microphone icon 1521 in the status bar from the sixth second to a ninth second. If the microphone permission is not detected to be accessed from the sixth second to the ninth second, the electronic device 100 may cancel displaying of the microphone icon 1521 in the status bar at the ninth second.

It can be learned from the scenario in FIG. 15A to FIG. 15F that, when access duration of the accessed device permission is excessively short, the electronic device 100 may prolong, after the permission visitor ends the access, display duration of the device permission icon, and still continuously display the device permission icon in the status bar for a period of time, so that the display duration of the device permission reaches the preset duration. The foregoing method can be used to avoid, when the device permission is frequently accessed, frequent blinking of the device permission icon displayed in the status bar, prevent the electronic device 100 from frequently refreshing the device permission icon displayed in the status bar, improve user's experience of viewing the status bar, and reduce power consumption of the electronic device 100 for refreshing the device permission icon.

The following describes, based on the scenario shown in FIG. 15A to FIG. 15F, the sensitive behavior reminder method provided in embodiments of this application.

In a possible implementation, the electronic device 100 may display a device permission icon in the status bar by using a delay supplement mechanism. The delay supplement mechanism may include that display duration of the device permission icon in the status bar needs to meet shortest display duration. If access duration of the accessed device permission does not exceed the shortest display duration, the electronic device 100 may supplement the display duration of the device permission icon in the status bar, so that the display duration of the device permission icon in the status bar reaches at least the shortest display duration.

Specifically, the electronic device 100 may store preset duration. The preset duration is the shortest display duration of the device permission icon. Herein, an example in which the preset duration is five seconds is used for description. Alternatively, the preset duration may be another value. A value of the preset duration is not limited in embodiments of this application.

When detecting that the device permission is accessed, the electronic device 100 may obtain a moment at which a permission visitor starts to access the device permission and a moment at which the permission visitor ends to access the device permission. The start moment may be denoted as currentTime1. The end moment may be denoted as currentTime2. The electronic device 100 may display, in the status bar starting from currentTime1, the device permission icon of the accessed device permission. The electronic device 100 may determine a result of currentTime2-currentTime1. The result of currentTime2-currentTime1 may be denoted as duration.

The electronic device 100 may determine whether the duration is greater than the preset duration.

If determining that the duration is greater than the preset duration, the electronic device 100 may cancel displaying, in currentTime2 in the status bar, of the device permission icon of the device permission that is ended to access.

Alternatively, if determining that the duration does not exceed the preset duration, the electronic device 100 may prolong the display duration of the device permission icon in the status bar. The electronic device 100 may continue to display, by using extended duration as a result of the preset duration-duration, the device permission icon of the device permission in the status bar after the permission visitor stops accessing the device permission. Further, if the electronic device 100 does not detect re-access of the device permission in a time period during which the device permission icon is prolonged for display, the electronic device 100 may cancel displaying of the device permission icon in the status bar after a time period of preset duration-duration is prolonged. Alternatively, if the electronic device 100 detects re-access of the device permission in a time period during which the device permission icon is prolonged for display, the electronic device 100 may display, by using, as a time start point, a display moment at which the device permission icon starts to be displayed in the status bar when the device permission is accessed last time, the device permission icon again by using the delay supplement mechanism. For example, if the electronic device 100 detects that the permission visitor re-accesses the device permission in the time period during which the device permission icon is prolonged for display, the electronic device 100 may obtain a moment at which re-access of the device permission starts and a moment at which re-access of the device permission ends. The moment at which re-access of the device permission starts may be denoted as currentTime3. The moment at which re-access of the device permission ends may be denoted as currentTime4. The electronic device 100 may determine display duration of the device permission icon in the status bar based on currentTime3, currentTime4, and the preset duration.

Optionally, if the electronic device 100 detects re-access of the device permission in the time period during which the device permission icon is prolonged for display, the electronic device 100 may determine whether duration between a moment for starting to display the device permission icon of the device permission and the moment at which re-access of the device permission ends exceeds the preset duration. If the duration exceeds the preset time, the electronic device 100 may cancel displaying of the device permission icon in the status bar at the moment at which re-access of the device permission ends. Alternatively, if the duration does not exceed the preset time, the electronic device 100 may supplement display duration of the device permission icon, so that total display duration of the device permission icon is at least the preset duration. For example, the moment at which re-access of the device permission starts may be denoted as currentTime3. The moment at which re-access of the device permission ends may be denoted as currentTime4. The electronic device 100 may determine whether a result of currentTime4-currentTime1 exceeds the preset duration. If currentTime4-currentTime1 exceeds the preset duration, the electronic device 100 may cancel displaying, in the status bar at currentTime4, of the device permission icon of the accessed device permission. Alternatively, if currentTime4-currentTime1 does not exceed the preset duration, the electronic device 100 may continue to display the device permission icon of the accessed device permission in the status bar after currentTime4 by using extended duration as a result of preset duration-(currentTime4-currentTime1).

It should be noted that in the delay supplement mechanism, the device permission icon may be a device permission icon of the first-type device permission in this application.

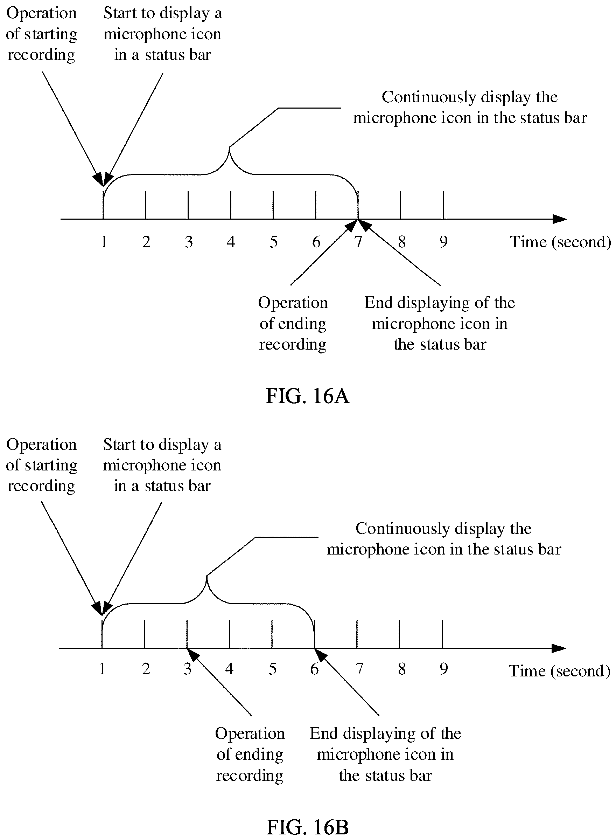

FIG. 16A to FIG. 16C show some examples of a sensitive behavior reminder scenario according to an embodiment of this application.

Herein, an example in which a recorder application accesses microphone permission is used for description.

FIG. 16A shows a scenario in which the electronic device 100 displays a microphone in a status bar when the recorder application accesses the microphone permission once and access duration exceeds preset duration. The preset duration may be, for example, five seconds.

As shown in FIG. 16A, the electronic device 100 receives, at a first second, an operation of starting recording. The operation of starting recording may be, for example, an operation on the recording start control 1511 shown in FIG. 15A. In response to the operation of starting recording, the recorder application may start to access the microphone permission of the electronic device 100, and capture audio data by using the microphone of the electronic device 100. The electronic device 100 may start to display a microphone icon in the status bar. A moment at which the microphone icon starts to be displayed in the status bar may be a first second. The electronic device 100 receives, at a seventh second, an operation of ending recording. The operation of ending recording may be, for example, an operation on the recording end control 1523 shown in FIG. 15B. In response to the operation of ending recording, the recorder application may end access to the microphone permission of the electronic device 100 in this time. In this case, the electronic device 100 may determine that access duration (namely, six seconds in total from the first second to the seventh second) of the microphone permission in this time exceeds the preset duration. The electronic device 100 may cancel displaying of the microphone icon in the status bar at the seventh second. It can be seen that in the scenario in which the recorder application accesses the microphone permission shown in FIG. 16A, the electronic device 100 may continuously display the microphone icon in the status bar from the first second to the seventh second (duration of six seconds in total).

FIG. 16B shows a scenario in which the electronic device 100 displays a microphone in a status bar when the recorder application accesses the microphone permission once and access duration does not exceed preset duration. The preset duration may be, for example, five seconds.

As shown in FIG. 16B, the electronic device 100 receives, at a first second, an operation of starting recording. In response to the operation of starting recording, the recorder application may start to access the microphone permission of the electronic device 100. The electronic device 100 may start to display microphone permission in the status bar. A moment at which the microphone icon starts to be displayed in the status bar may be a first second. The electronic device 100 receives, at a third second, an operation of ending recording. In response to the operation of ending recording, the recorder application may end access to the microphone permission of the electronic device 100 in this time. In this case, the electronic device 100 may determine that access duration (namely, two seconds in total from the first second to the third second) of the microphone permission in this time does not exceed the preset duration. The electronic device 100 may supplement display duration of the microphone icon in the status bar. The electronic device 100 may determine, based on preset duration-(moment at which access of the microphone permission ends (namely, the third second)-moment at which access of the microphone permission starts (namely, the first second)), that extended duration for prolonging display of the microphone icon is three seconds. Therefore, the electronic device 100 may extend display of the microphone icon in the status bar for three seconds starting from the third second. The electronic device 100 may cancel displaying of the microphone icon in the status bar at a sixth second. It can be seen that in the scenario in which the recorder application accesses the microphone permission shown in FIG. 16B, the electronic device 100 may continuously display the microphone icon in the status bar from the first second to the sixth second (duration of five seconds in total).

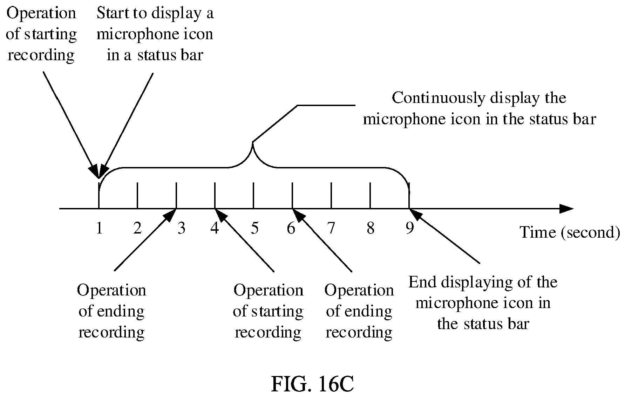

FIG. 16C shows a scenario in which the electronic device 100 displays a microphone in a status bar when the recorder application accesses the microphone permission two times, access duration of accessing the microphone permission two times does not exceed preset duration, and a moment at which access of the microphone permission starts for the second time falls within an extended time period in which the microphone icon is prolonged, based on access time of accessing the microphone permission for the first time, for display. The preset duration may be, for example, five seconds.

As shown in FIG. 16C, the recorder application accesses the microphone permission of the electronic device 100 for the first time from a first second to a third second, and accesses the microphone permission of the electronic device 100 for the second time from a fourth second to a sixth second. It can be learned from the foregoing embodiment that the electronic device 100 may start to display the microphone icon in the status bar at the first second. When receiving an operation of ending recording at the third second, the electronic device 100 may determine that the access duration (namely, two seconds in total from the first second to the third second) in which the microphone permission is accessed for the first time does not exceed the preset duration. The electronic device 100 may supplement display duration of the microphone icon in the status bar. It can be learned from the embodiment shown in FIG. 16B that a time period for prolonging display of the microphone icon by the electronic device 100 may be from the third second to a sixth second (three seconds in total). When detecting that the recorder application accesses the microphone permission for the second time from a fourth second to the sixth second, the electronic device 100 may re-determine, by using a moment (namely, the fourth second) at which access of the microphone permission starts for the second time as a start moment, display duration of the microphone icon by using a delay supplement mechanism. When receiving an operation of ending recording at the sixth second, the electronic device 100 may determine that access duration (namely, two seconds in total from the fourth second to the sixth second) in which the microphone permission is accessed for the second time does not exceed the preset duration. The electronic device 100 may determine, based on preset duration-(moment at which access of the microphone permission ends for the second time (namely, the sixth second)-moment at which access of the microphone permission starts for the second time (namely, the fourth second)), that extended duration for prolonging display of the microphone icon is three seconds. Therefore, the electronic device 100 may extend display of the microphone icon in the status bar for three seconds starting from the sixth second. The electronic device 100 may cancel displaying of the microphone icon in the status bar at a ninth second. It can be seen that in the scenario in which the recorder application accesses the microphone permission shown in FIG. 16C, the electronic device 100 may continuously display the microphone icon in the status bar from the first second to the ninth second (duration of eight seconds in total).

It can be learned from the scenario in FIG. 16A to FIG. 16C that, when access duration of the accessed device permission is excessively short, the electronic device 100 may prolong, after the permission visitor ends the access, display duration of the device permission icon, and still continuously display the device permission icon in the status bar for a period of time, so that the display duration of the device permission reaches the preset duration. The foregoing method can be used to avoid, when the device permission is frequently accessed, frequent blinking of the device permission icon displayed in the status bar, prevent the electronic device 100 from frequently refreshing the device permission icon displayed in the status bar, improve user's experience of viewing the status bar, and reduce power consumption of the electronic device 100 for refreshing the device permission icon.

The following describes the sensitive behavior reminder method provided in embodiments of this application.

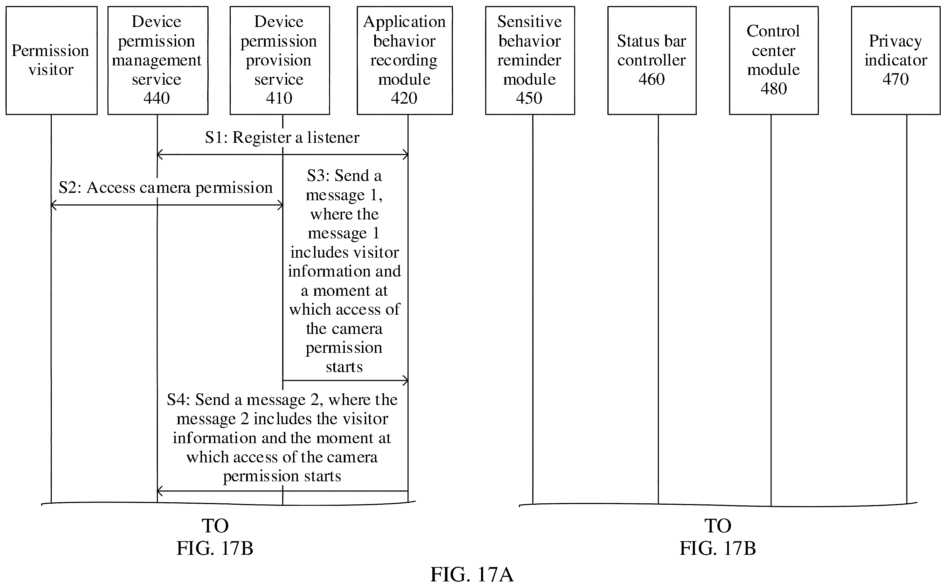

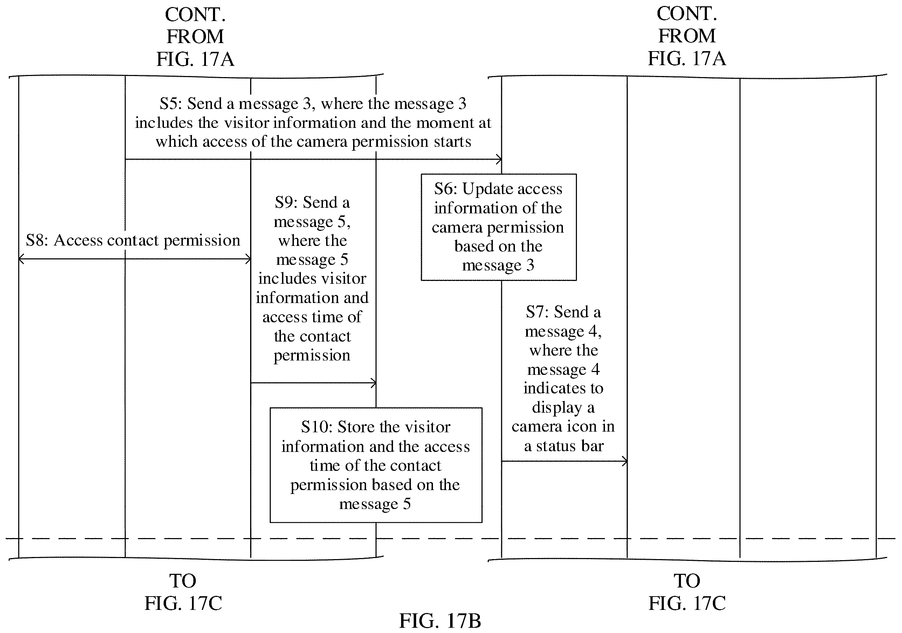

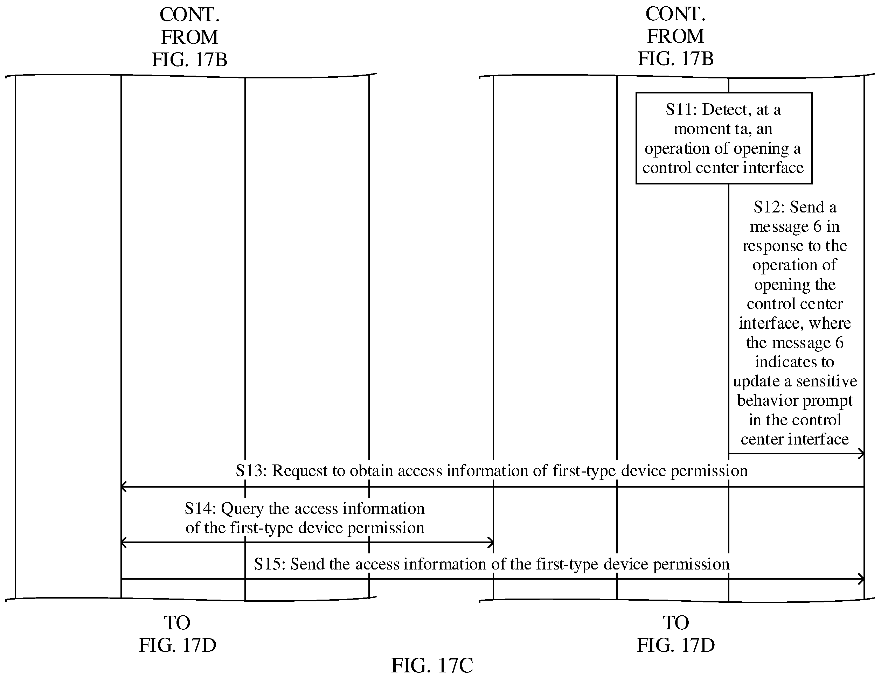

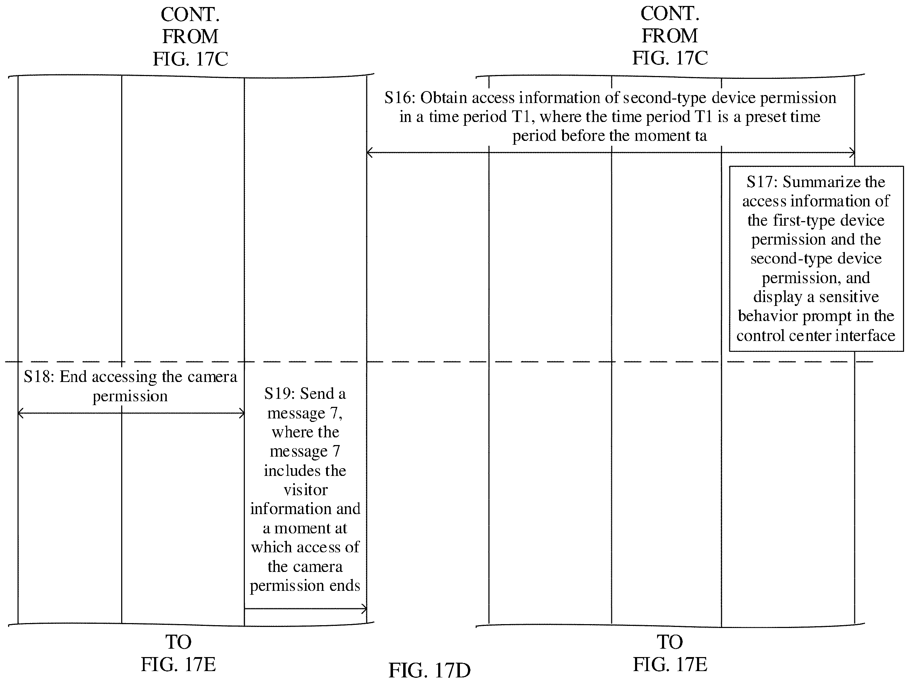

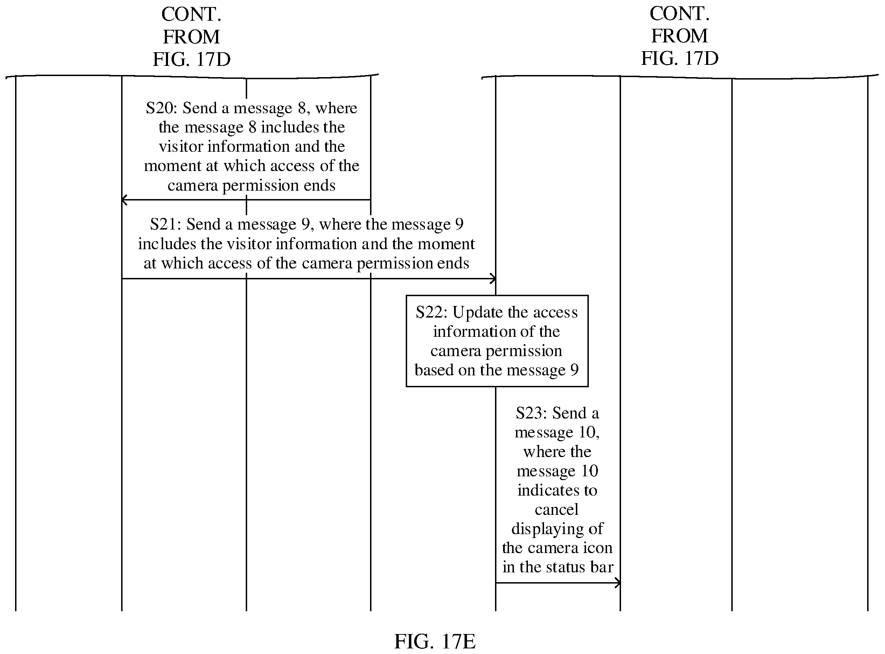

FIG. 17A to FIG. 17E are a flowchart of an example of a sensitive behavior reminder method according to an embodiment of this application. The method is applied to the electronic device 100 and the communication system 30 described in the foregoing embodiment. It can be learned from the embodiment shown in FIG. 4 that the electronic device 100 may include the device permission provision service 410, the application behavior recording module 420, the device permission management service 440, the sensitive behavior reminder module 450, the status bar controller 460, the privacy indicator 470, and the control center module 480.

As shown in FIG. 17A to FIG. 17E, the method may include steps S1 to S23.

(1) In steps S1 to S7, first-type device permission is accessed, and the electronic device 100 displays a device permission icon of the first-type device permission in a status bar.

Herein, camera permission in the first-type device permission is specifically used as an example for description. The first-type device permission may further include microphone permission, location permission, and the like. For a method in which the electronic device 100 displays a device permission icon in the status bar when another first-type device permission is accessed, refer to a method in which the electronic device 100 displays a camera icon in the status bar.

S1: The device permission management service 440 may register a listener with the application behavior recording module 420.

In a possible implementation, the device permission management service 440 may register the listener with the application behavior recording module 420. The listener may indicate the application behavior recording module 420 to send access information of the first-type device permission to the device permission management service 440 when the first-type device permission of the electronic device 100 is detected to be accessed.

Time at which the device permission management service 440 registers the listener is not limited in this embodiment of this application. For example, the device permission management service 440 may register the listener with the application behavior recording module 420 after the electronic device 100 receives a power-on operation.

S2: A permission visitor may access the camera permission from the device permission provision service 410.

In this application, the permission visitor may be each application on the electronic device 100, or may be an electronic device (for example, an electronic device 200 or an electronic device 201) other than the electronic device 100.

The permission visitor may send, to the device permission provision service 410, a request for accessing the camera permission. The device permission provision service 410 may determine whether the permission visitor is qualified to access the camera permission. If determining that the permission visitor is qualified to access the camera permission, the device permission provision service 410 may allow the permission visitor to access the camera permission, so that the permission visitor can invoke a camera service of the electronic device 100 to capture an image by using a camera of the electronic device 100. Alternatively, if determining that the permission visitor is not qualified to access the camera permission, the device permission provision service 410 may reject the permission visitor to access the camera permission.

S3: The device permission provision service 410 may send a message 1 to the application behavior recording module 420, where the message 1 includes visitor information and a moment at which access of the camera permission starts.

After allowing the permission visitor to access the camera permission, the device permission provision service 410 may send the message 1 to the application behavior recording module 420, to notify the application behavior recording module 420 that the camera permission is accessed. The message 1 may include the visitor information and the moment at which access of the camera permission starts. For example, if the permission visitor is an application 1 in the electronic device 100, the information about the visitor in the message 1 may be an identifier of the application 1. If the permission visitor is an electronic device 200, the information about the visitor in the message 1 may be an identifier of the electronic device 200. Content included in the message 1 is not limited in this embodiment of this application. The message 1 may further include more content.

S4: The application behavior recording module 420 may send a message 2 to the device permission management service 440, where the message 2 includes the visitor information and the moment at which access of the camera permission starts.

Because the device permission management service 440 registers the listener with the application behavior recording module 420, after receiving the message 1, the application behavior recording module 420 may send the message 2 to the device permission management service 440, to notify the device permission management service 440 that the camera permission is accessed.

S5: The device permission management service 440 may send a message 3 to the sensitive behavior reminder module 450, where the message 3 includes the visitor information and the moment at which access of the camera permission starts.

S6: The sensitive behavior reminder module 450 may update access information of the camera permission based on the message 3.

In a possible implementation, the sensitive behavior reminder module 450 may store the access information of the first-type device permission in a cache. When receiving the message 3, the sensitive behavior reminder module 450 may update the cache, and store the access information of the camera permission accessed last time. The access information may include the information about the visitor who accesses the camera permission accessed last time and the access start moment.

S7: The sensitive behavior reminder module 450 may send a message 4 to the status bar controller 460, where the message 4 indicates to display the camera icon in the status bar.

The sensitive behavior reminder module 450 may further send the message 4 to the status bar controller 460 based on the message 3, to indicate the status bar to refresh a device permission icon displayed in the status bar.

When receiving the message 4, the status bar controller 460 may display the camera icon in the status bar, so as to inform a user that the camera permission is accessed. For a scenario in which the status bar controller 460 displays a device permission icon of the first-type device permission in the status bar, refer to the scenarios shown in FIG. 6A to FIG. 6C, FIG. 7A, and FIG. 7B.

In some embodiments, the application behavior recording module 420 may further detect that the electronic device 100 accesses device permission of another electronic device, for example, an electronic device 200. When detecting that the electronic device 100 accesses the device permission of the electronic device 200, the application behavior recording module 420 may send, to the device permission management service 440, access information indicating that the device permission of the electronic device 200 is accessed. The device permission management service 440 may send, to the sensitive behavior reminder module 450, the access information indicating that the device permission of the electronic device 200 is accessed. Further, the sensitive behavior reminder module 450 may indicate the status bar controller 460 to display, in the status bar, a device permission icon of the accessed device permission of the electronic device 200.

For a scenario in which the status bar controller 460 displays, in the status bar, the device permission icon of the device permission, of the electronic device 200, accessed by the first electronic device, refer to the foregoing scenario shown in FIG. 10I to FIG. 10K.

(2) In steps S8 to S10, second-type device permission is accessed, and the electronic device 100 stores access information of the second-type device permission.

Herein, contact permission in the second-type device permission is specifically used as an example for description. The second-type device permission may further include media and file permission, device information permission, call record permission, and the like.

S8: A permission visitor may access the contact permission from the device permission provision service 410.

The permission visitor may send, to the device permission provision service 410, a request for accessing the contact permission. The device permission provision service 410 may determine whether the permission visitor is qualified to access the contact permission. If determining that the permission visitor is qualified to access the contact permission, the device permission provision service 410 may allow the permission visitor to access the contact permission, so that the permission visitor can invoke a contact service of the electronic device 100 to obtain contact information of the electronic device 100. Alternatively, if determining that the permission visitor is not qualified to access the contact permission, the device permission provision service 410 may reject the permission visitor to access the contact permission.

S9: The device permission provision service 410 may send a message 5 to the application behavior recording module 420, where the message 5 includes visitor information and access time of the contact permission.

After allowing the permission visitor to access the contact permission, the device permission provision service 410 may send the message 5 to the application behavior recording module 420, to notify the application behavior recording module 420 that the contact permission is accessed.

S10: The application behavior recording module 420 may store the visitor information and the access time of the contact permission based on the message 5.

(3) In steps S11 to S17, a control center interface is opened, and the control center interface displays a sensitive behavior prompt indicating that first-type device permission and second-type device permission are accessed.

S11: The control center module 480 detects, at a moment ta, an operation of opening the control center interface.

For the operation of opening the control center interface, refer to the foregoing operation shown in FIG. 5A.

When detecting the operation of opening the control center interface, the control center module 480 may trigger the electronic device 100 to display the control center interface. For the control center interface, refer to the control center interface shown in FIG. 5B.

In some embodiments, at the moment ta, the permission visitor is still accessing the camera permission of the electronic device 100.

S12: In response to the operation of opening the control center interface, the control center module 480 may send a message 6 to the privacy indicator 470, where the message 6 indicates to update the sensitive behavior prompt in the control center interface.

S13: The privacy indicator 470 may request to obtain access information of the first-type device permission from the device permission management service 440.

S14: The device permission management service 440 may query the sensitive behavior reminder module 450 for the access information of the first-type device permission.

S15: The device permission management service 440 may send the access information of the first-type device permission to the privacy indicator 470.

In a possible implementation, the privacy indicator 470 may request to obtain, when the operation of opening the control center interface is received, which first-type device permission of the electronic device 100 is accessed. It can be learned from the foregoing steps S2 to S7 that the permission visitor is accessing the camera permission. In this case, the access information, of the first-type device permission, sent by the device permission management service 440 to the privacy indicator 470 may include the access information of the camera permission.

S16: The privacy indicator 470 may obtain access information of the second-type device permission in a time period T1 from the application behavior recording module 420, where the time period T1 is a preset time period before the moment ta.

It can be learned from the foregoing features of the second-type device permission that an action of accessing the second-type device permission by the permission visitor is usually a separate action, and may not last for a period of time. The privacy indicator 470 may request to obtain, in the preset time period (namely, the time period T1) before the operation of opening the control center interface is received, the access information of the permission visitor accessing the second-type device permission.

It can be learned from the foregoing steps S8 to S10 that the permission visitor accesses the contact permission of the electronic device 100. If access time in which the permission visitor accesses the contact permission is in the time period T1, the application behavior recording module 420 may send, to the privacy indicator 470, the access information of the permission visitor accessing the contact permission in steps S8 to S10.

It may be understood that the application behavior recording module 420 may further query access records of other visitors in the time period T1, and send access information corresponding to the access records to the privacy indicator 470.

S17: The privacy indicator 470 may summarize access information of the first-type device permission and the second-type device permission, and display the sensitive behavior prompt in the control center interface.

For the sensitive behavior prompt displayed by the privacy indicator 470 in the control center interface, refer to the sensitive behavior prompt 813 shown in FIG. 8A.

(4) In steps S18 to S23, access to the first-type device permission ends, and the electronic device 100 cancels displaying of the device permission icon of the first-type device permission in the status bar.

S18: The permission visitor ends accessing the camera permission.

S19: The device permission provision service 410 may send a message 7 to the application behavior recording module 420, where the message 7 includes the visitor information and a moment at which access of the camera permission ends.

S20: The application behavior recording module 420 may send a message 8 to the device permission management service 440, where the message 8 includes the visitor information and a moment at which access of the camera permission ends.

Because the device permission management service 440 registers the listener with the application behavior recording module 420, after receiving the message 7, the application behavior recording module 420 may send the message 8 to the device permission management service 440, to notify the device permission management service 440 that the permission visitor ends accessing the camera permission.

S21: The device permission management service 440 may send a message 9 to the sensitive behavior reminder module 450, where the message 9 includes the visitor information and the moment at which access of the camera permission ends.

S22: The sensitive behavior reminder module 450 may update the access information of the camera permission based on the message 9.

The access information of the camera permission may include the information about the visitor who accesses the camera permission accessed last time and the access end moment.

S23: The sensitive behavior reminder module 450 may send a message 10 to the status bar controller 460, where the message 10 indicates to cancel displaying of the camera icon in the status bar.

The sensitive behavior reminder module 450 may send the message 10 to the status bar controller 460 based on the message 9, to indicate the status bar to refresh a device permission icon displayed in the status bar.

In a possible implementation, when receiving the message 10, the status bar controller 460 may cancel displaying of the camera icon in the status bar.

In another possible implementation, when receiving the message 10, the status bar controller 460 may determine, by using a delay supplement mechanism, a moment at which displaying of the camera icon is canceled in the status bar. The status bar controller 460 may determine access duration based on a moment at which access of a camera permission starts and a moment at which access of the camera permission ends, and compare the access duration with preset duration to determine whether to prolong display time of the camera icon in the status bar. For the delay supplement mechanism, refer to the description of the foregoing embodiment. Details are not described herein again.

It should be noted that the foregoing steps S18 to S23 may occur after the electronic device 100 collapses the control center interface. If the permission visitor ends accessing the camera permission in the process in which the electronic device 100 displays the control center interface, the electronic device 100 may remain the sensitive behavior prompt displayed in the control center interface unchanged. The sensitive behavior prompt in the control center interface may still include the camera icon of the camera permission. Then, the electronic device 100 may collapse the control center interface. The electronic device 100 may cancel displaying of the camera icon in a status bar of a user interface displayed after the control center interface is collapsed.

It may be understood that, in this embodiment of this application, the sensitive behavior reminder method provided in this application is specifically described by using an example in which the sensitive behavior prompt is displayed in the control center interface. Not limited to the control center interface, the sensitive behavior prompt may be displayed in another user interface, for example, a pull-down notification interface.

It can be learned from the method shown in FIG. 17A to FIG. 17E that, when detecting that the device permission is accessed by an application on the electronic device 100 or another electronic device, the electronic device 100 may display the device permission icon in the status bar and/or the control center interface, so that a user knows and controls sensitive behavior of the application on the device and cross-device sensitive behavior. A sensitive behavior reminder provided by the electronic device 100 includes a reminder that the first-type device permission such as the camera permission or the microphone permission is accessed, and may further include a reminder that the second-type device permission such as the contact permission, the media permission and file permission is accessed. Therefore, the user can conveniently learn of access data of each device permission more intuitively. In addition, the electronic device 100 may further display, by using the delay supplement mechanism, the device permission icon in the status bar, to inform the user that the corresponding device permission is accessed. The delay supplement mechanism can be used to avoid frequent blinking of the device permission icon displayed in the status bar, prevent the electronic device 100 from frequently refreshing the device permission icon displayed in the status bar, improve user's experience of viewing the status bar, and reduce power consumption of the electronic device 100 for refreshing the device permission icon.

It may be understood that each user interface described in embodiments of this application is merely an example interface, and constitutes no limitation on the solutions of this application. In another embodiment, the user interface may use different interface layouts, may include more or fewer controls, and may add or reduce other function options, and provided that the user interface is based on a same inventive idea provided in this application, all fall within the protection scope of this application.

It should be noted that, if no contradiction or conflict occurs, any feature or any part of any feature in any embodiment of this application may be combined, and a combined technical solution also falls within the scope of embodiments of this application.

In conclusion, the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of this application.

## Claims

1. An application sensitive behavior reminder method, wherein the method comprises:
receiving, by a first electronic device (100), a first request from a second electronic device (200-203), wherein the first request is used to request to access first device permission of the first electronic device (100);
in response to the first request, allowing, by the first electronic device (100), the second electronic device (200-203) to access the first device permission, and displaying a first icon (621, 631, 711, 721, 811, 831, 911, 1064, 1071, 1073A, 1081, 1083A, 1111, 1211, 1311A, 1521) in a status bar, wherein the first icon (621, 631, 711, 721, 811, 831, 911, 1064, 1071, 10734, 1081, 1083A, 1111, 1211, 1311A, 1521) indicates that the first device permission is accessed;
receiving, by the first electronic device (100), a first operation;
displaying, by the first electronic device (100), a first interface in response to the first operation, wherein the first interface comprises a first prompt, and the first prompt comprises the first icon (621, 631, 711, 721, 811, 831, 911, 1064, 1071, 1073A, 1081, 1083A, 1111, 1211, 1311A, 1521),
wherein the method further comprises:
receiving, by the first electronic device (100), a fourth operation; and
displaying, by the first electronic device (100), a second control in response to the fourth operation, wherein the second control is used to manage access of the second electronic device (200-203) to the device permission of the first electronic device (100); or
displaying, by the first electronic device (100), (a) a third control in response to the fourth operation, wherein the third control is used to manage access of a first application on the second electronic device (200-203) to the device permission of the first electronic device (100), or (b) multiple third controls in response to the fourth operation, wherein the multiple third controls are used to manage access of different applications on the second electronic device (200-203) to the device permission of the first electronic device (100).

2. The method according to claim 1, wherein the method further comprises:
receiving, by the first electronic device (100), a second operation on the first prompt; and
displaying, by the first electronic device (100), a first permission list in response to the second operation, wherein the first permission list comprises first information, and the first information indicates that the first device permission is accessed by the second electronic device (200-203).

3. The method according to claim 2, wherein the method further comprises:
receiving, by the first electronic device (100), a third operation on the first information; and
displaying, by the first electronic device (100), a first control in response to the third operation, wherein the first control is used to manage access of the second electronic device (200-203) to the first device permission.

4. The method according to any one of claims 1 to 3, wherein after the receiving, by the first electronic device (100), a first operation, the method further comprises:
querying, by the first electronic device (100), an access record of accessing device permission of the first electronic device (100) in a first time period, to obtain a first access record, wherein the first time period is a time period that is before the first operation is received, and the first access record comprises first access data of accessing the first device permission by the second electronic device (200-203); and
the displaying, by the first electronic device (100), a first interface, wherein the first interface comprises a first prompt specifically comprises:
displaying, by the first electronic device (100), the first interface based on the first access record, wherein the first interface comprises the first prompt, and the first icon (621, 631, 711, 721, 811, 831, 911, 1064, 1071, 1073A, 1081, 1083A, 1111, 1211, 1311A, 1521) comprised in the first prompt is determined based on the first access data.

5. The method according to claim 4, wherein the first access record further comprises access data of accessing K pieces of device permission of the first electronic device (100), and K is a positive integer; and
the first prompt in the first interface further comprises K icons (712, 722, 812, 912), and the K icons (712, 722, 812, 912) respectively indicate that the K pieces of device permission are accessed.

6. The method according to claim 5, wherein the first icon (621, 631, 711, 721, 811, 831, 911, 1064, 1071, 1073A, 1081, 1083A, 1111, 1211, 1311A, 1521) and the K icons (712, 722, 812, 912) comprised in the first prompt are displayed in a folded manner based on a first priority sequence;
the first priority sequence indicates a priority sequence of the device permission of the first electronic device (100), a higher priority of device permission in the first priority sequence indicates that an icon that indicates that the device permission is accessed is displayed at a higher level in the first interface, and an icon displayed on an upper layer partially blocks an icon displayed on a lower layer; and
the first prompt further comprises an identifier of a visitor of device permission corresponding to an icon displayed at a highest level in the first prompt.

7. The method according to any one of claims 1 to 6, wherein the method further comprises:
detecting, by the first electronic device (100), that the second electronic device (200-203) ends accessing the first device permission; and
canceling, by the first electronic device (100), displaying of the first icon (621, 631, 711, 721, 811, 831, 911, 1064, 1071, 1073A, 1081, 1083A, 1111, 1211, 1311A, 1521) in the status bar.

8. The method according to claim 7, wherein before the canceling, by the first electronic device (100), displaying of the first icon (621, 631, 711, 721, 811, 831, 911, 1064, 1071, 1073A, 1081, 1083A, 1111, 1211, 1311A, 1521) in the status bar, the method further comprises:
determining, by the first electronic device (100), that first access duration in which the second electronic device (200-203) accesses the first device permission exceeds first duration.

9. The method according to any one of claims 1 to 6, wherein the method further comprises:
detecting, by the first electronic device (100), that the second electronic device (200-203) ends accessing the first device permission
determining, by the first electronic device (100), whether first access duration in which the second electronic device (200-203) accesses the first device permission exceeds first duration;
when determining that the first access duration does not exceed the first duration, determining, by the first electronic device (100), first extended duration based on a difference between the first access duration and the first duration; and
continuing, by the first electronic device (100), to display the first icon (621, 631, 711, 721, 811, 831, 911, 1064, 1071, 1073A, 1081, 1083A, 1111, 1211, 1311A, 1521) in the status bar in a second time period, wherein the second time period is a time period in the first extended duration starting from a moment at which the second electronic device (200-203) ends accessing the first device permission.

10. The method according to claim 9, wherein the method further comprises:
detecting, by the first electronic device (100) in the second time period, re-access of the first device permission;
continuing, by the first electronic device (100), to display the first icon (621, 631, 711, 721, 811, 831, 911, 1064, 1071, 1073A, 1081, 1083A, 1111, 1211, 1311A, 1521) in the status bar in a time period of re-access of the first device permission;
determining, by the first electronic device (100), whether second access duration of re-access of the first device permission exceeds the first duration; and
when determining that the second access duration exceeds the first duration, canceling, by the first electronic device (100), displaying of the first icon (621, 631, 711, 721, 811, 831, 911, 1064, 1071, 1073A, 1081, 1083A, 1111, 1211, 1311A, 1521) in the status bar at a moment at which re-access of the first device permission ends; or
when determining that the second access duration does not exceed the first duration, determining, by the first electronic device (100), second extended duration based on a difference between the second access duration and the first duration; and
continuing, by the first electronic device (100), to display the first icon (621, 631, 711, 721, 811, 831, 911, 1064, 1071, 1073A, 1081, 1083A, 1111, 1211, 1311A, 1521) in the status bar in a third time period, wherein the third time period is a time period in the second extended duration starting from a moment at which re-access of the first device permission ends.

11. The method according to any one of claims 1 to 10, wherein after the receiving, by the first electronic device (100), a first operation, the method further comprises:
querying, by the first electronic device (100) in the first time period, an access record of accessing device permission of another electronic device by the first electronic device (100) in the first time period, to obtain a second access record, wherein the first time period is the time period that is before the first operation is received, and the second access record comprises access data of accessing second device permission of a third electronic device by the first electronic device (100), wherein
the first interface further comprises a second prompt, the second prompt is determined based on the second access record, and the second prompt indicates that the first electronic device (100) accesses the second device permission of the third electronic device.

12. The method according to any one of claims 1 to 11, wherein the device permission of the first electronic device (100) comprises camera permission, microphone permission, location permission, contact permission, and media and file permission.

13. The method according to any one of claims 1 to 12, wherein the first operation is an operation of sliding downward from a top right side of a screen of the first electronic device (100), and the first interface is a control center interface of the first electronic device (100).

14. An electronic device, wherein the electronic device comprises a screen, a memory, and one or more processors, the memory is configured to store a computer program, and the one or more processors are configured to invoke the computer program, so that the electronic device performs the method according to any one of claims 1 to 13.

15. A computer-readable storage medium, comprising instructions, wherein when the instructions are run on an electronic device, the electronic device is enabled to perform the method according to any one of claims 1 to 13.

## Patentansprüche

1. Verfahren zur Erinnerung an anwendungsspezifisches Verhalten, wobei das Verfahren umfasst:
Empfangen, durch eine erste elektronische Vorrichtung (100), einer ersten Anforderung von einer zweiten elektronischen Vorrichtung (200-203), wobei die erste Anforderung verwendet wird, um Zugriff auf eine erste Vorrichtungsberechtigung der ersten elektronischen Vorrichtung (100) anzufordern;
als Reaktion auf die erste Anforderung, Erlauben, durch die erste elektronische Vorrichtung (100), dass die zweite elektronische Vorrichtung (200-203) auf die erste Vorrichtungsberechtigung zugreift, und Anzeigen eines ersten Symbols (621, 631, 711, 721, 811, 831, 911, 1064, 1071, 1073A, 1081, 1083A, 1111, 1211, 1311A, 1521) in einer Statusleiste, wobei das erste Symbol (621, 631, 711, 721, 811, 831, 911, 1064, 1071, 1073A, 1081, 1083A, 1111, 1211, 1311A, 1521) angibt, dass auf die erste Vorrichtungsberechtigung zugegriffen wird;
Empfangen, durch die erste elektronische Vorrichtung (100), einer ersten Operation; Anzeigen, durch die erste elektronische Vorrichtung (100), einer ersten Schnittstelle als Reaktion auf die erste Operation, wobei die erste Schnittstelle eine erste Aufforderung umfasst, und die erste Aufforderung das erste Symbol (621, 631, 711, 721, 811, 831, 911, 1064, 1071, 1073A, 1081, 1083A, 1111, 1211, 1311A, 1521) umfasst,
wobei das Verfahren ferner umfasst:
Empfangen, durch die erste elektronische Vorrichtung (100), einer vierten Operation; und Anzeigen, durch die erste elektronische Vorrichtung (100), eines zweiten Steuerelements als Reaktion auf die vierte Operation, wobei das zweite Steuerelement verwendet wird, um den Zugriff der zweiten elektronischen Vorrichtung (200-203) auf die Vorrichtungsberechtigung der ersten elektronischen Vorrichtung (100) zu verwalten; oder Anzeigen, durch die erste elektronische Vorrichtung (100), (a) eines dritten Steuerelements als Reaktion auf die vierte Operation, wobei das dritte Steuerelement verwendet wird, um den Zugriff einer ersten Anwendung auf der zweiten elektronischen Vorrichtung (200-203) auf die Vorrichtungsberechtigung der ersten elektronischen Vorrichtung (100) zu verwalten, oder (b) mehrerer dritter Steuerelemente als Reaktion auf die vierte Operation, wobei die mehreren dritten Steuerelemente verwendet werden, um den Zugriff verschiedener Anwendungen auf der zweiten elektronischen Vorrichtung (200-203) auf die Vorrichtungsberechtigung der ersten elektronischen Vorrichtung (100) zu verwalten.

2. Verfahren nach Anspruch 1, wobei das Verfahren ferner umfasst:
Empfangen, durch die erste elektronische Vorrichtung (100), einer zweiten Operation auf die erste Aufforderung hin; und
Anzeigen, durch die erste elektronische Vorrichtung (100), einer ersten Berechtigungsliste als Reaktion auf die zweite Operation, wobei die erste Berechtigungsliste erste Informationen umfasst, und die ersten Informationen angeben, dass auf die erste Vorrichtungsberechtigung durch die zweite elektronische Vorrichtung (200-203) zugegriffen wird.

3. Verfahren nach Anspruch 2, wobei das Verfahren ferner umfasst:
Empfangen, durch die erste elektronische Vorrichtung (100), einer dritten Operation bezüglich der ersten Information; und
Anzeigen, durch die erste elektronische Vorrichtung (100), eines ersten Steuerelements als Reaktion auf die dritte Operation, wobei das erste Steuerelement verwendet wird, um den Zugriff der zweiten elektronischen Vorrichtung (200-203) auf die erste Vorrichtungsberechtigung zu verwalten.

4. Verfahren nach einem der Ansprüche 1 bis 3, wobei das Verfahren nach dem Empfangen, durch die erste elektronische Vorrichtung (100), einer ersten Operation, ferner Folgendes umfasst:
Abfragen, durch die erste elektronische Vorrichtung (100), eines Zugriffsdatensatzes des Zugreifens auf eine Vorrichtungsberechtigung der ersten elektronischen Vorrichtung (100) in einer ersten Zeitspanne, um einen ersten Zugriffsdatensatz zu erhalten, wobei die erste Zeitspanne eine Zeitspanne ist, die vor dem Empfangen der ersten Operation liegt, und der erste Zugriffsdatensatz erste Zugriffsdaten des Zugreifens auf die erste Vorrichtungsberechtigung durch die zweite elektronische Vorrichtung (200-203) umfasst; und
das Anzeigen, durch die erste elektronische Vorrichtung (100), einer ersten Schnittstelle, wobei die erste Schnittstelle eine erste Aufforderung umfasst,
insbesondere Folgendes umfasst:
Anzeigen, durch die erste elektronische Vorrichtung (100), der ersten Schnittstelle basierend auf dem ersten Zugriffsdatensatz, wobei die erste Schnittstelle die erste Aufforderung umfasst, und das erste Symbol (621, 631, 711, 721, 811, 831, 911, 1064, 1071, 1073A, 1081, 1083A, 1111, 1211, 1311A, 1521), das in der ersten Aufforderung umfasst ist, basierend auf den ersten Zugriffsdaten bestimmt wird.

5. Verfahren nach Anspruch 4, wobei der erste Zugriffsdatensatz ferner Zugriffsdaten des Zugreifens auf K Geräteberechtigungen der ersten elektronischen Vorrichtung (100) umfasst, und K eine positive ganze Zahl ist; und
die erste Aufforderung in der ersten Schnittstelle ferner K Symbole (712, 722, 812, 912) umfasst, und die K Symbole (712, 722, 812, 912) jeweils angeben, dass auf die K Vorrichtungsberechtigungen zugegriffen wird.

6. Verfahren nach Anspruch 5, wobei das erste Symbol (621, 631, 711, 721, 811, 831, 911, 1064, 1071, 1073A, 1081, 1083A, 1111,1211, 1311A, 1521) und die K Symbole (712, 722, 812, 912), die in der ersten Aufforderung enthalten sind, basierend auf einer ersten Prioritätssequenz in einer gefalteten Weise angezeigt werden;
die erste Prioritätssequenz eine Prioritätssequenz der Vorrichtungsberechtigung der ersten elektronischen Vorrichtung (100) angibt, eine höhere Priorität der Vorrichtungsberechtigung in der ersten Prioritätssequenz angibt, dass ein Symbol, das angibt, dass auf die Vorrichtungsberechtigung zugegriffen wird, auf einer höheren Ebene in der ersten Schnittstelle angezeigt wird, und ein auf einer oberen Schicht angezeigtes Symbol ein auf einer unteren Schicht angezeigtes Symbol teilweise blockiert; und
die erste Aufforderung ferner eine Kennung einer Besucher-Vorrichtungsberechtigung, die einem Symbol entspricht, das auf einer höchsten Ebene in der ersten Aufforderung angezeigt wird, umfasst.

7. Verfahren nach einem der Ansprüche 1 bis 6, wobei das Verfahren ferner Folgendes umfasst:
Erkennen, durch die erste elektronische Vorrichtung (100), dass die zweite elektronische Vorrichtung (200-203) den Zugriff auf die erste Vorrichtungsberechtigung beendet; und Abbrechen, durch die erste elektronische Vorrichtung (100), des Anzeigens des ersten Symbols (621, 631, 711, 721, 811, 831, 911, 1064, 1071, 1073A, 1081, 1083A, 1111, 1211, 1311A, 1521) in der Statusleiste.

8. Verfahren nach Anspruch 7, wobei vor dem Abbrechen, durch die erste elektronische Vorrichtung (100), des Anzeigens des ersten Symbols (621, 631, 711, 721, 811, 831, 911,1064, 1071, 1073A, 1081, 1083A, 1111, 1211, 1311A, 1521) in der Statusleiste, das Verfahren ferner umfasst:
Bestimmen, durch die erste elektronische Vorrichtung (100), dass eine erste Zugriffsdauer, in der die zweite elektronische Vorrichtung (200-203) auf die erste Vorrichtungsberechtigung zugreift, eine erste Dauer überschreitet.

9. Verfahren nach einem der Ansprüche 1 bis 6, wobei das Verfahren ferner Folgendes umfasst:
Erkennen, durch die erste elektronische Vorrichtung (100), dass die zweite elektronische Vorrichtung (200-203) den Zugriff auf die erste Vorrichtungsberechtigung beendet Bestimmen, durch die erste elektronische Vorrichtung (100), ob eine erste Zugriffsdauer, in der die zweite elektronische Vorrichtung (200-203) auf die erste Vorrichtungsberechtigung zugreift, eine erste Dauer überschreitet;
wenn bestimmt wird, dass die erste Zugriffsdauer die erste Dauer nicht überschreitet, Bestimmen, durch die erste elektronische Vorrichtung (100), einer ersten verlängerten Dauer basierend auf einer Differenz zwischen der ersten Zugriffsdauer und der ersten Dauer; und
Fortsetzen, durch die erste elektronische Vorrichtung (100), des Anzeigens des ersten Symbols (621, 631, 711, 721, 811, 831, 911, 1064, 1071, 1073A, 1081, 1083A, 1111, 1211, 1311A, 1521) in der Statusleiste in einer zweiten Zeitspanne, wobei die zweite Zeitspanne eine Zeitspanne in der ersten verlängerten Dauer ist, beginnend ab einem Zeitpunkt, an dem die zweite elektronische Vorrichtung (200-203) das Zugreifen auf die erste Vorrichtungsberechtigung beendet.

10. Verfahren nach Anspruch 9, wobei das Verfahren ferner umfasst:
Erkennen, durch die erste elektronische Vorrichtung (100) in der zweiten Zeitspanne, eines erneuten Zugriffs auf die erste Vorrichtungsberechtigung;
Fortsetzen, durch die erste elektronische Vorrichtung (100), des Anzeigens des ersten Symbols (621, 631, 711, 721, 811, 831, 911, 1064, 1071, 1073A, 1081, 1083A, 1111, 1211, 1311A, 1521) in der Statusleiste in einer Zeitspanne des erneuten Zugriffs auf die erste Vorrichtungsberechtigung;
Bestimmen, durch die erste elektronische Vorrichtung (100), ob die zweite Zugriffsdauer des erneuten Zugriffs der ersten Vorrichtungsberechtigung die erste Dauer überschreitet; und
wenn bestimmt wird, dass die zweite Zugriffsdauer die erste Dauer überschreitet, Abbrechen, durch die erste elektronische Vorrichtung (100), des Anzeigens des ersten Symbols (621, 631, 711, 721, 811, 831, 911, 1064, 1071, 1073A, 1081, 1083A, 1111, 1211, 1311A, 1521) in der Statusleiste zu einem Zeitpunkt, zu dem der erneute Zugriff auf die erste Vorrichtungsberechtigung beendet wird; oder
wenn bestimmt wird, dass die zweite Zugriffsdauer die erste Dauer nicht überschreitet, Bestimmen, durch die erste elektronische Vorrichtung (100), einer zweiten verlängerten Dauer basierend auf einer Differenz zwischen der zweiten Zugriffsdauer und der ersten Dauer; und
Fortsetzen, durch die erste elektronische Vorrichtung (100), des Anzeigens des ersten Symbols (621, 631, 711, 721, 811, 831, 911, 1064, 1071, 1073A, 1081, 1083A, 1111, 1211, 1311A, 1521) in der Statusleiste in einer dritten Zeitspanne, wobei die dritte Zeitspanne eine Zeitspanne in der zweiten verlängerten Dauer ist, beginnend ab einem Zeitpunkt, an dem ein erneuter Zugriff auf die erste Vorrichtungsberechtigung beendet wird.

11. Verfahren nach einem der Ansprüche 1 bis 10, wobei das Verfahren nach dem Empfangen, durch die erste elektronische Vorrichtung (100), einer ersten Operation, ferner Folgendes umfasst:
Abfragen, durch die erste elektronische Vorrichtung (100) in der ersten Zeitspanne, eines Zugriffsdatensatzes des Zugreifens auf eine Vorrichtungsberechtigung einer anderen elektronischen Vorrichtung durch die erste elektronische Vorrichtung (100) in der ersten Zeitspanne, um einen zweiten Zugriffsdatensatz zu erhalten, wobei die erste Zeitspanne die Zeitspanne ist, die vor dem Empfangen der ersten Operation liegt, und der zweite Zugriffsdatensatz Zugriffsdaten des Zugreifens auf eine zweite Vorrichtungsberechtigung einer dritten elektronischen Vorrichtung durch die erste elektronische Vorrichtung (100) umfasst, wobei
die erste Schnittstelle ferner eine zweite Aufforderung umfasst, die zweite Aufforderung basierend auf dem zweiten Zugriffsdatensatz bestimmt wird, und die zweite Aufforderung angibt, dass die erste elektronische Vorrichtung (100) auf die zweite Vorrichtungsberechtigung der dritten elektronischen Vorrichtung zugreift.

12. Verfahren nach einem der Ansprüche 1 bis 11, wobei die Vorrichtungsberechtigung der ersten elektronischen Vorrichtung (100) Kameraberechtigung, Mikrofonberechtigung, Standortberechtigung, Kontaktberechtigung und Medien- und Dateiberechtigung umfasst.

13. Verfahren nach einem der Ansprüche 1 bis 12, wobei die erste Operation eine Operation des Abwärtsgleitens von einer oberen rechten Seite eines Bildschirms der ersten elektronischen Vorrichtung (100) ist und die erste Schnittstelle eine Kontrollzentrumschnittstelle der ersten elektronischen Vorrichtung (100) ist.

14. Elektronische Vorrichtung, wobei die elektronische Vorrichtung einen Bildschirm, einen Speicher und einen oder mehrere Prozessoren umfasst, der Speicher konfiguriert ist, um ein Computerprogramm zu speichern, und der eine oder die mehreren Prozessoren konfiguriert sind, um das Computerprogramm aufzurufen, sodass die elektronische Vorrichtung das Verfahren nach einem der Ansprüche 1 bis 13 durchführt.

15. Computerlesbares Speicherungsmedium, das Anweisungen umfasst, wobei, wenn die Anweisungen auf einer elektronischen Vorrichtung laufen gelassen werden, die elektronische Vorrichtung befähigt wird, das Verfahren nach einem der Ansprüche 1 bis 13 durchzuführen.

## Revendications

1. Procédé de rappel de comportement sensible d'application, dans lequel le procédé comprend :
la réception, par un premier dispositif électronique (100), d'une première demande en provenance d'un deuxième dispositif électronique (200-203), dans lequel la première demande est utilisée pour demander l'accès à une première autorisation de dispositif du premier dispositif électronique (100) ;
en réponse à la première demande, le fait d'autoriser, par le premier dispositif électronique (100), le deuxième dispositif électronique (200-203) à accéder à la première autorisation de dispositif, et l'affichage d'une première icône (621, 631, 711, 721, 811, 831, 911, 1064, 1071, 1073A, 1081, 1083A, 1111, 1211, 1311A, 1521) dans une barre d'état, dans lequel la première icône (621, 631, 711, 721, 811, 831, 911, 1064, 1071, 1073A, 1081, 1083A, 1111, 1211, 1311A, 1521) indique que la première autorisation de dispositif fait l'objet d'un accès ;
la réception, par le premier dispositif électronique (100), d'une première opération ; l'affichage, par le premier dispositif électronique (100), d'une première interface en réponse à la première opération, dans lequel la première interface comprend une première invite, et la première invite comprend la première icône (621, 631, 711, 721, 811, 831, 911, 1064, 1071, 1073A, 1081, 1083A, 1111, 1211, 1311A, 1521),
dans lequel le procédé comprend en outre :
la réception, par le premier dispositif électronique (100), d'une quatrième opération ; et l'affichage, par le premier dispositif électronique (100), d'une deuxième commande en réponse à la quatrième opération, dans lequel la deuxième commande est utilisée pour gérer l'accès du deuxième dispositif électronique (200-203) à l'autorisation de dispositif du premier dispositif électronique (100) ; ou
l'affichage, par le premier dispositif électronique (100), (a) d'une troisième commande en réponse à la quatrième opération, dans lequel la troisième commande est utilisée pour gérer l'accès d'une première application sur le deuxième dispositif électronique (200-203) à l'autorisation de dispositif du premier dispositif électronique (100), ou (b) de multiples troisièmes commandes en réponse à la quatrième opération, dans lequel les multiples troisièmes commandes sont utilisées pour gérer l'accès de différentes applications sur le deuxième dispositif électronique (200-203) à l'autorisation de dispositif du premier dispositif électronique (100).

2. Procédé selon la revendication 1, dans lequel le procédé comprend en outre : la réception, par le premier dispositif électronique (100), d'une deuxième opération sur la première invite ; et
l'affichage, par le premier dispositif électronique (100), d'une première liste d'autorisations en réponse à la deuxième opération, dans lequel la première liste d'autorisations comprend de premières informations, et les premières informations indiquent que la première autorisation de dispositif fait l'objet d'un accès par le deuxième dispositif électronique (200-203).

3. Procédé selon la revendication 2, dans lequel le procédé comprend en outre :
la réception, par le premier dispositif électronique (100), d'une troisième opération sur les premières informations ; et
l'affichage, par le premier dispositif électronique (100), d'une première commande en réponse à la troisième opération, dans lequel la première commande est utilisée pour gérer l'accès du deuxième dispositif électronique (200-203) à la première autorisation de dispositif.

4. Procédé selon l'une quelconque des revendications 1 à 3, dans lequel, après la réception, par le premier dispositif électronique (100), d'une première opération, le procédé comprend en outre :
la demande, par le premier dispositif électronique (100), d'un enregistrement d'accès concernant l'accès à une autorisation de dispositif du premier dispositif électronique (100) pendant un premier laps de temps, pour obtenir un premier enregistrement d'accès, dans lequel le premier laps de temps est un laps de temps qui précède la réception de la première opération, et le premier enregistrement d'accès comprend des premières données d'accès concernant l'accès à la première autorisation de dispositif par le deuxième dispositif électronique (200-203) ; et
l'affichage, par le premier dispositif électronique (100), d'une première interface, dans lequel la première interface comprend une première invite comprend spécifiquement : l'affichage, par le premier dispositif électronique (100), de la première interface sur la base du premier enregistrement d'accès, dans lequel la première interface comprend la première invite, et la première icône (621, 631, 711, 721, 811, 831, 911, 1064, 1071, 1073A, 1081, 1083A, 1111, 1211, 1311A, 1521) comprise dans la première invite est déterminée sur la base des premières données d'accès.

5. Procédé selon la revendication 4, dans lequel le premier enregistrement d'accès comprend en outre des données d'accès concernant l'accès à K éléments d'autorisation de dispositif du premier dispositif électronique (100), et K est un entier positif ; et
la première invite dans la première interface comprend en outre K icônes (712, 722, 812, 912), et les K icônes (712, 722, 812, 912) indiquent respectivement que les K éléments d'autorisation de dispositif font l'objet d'un accès.

6. Procédé selon la revendication 5, dans lequel la première icône (621, 631, 711, 721, 811, 831, 911, 1064, 1071, 1073A, 1081, 1083A, 1111, 1211, 1311A, 1521) et les K icônes (712, 722, 812, 912) comprises dans la première invite sont affichées de manière repliée sur la base d'une première séquence de priorité ;
la première séquence de priorité indique une séquence de priorité de l'autorisation de dispositif du premier dispositif électronique (100), une priorité plus élevée d'autorisation de dispositif dans la première séquence de priorité indique qu'une icône qui indique que l'autorisation de dispositif fait l'objet d'un accès est affichée à un niveau plus élevé dans la première interface, et une icône affichée sur une couche supérieure bloque partiellement une icône affichée sur une couche inférieure ; et la première invite comprend en outre un identifiant d'un visiteur d'autorisation de dispositif correspondant à une icône affichée à un niveau le plus élevé dans la première invite.

7. Procédé selon l'une quelconque des revendications 1 à 6, dans lequel le procédé comprend en outre :
le fait de détecter, par le premier dispositif électronique (100), que le deuxième dispositif électronique (200-203) met fin à l'accès à la première autorisation de dispositif ; et
l'annulation, par le premier dispositif électronique (100), de l'affichage de la première icône (621, 631, 711, 721, 811, 831, 911, 1064, 1071, 1073A, 1081, 1083A, 1111, 1211, 1311A, 1521) dans la barre d'état.

8. Procédé selon la revendication 7, dans lequel, avant l'annulation, par le premier dispositif électronique (100), de l'affichage de la première icône (621, 631, 711, 721, 811, 831, 911, 1064, 1071, 1073A, 1081, 1083A, 1111, 1211, 1311A, 1521) dans la barre d'état, le procédé comprend en outre :
le fait de déterminer, par le premier dispositif électronique (100), qu'une première durée d'accès pendant laquelle le deuxième dispositif électronique (200-203) accède à la première autorisation de dispositif dépasse une première durée.

9. Procédé selon l'une quelconque des revendications 1 à 6, dans lequel le procédé comprend en outre :
le fait de détecter, par le premier dispositif électronique (100), que le deuxième dispositif électronique (200-203) met fin à l'accès à la première autorisation de dispositif le fait de déterminer, par le premier dispositif électronique (100), si une première durée d'accès pendant laquelle le deuxième dispositif électronique (200-203) accède à la première autorisation de dispositif dépasse une première durée ;
lorsqu'il est déterminé que la première durée d'accès ne dépasse pas la première durée, la détermination, par le premier dispositif électronique (100), d'une première durée prolongée sur la base d'une différence entre la première durée d'accès et la première durée ; et
la poursuite, par le premier dispositif électronique (100), de l'affichage de la première icône (621, 631, 711, 721, 811, 831, 911, 1064, 1071, 1073A, 1081, 1083A, 1111, 1211, 1311A, 1521) dans la barre d'état pendant un deuxième laps de temps, dans lequel le deuxième laps de temps est un laps de temps dans la première durée prolongée commençant à partir d'un moment où le deuxième dispositif électronique (200-203) met fin à l'accès à la première autorisation de dispositif.

10. Procédé selon la revendication 9, dans lequel le procédé comprend en outre :
la détection, par le premier dispositif électronique (100) pendant le deuxième laps de temps, d'un nouvel accès à la première autorisation de dispositif ;
la poursuite, par le premier dispositif électronique (100), de l'affichage de la première icône (621, 631, 711, 721, 811, 831, 911, 1064, 1071, 1073A, 1081, 1083A, 1111, 1211, 1311A, 1521) dans la barre d'état pendant un laps de temps de nouvel accès à la première autorisation de dispositif ;
le fait de déterminer, par le premier dispositif électronique (100), si une seconde durée d'accès de nouvel accès à la première autorisation de dispositif dépasse la première durée ; et
lorsqu'il est déterminé que la seconde durée d'accès dépasse la première durée, l'annulation, par le premier dispositif électronique (100), de l'affichage de la première icône (621, 631, 711, 721, 811, 831, 911, 1064, 1071, 1073A, 1081, 1083A, 1111, 1211, 1311A, 1521) dans la barre d'état à un moment où le nouvel accès à la première autorisation de dispositif prend fin ; ou
lorsqu'il est déterminé que la seconde durée d'accès ne dépasse pas la première durée, la détermination, par le premier dispositif électronique (100), d'une seconde durée prolongée sur la base d'une différence entre la seconde durée d'accès et la première durée ; et
la poursuite, par le premier dispositif électronique (100), de l'affichage de la première icône (621, 631, 711, 721, 811, 831, 911, 1064, 1071, 1073A, 1081, 1083A, 1111, 1211, 1311A, 1521) dans la barre d'état pendant un troisième laps de temps, dans lequel le troisième laps de temps est un laps de temps dans la seconde durée prolongée commençant à partir d'un moment où le nouvel accès à la première autorisation de dispositif prend fin.

11. Procédé selon l'une quelconque des revendications 1 à 10, dans lequel, après la réception, par le premier dispositif électronique (100), d'une première opération, le procédé comprend en outre :
la demande, par le premier dispositif électronique (100) pendant le premier laps de temps, d'un enregistrement d'accès concernant l'accès à une autorisation de dispositif d'un autre dispositif électronique par le premier dispositif électronique (100) pendant le premier laps de temps, pour obtenir un second enregistrement d'accès, dans lequel le premier laps de temps est le laps de temps qui précède la réception de la première opération, et le second enregistrement d'accès comprend des données d'accès concernant l'accès à une seconde autorisation de dispositif d'un troisième dispositif électronique par le premier dispositif électronique (100), dans lequel la première interface comprend en outre une seconde invite, la seconde invite est déterminée sur la base du second enregistrement d'accès, et la seconde invite indique que le premier dispositif électronique (100) accède à la seconde autorisation de dispositif du troisième dispositif électronique.

12. Procédé selon l'une quelconque des revendications 1 à 11, dans lequel l'autorisation de dispositif du premier dispositif électronique (100) comprend une autorisation d'appareil photo, une autorisation de microphone, une autorisation de localisation, une autorisation de contacts, et une autorisation de médias et de fichiers.

13. Procédé selon l'une quelconque des revendications 1 à 12, dans lequel la première opération est une opération de glissement vers le bas à partir d'un côté supérieur droit d'un écran du premier dispositif électronique (100), et la première interface est une interface de centre de commande du premier dispositif électronique (100).

14. Dispositif électronique, dans lequel le dispositif électronique comprend un écran, une mémoire, et un ou plusieurs processeurs, la mémoire est configurée pour stocker un programme informatique, et le ou les processeurs sont configurés pour appeler le programme informatique, de sorte que le dispositif électronique effectue le procédé selon l'une quelconque des revendications 1 à 13.

15. Support de stockage lisible par ordinateur, comprenant des instructions, dans lequel, lorsque les instructions sont exécutées sur un dispositif électronique, le dispositif électronique est en mesure d'effectuer le procédé selon l'une quelconque des revendications 1 à 13.
